# EUROPÄISCHE PATENTSCHRIFT

(11) **EP 3 279 692 B1**
(45) Veröffentlichungstag und Bekanntmachung des Hinweises auf die Patenterteilung: **11.10.2023**
(21) Anmeldenummer: 16001712.5
(22) Anmeldetag: 01.08.2016
(51) Int. Cl.: G01S 19/01, G01S 19/20, G01S 19/40, G07B 15/06, G01S 19/14, G01S 19/34

(54) **DATENVERARBEITUNGSEINRICHTUNG, SYSTEM UND VERFAHREN ZUR PRÜFUNG DER ERFÜLLUNG DER BESTIMMUNGSGEMÄSSEN FUNKTION EINER POSITIONSBESTIMMUNGSEINRICHTUNG**
DATA PROCESSING DEVICE, SYSTEM AND METHOD FOR VERIFYING PERFORMANCE OF A SPECIFIED FUNCTION OF A POSITION DETERMINATION DEVICE
DISPOSITIF DE TRAITEMENT DE DONNEES, SYSTEME ET PROCEDE DE CONTROLE DE REALISATION DE LA FONCTION CONFORME D'UN DISPOSITIF DE DETERMINATION DE POSITION

(43) Veröffentlichungstag der Anmeldung: 07.02.2018
(73) Patentinhaber: Toll Collect GmbH, 10785 Berlin (DE)
(72) Erfinder: Olitzsch, Christian, 16321 Bernau (DE); Slizewski, Zbigniew, 10437 Berlin (DE); Chojnicki, Krzystof, 13353 Berlin (DE); Mietsch, Andreas, 13127 Berlin (DE)

(56) Entgegenhaltungen:
- EP-A1- 2 924 662
- EP-A2- 2 811 466
- US-A1- 2014 278 838

## Beschreibung

Die vorliegende Erfindung betrifft eine Datenverarbeitungseinrichtung gemäß dem Oberbegriff des Anspruchs 1, ein System gemäß dem Oberbegriff des Anspruchs 12 sowie ein Verfahren nach dem Oberbegriff des Anspruches 13.

Eine von einem Fahrzeug bei der Zurücklegung eines Weges mitgeführte Positionsbestimmungseinrichtung dient zur Bestimmung der momentanen Standortposition des dieses Fahrzeugs, die mit der Standortposition der Positionsbestimmungseinrichtung gleichgesetzt werden kann. Entlang eines zurückgelegten Weges bestimmte Standortpositionen können dazu dienen zu bestimmen, ob der zurückgelegte Weg einen mautpflichtigen Streckenabschnitt aufweist und falls ja, welchen (Mauterkennung) und welche Mautgebühr dafür zu erheben ist (Mautbestimmung).

Zur bestimmungsgemäßen Funktion einer solchen Positionsbestimmungseinrichtung im Regelbetrieb zählen (a) der Empfang von Navigationssignalen von Navigationssatelliten eines Globalen Navigationssatellitensystems (GNSS), (b) Bestimmung wenigstens einer Standortposition der Positionsbestimmungseinrichtung anhand der empfangenen Navigationssignale und (c) die Bereitstellung der wenigstens einen bestimmten Standortposition an einer Schnittstelle zur Weiterverarbeitung durch eine an diese Schnittstelle angeschlossene oder mit dieser Schnittstelle in Kommunikation stehende Datenverarbeitungseinrichtung.

Jede einzelne dieser Teilfunktionen kann gestört sein, wodurch die Positionsbestimmungseinrichtung ihre bestimmungsgemäße Funktion nicht erfüllen kann. So kann (a) der Empfang von Navigationssignalen durch eine gebrochene Zuleitung zur Empfangsantenne oder durch einen Ausfall von Satelliten des GNSS unterbunden sein. Außerdem kann der Empfang von Navigationssignalen durch Störsignale behindert werden (Jamming), was in Folge (b) die Bestimmung einer Standortposition anhand von Navigationssignalen ausschließt, die aus der Überlagerung mit dem Störsignal nicht herausgefiltert werden können. Ferner können den Signalen der Navigationssatelliten stärkere Signale einer Pseudosatelliteneinrichtung überlagert sein (Spoofing), die die Positionsbestimmungseinrichtung anstelle der Signale der Navigationssatelliten verarbeitet mit der Folge, dass (b) die Positionsbestimmungseinrichtung eine Standortposition ermittelt, die nicht ihrem Standort entspricht. Eine Reihe von gespooften Standortpositionen repräsentiert damit nicht den von der Positionsbestimmungseinrichtung tatsächlich zurückgelegte Weg, sondern nur einen scheinbar von der Positionsbestimmungseinrichtung zurückgelegten Weg.

Schließlich kann durch (c) einen Defekt der Positionsbestimmungseinrichtung, insbesondere ihrer Schnittstelle, die Bereitstellung der bestimmten Standortposition ausgeschlossen sein.

Im Falle von Beeinträchtigungen beim Empfang und durch Jamming kann in Fahrzeugen, die zusätzlich zur Positionsbestimmungseinrichtung über eine Fahrzeugbewegungssensorik mit einer Geschwindigkeits- und/ oder Weglängenmesseinrichtung zur Bestimmung von zurückgelegten Wegstrecken sowie einer Gierratenmesseinrichtung (zum Beispiel ein Gyroskop oder einen lateralen Beschleunigungssensor) zur Bestimmung der Fahrtrichtung verfügt, die zuletzt mittels der Positionsbestimmungseinrichtung bestimmte Standortposition über eine gewisse Strecke fortgeschrieben werden, die im Laufe der Zeit und/ oder des zurückgelegten Wegs mangels aufgrund sich addierender Messunsicherheiten jedoch immer ungenauer wird.

Die zuverlässige Bestimmung einer Position des Fahrzeugs ist daher trotz dieses "Dead Reckoning" oftmals schon nach wenigen 100 Metern oder wenigen Kilometern nicht mehr möglich.

Die von der Positionsbestimmungseinrichtung im Regelbetrieb bereitgestellte Standortposition kann die ausschließlich aus den Navigationssignalen bestimmte GNSS-Position sein. Sie kann auch eine Koppelortungsposition, bei der die GNSS-Position durch die Messwerte der Fahrzeugbewegungssensorik im Zuge einer Koppelortung verbessert wurde, sein. In diesem Fall, empfängt die Positionsbestimmungseinrichtung die Messwerte (Geschwindigkeit und/ oder Weglänge sowie Gierrate, laterale Beschleunigung und/ oder Fahrtrichtung) über eine Schnittstelle zur Fahrzeugbewegungssensorik, und stellt die Koppelortungsposition als Standortposition bereit.

Alternativ, beispielsweise ohne die Fahrzeugbewegungssensorik oder eine Schnittstelle zu ihr, stellt die Positionsbestimmungseinrichtung die GNSS-Position als Standortposition bereit.

Eine Datenverarbeitungseinrichtung, beispielsweise ein Prozessor einer Fahrzeugeinrichtung, die die Positionsbestimmungseinrichtung umfasst, kann bei Zugriff auf Messwerte der Fahrzeugbewegungssensorik aus dieser bereitgestellten GNSS-Position ebenfalls eine Koppelortungsposition bestimmen.

Jedoch ist dies - wie bereits erwähnt - nur über eine kurze Strecke mit einer für eine Mauterkennung ausreichenden Genauigkeit möglich.

Ein von einem Nutzer ein- oder ausgeschaltetes Spoofing-Signal kann sich gegenüber echten Navigationssignalen durch einen Distanzsprung bemerkbar machen, der in einer Reihe von durch die Positionsbestimmungseinrichtung bereitgestellten GNSS-Positionen wie eine Lücke wirkt, die einem zeitweisen Ausfall des Empfangs von Navigationssignalen entspricht.

Eine ausbleibende Bereitstellung von durch zu erwartenden GNSS-Positionen kann auf einen Defekt an der Schnittstelle zu oder der Positionsbestimmungseinrichtung selbst zurückzuführen sein. Ein bevorstehender Total-Ausfall der Schnittstelle oder der Positionsbestimmungseinrichtung kann sich durch einen vorübergehenden Mangel an Positionsdatenbereitstellungen durch die Positionsbestimmungseinrichtung bemerkbar machen.

Aus der europäischen Patentanmeldung EP 2 924 662 A1 ist bekannt, eine Positionsdatenlücke zu erkennen und dieser Lücke zugeordnete Positionsdaten mit einer digitalen Landkarte abzugleichen,
Aus der US-amerikanischen Patentanmeldung US 2014 0 278 8 38 A1 ist bekannt, eine Positionsdatenlücke anhand einer Karte mit einem mautpflichtigen Tunnel zu assoziieren.

Dies vorausgeschickt ergibt sich die Aufgabe zu ermitteln, ob ein a) ausbleibender Empfang von Navigationssignalen, b) eine ausbleibende Bestimmung einer GNSS-Position und/ oder c) eine ausbleibende Bereitstellung einer zu erwartenden GNSS-Position durch die Positionsbestimmungseinrichtung deterministischer Natur ist- das heißt auf Signalabschattungseffekte in topographiebedingten Störungsgebieten, beispielsweise Tunneln und Schluchten, (kurz: Störungsgebiet) zurückzuführen und somit als topographiebedingte Störung vorhersehbar ist - oder nichtdeterministischer Natur ist - das heißt auf einen Einfluss zurückzuführen ist, der einem Defekt oder einer mutwilligen Störung des GNSS (z. B. durch Jamming, Spoofing) entspricht und somit als systembedingte Störung nicht vorhersehbar ist. Dabei können aus Gründen der Bedeutsamkeit Ausfälle, die nur über einen kurzen Zeitraum oder über eine kurze Strecke auftreten, unberücksichtigt bleiben.

Diese Aufgabe wird durch eine Datenverarbeitungseinrichtung, ein System und ein Verfahren gemäß den unabhängigen Ansprüchen gelöst. Vorteilhafte Weiterbildungen sind Gegenstand abhängiger Ansprüche. Merkmale, Vorteile verschiedener Ausführungsformen, Ausführungsbeispiele und Anspruchskategorien sowie Bemerkungen dazu gelten jeweils auf andere Ausführungsformen, Ausführungsbeispiele und Anspruchskategorien übertragbar oder austauschbar, soweit dies technisch und widerspruchsfrei im Rahmen der vorliegenden Erfindung möglich ist.

Vereinfacht stellt die Erfindung eine Datenverarbeitungseinrichtung, ein System und ein Verfahren zur Prüfung der Erfüllung der bestimmungsgemäßen Funktion einer Positionsbestimmungseinrichtung bereit, wobei eine Reihe von Standortpositionen, die von der Positionsbestimmungseinrichtung stammen, durch eine Lücke gekennzeichnet ist, bei der zwischen einem ersten Abschnitt eines zurückgelegten Wegs und einem zweiten Abschnitt des zurückgelegten Wegs Standortpositionen fehlen, wobei in Abhängigkeit von einer fehlenden oder bestehenden Korrelation von vorbestimmten Geo-Objekten mit den ersten und zweiten Abschnitt repräsentierenden Korrelationspositionen ein Fehlersignal erzeugt wird.

Gemäß einem ersten Aspekt der Erfindung wird eine Datenverarbeitungseinrichtung bereitgestellt, welche ausgebildet ist, eine Reihe von Standortpositionen, die den Verlauf zumindest von Abschnitten eines zumindest scheinbar von einer Positionsbestimmungseinrichtung zurückgelegten Weges repräsentieren, von dieser Positionsbestimmungseinrichtung zu empfangen oder aus von dieser Positionsbestimmungseinrichtung empfangenen Positionsdaten zu erzeugen (das heißt: aus Positionsdaten zu erzeugen, die sie von dieser Positionsbestimmungseinrichtung empfangen hat), und wenigstens einen Datenspeicher aufweist oder ,zumindest zeitweise kommunikationstechnisch an einen solchen gekoppelt ist, in dem wenigstens ein, durch wenigstens eine vorbestimmte Position gekennzeichnetes, Geo-Objekt gespeichert ist, wobei die Datenverarbeitungseinrichtung ausgebildet ist, in der Reihe von Standortpositionen eine Lücke festzustellen, die durch das gänzliche Fehlen wenigstens einer Standortposition oder durch das Fehlen wenigstens einer Standortposition von einer vorgegebener Mindestgüte gekennzeichnet ist, und in Abhängigkeit einer fehlenden oder bestehenden räumlichen Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem der Geo-Objekte ein Fehlersignal zu erzeugen.

Dabei versteht es sich von selbst, dass die Datenverarbeitungseinrichtung ausgebildet ist, das Fehlersignal nur dann zu erzeugen, wenn sie das Vorliegen einer Lücke festgestellt hat. Diese Feststellung bildet nämlich die Voraussetzung dafür, dass erste und zweite Korrelationspositionen bezüglich der Lücke bestimmt werden können.

Standort und Standortposition sind dabei in dem Sinne zu verstehen, dass sie zumindest zu einem Zeitpunkt dem Ort der Anwesenheit und der Position des Ortes der Anwesenheit des Fahrzeugs entsprechen, ohne dass das Fahrzeug dabei stehen muss, wobei das Fahrzeug insbesondere zu dem Zeitpunkt, an dem es am Standort anwesend ist, in Bewegung sein kann.

Der Empfang der Reihe von Standortpositionen kann sowohl bedeuten, dass die Reihe von Standortpositionen in Form einer Fahrspur oder Trajektorie von mehreren Standortpositionen empfangen wird, als auch, dass mehrere Standortpositionen zeitlich einander nachfolgend einzeln empfangen werden, wobei sich die Reihe von Standortpositionen durch den Empfang der mehreren einzelnen Standortpositionen ergibt.

Insbesondere weisen die erste Korrelationsposition und die zweite Korrelationspositiondie vorgegebene Mindestgüte auf, das heißt ihre Güte ist nicht schlechter als eine vorgegebene Mindestgüte, weil die Feststellung des Vorliegens einer Lücke darauf beruht, dass insbesondere der ersten Korrelationsposition folgende Standortpositionen und der zweiten Korrelationsposition vorhergehende Standortpositionen nicht die vorgegebene Mindestgüte aufweisen. Vorzugsweise sind in dem Datenspeicher mehrere, durch wenigstens eine vorbestimmte Position gekennzeichnete, Geo-Objekte gespeichert. Dies erhöht die Auswahl an möglichen korrelierenden Geo-Objekten. Wo immer im Folgenden von mehreren gespeicherten Geo-Objekten die Rede ist, gelten die Aussagen auch für einen Datenspeicher mit nur einem gespeicherten Geo-Objekt, es sei denn es ergibt sich aus dem Zusammenhang die Notwendigkeit des Vorliegens mehrerer im Datenspeicher gespeicherter Geo-Objekte.

Erfindungswesentlich ist es, die Erzeugung eines Fehlersignals von der fehlendenden oder der bestehenden räumlichen Korrelation der ersten und zweiten Korrelationsposition mit wenigstens einem der gespeicherten Geo-Objekte abhängig zu machen. Im Rahmen dieser Maßgabe können, je nachdem, ob die räumliche Korrelation besteht oder nicht, weitere Kriterien formuliert werden, die zusätzlich erfüllt sein müssen, damit ein Fehlersignal erzeugt wird. Dabei kann sowohl entweder die bestehende als auch die fehlende Korrelation der ersten und zweiten Korrelationsposition mit wenigstens einem der gespeicherten Geo-Objekte eine eigenständige notwendige Bedingung für die Erzeugung des Fehlersignals sein, zu der eine oder mehrere weitere notwendige Bedingungen hinzutreten können, die zusätzlich zu der gegebenen oder mangelnden Korrelation erfüllt sein müssen, damit es zur Erzeugung des Fehlersignals kommt.

Vorzugsweise wird die Positionsbestimmungseinrichtung von einem Fahrzeug mitgeführt (insbesondere ist die Positionsbestimmungseinrichtung von einem Fahrzeug umfasst und/ oder an einem Fahrzeug befestigt), so dass die Reihe von Standortpositionen auch den Verlauf zumindest von Abschnitten eines zumindest scheinbar von diesem Fahrzeug zurückgelegten Weges repräsentiert. Die Datenverarbeitungseinrichtung kann die Positionsbestimmungseinrichtung umfassen oder zumindest zeitweise kommunikationstechnisch, beispielsweise über Funk, an diese solche gekoppelt sein.

Die Datenverarbeitungseinrichtung kann ausgebildet sein, die Reihe von Standortpositionen schrittweise in dem Maße zu erzeugen, wie sie Standortpositionen oder Positionsdaten von der Positionsbestimmungseinrichtung empfängt.

Erfindungsgemäß ist die erfindungsgemäße Datenverarbeitungseinrichtung ausgebildet, das Fehlersignal auch in Abhängigkeit von einer Abweichung des Abstandes zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition von wenigstens einem Referenzabstand zu erzeugen.

Damit wird eine Datenverarbeitungseinrichtung bereitgestellt, welche ausgebildet ist, eine Reihe von Standortpositionen, die den Verlauf zumindest von Abschnitten eines zumindest scheinbar von einer Positionsbestimmungseinrichtung zurückgelegten Weges repräsentieren, von dieser Positionsbestimmungseinrichtung zu empfangen oder aus von dieser Positionsbestimmungseinrichtung empfangenen Positionsdaten zu erzeugen, und wenigstens einen Datenspeicher aufweist oder zumindest zeitweise kommunikationstechnisch an einen solchen gekoppelt ist, in dem mehrere, durch jeweils wenigstens eine vorbestimmte Position gekennzeichnete, Geo-Objekte gespeichert sind, wobei die Datenverarbeitungseinrichtung ausgebildet ist, in der Reihe von Standortpositionen eine Lücke festzustellen, die durch das gänzliche Fehlen wenigstens einer Standortposition oder durch das Fehlen wenigstens einer Standortposition von einer vorgegebener Mindestgüte gekennzeichnet ist, und in Abhängigkeit von (i) einer räumlichen Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem der Geo-Objekte und (ii) einer Abweichung des Abstandes zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition von wenigstens einem Referenzabstand ein Fehlersignal zu erzeugen.

Dabei wurde sowohl in dem ersten Kriterium zur Erzeugung des Fehlersignals unter Ziffer (i) als in dem zweiten Kriterium zur Erzeugung des Fehlersignals unter Ziffer (ii) jeweils der unbestimmte Artikel zur Definition einer Korrelationsposition, die auf räumliche Korrelation mit einem der Geo-Objekte zu prüfen ist, und zur Definition einer Abstandsposition bezüglich der der Abstand zu ermitteln ist, verwendet, um zu verdeutlichen, das bei jedem Kriterium unter den Ziffern (i) und (ii) die dazu verwendeten Positionen verschiedenen oder identisch sein können, d. h die erste Korrelationsposition kann sich von der ersten Abstandsposition unterschieden oder mit ihr übereinstimmen und die zweite Korrelationsposition kann sich von der zweiten Abstandsposition unterscheiden oder mit ihr übereinstimmen. Dabei kann es von verschiedenen Maßgaben abhängen, ob die Datenverarbeitungseinrichtung jeweils im konkreten Fall ausgebildet ist, im Kontext beider Kriterien identische oder verschiedene erste Positionen und identische oder verschiedene zweite Positionen zu verwenden. Erfindungswesentlich ist in jedem Fall, das eine jede erste Position von einer jeden zweiten Position verschieden ist, weil diese erfindungsgemäß verschiedene Abschnitte des zurückgelegten Weges kennzeichnen.

Je nach Güte der Standortpositionen, die einer Lücke vorausgehen, nachfolgen oder zu dieser beitragen, je nach zeitlicher oder räumlicher Länge einer Lücke und/ oder je nach Gebietszugehörigkeit einer Lücke kann es vorteilhaft oder nachteilig sein, die ersten Positionen der beiden Kriterien identisch oder verschieden zu wählen und/ oder die zweiten Positionen der beiden Kriterien identisch oder verschieden zu wählen.

Im einfachsten Fall entspricht die erste Position jedem der beiden Kriterien (erste Korrelationsposition und erste Abstandsposition) derselben ersten Standortposition aus der Menge der Standortpositionen, die geeignet sind, einen ersten Abschnitt des zurückgelegten Weges vor der Lücke zu kennzeichnen. Analog entspricht im einfachsten Fall die zweite Position jedem der beiden Kriterien (zweite Korrelationsposition und zweite Abstandsposition) derselben zweiten Standortposition aus der Menge der Standortpositionen, die geeignet sind, einen zweiten Abschnitt des zurückgelegten Weges nach der Lücke zu kennzeichnen.

Als Beispiel eines Falles, in dem eine erste Position des ersten Kriteriums (erste Korrelationsposition) von einer ersten Position der zweiten notwendigen Bedingung (erste Abstandsposition) verschieden ist, wird vorgeschlagen, dass die erste Position des ersten Kriteriums einer ersten Standortposition aus der Menge der Standortpositionen entspricht, die im Verlauf des zurückgelegten Wegs der Lücke vorhergehen, und die erste Position des zweiten Kriteriums einer ersten Alternativposition entspricht, die aus einer oder mehrerer Standortpositionen der Menge der Standortpositionen abgeleitet ist, die im Verlauf des zurückgelegten Wegs der Lücke vorhergehen.

Standortpositionen, die im Verlauf des zurückgelegten Wegs der Lücke vorhergehen, kennzeichnen insbesondere einen ersten Abschnitt des vor der Lücke zurückgelegten Wegs.

Analog dazu wird als Beispiel eines Falles, in dem eine zweite Position des ersten Kriteriums (zweite Korrelationsposition) von einer zweiten Position der zweiten notwendigen Bedingung (zweite Abstandsposition) verschieden ist, vorgeschlagen, dass die zweite Position des ersten Kriteriums einer zweiten Standortposition aus der Menge der Standortpositionen entspricht, die im Verlauf des zurückgelegten Wegs der Lücke nachfolgen, und die zweite Position des zweiten Kriteriums einer zweiten Alternativposition entspricht, die aus einer oder mehrerer Standortpositionen der Menge der Standortpositionen abgeleitet ist, die im Verlauf des zurückgelegten Wegs der Lücke nachfolgen.

Standortpositionen, die im Verlauf des zurückgelegten Wegs der Lücke nachfolgen, kennzeichnen insbesondere einen zweiten Abschnitt des nach der Lücke zurückgelegten Wegs.

Beide Beispiele können aber auch jeweils umgekehrt lauten, d. h die Korrelationspositionen sind die Alternativpositionen, und die Abstandsposition sind die Standortpositionen.

Damit kann eine Weiterbildung der erfindungsgemäßen Datenverarbeitungseinrichtung ausgebildet sein, eine Reihe von Standortpositionen, die den Verlauf zumindest von Abschnitten eines zumindest scheinbar von einer Positionsbestimmungseinrichtung zurückgelegten Weges repräsentieren, von dieser Positionsbestimmungseinrichtung zu empfangen oder aus von dieser Positionsbestimmungseinrichtung empfangenen Positionsdaten zu erzeugen, und wenigstens einen Datenspeicher aufweisen oder zumindest zeitweise kommunikationstechnisch an einen solchen gekoppelt sein, in dem mehrere, durch jeweils wenigstens eine vorbestimmte Position gekennzeichnete, Geo-Objekte gespeichert sind, wobei die Datenverarbeitungseinrichtung ausgebildet ist, in der Reihe von Standortpositionen eine Lücke festzustellen, die durch das gänzliche Fehlen wenigstens einer Standortposition oder durch das Fehlen wenigstens einer Standortposition von einer vorgegebener Mindestgüte gekennzeichnet ist, und in Abhängigkeit von (i) einer räumlichen Korrelation wenigstens einer, einen ersten Abschnitt des zurückgelegten Weges vor der Lücke kennzeichnenden, ersten Standortposition der Standortpositionen oder wenigstens einer zumindest aus der ersten Standortposition abgeleiteten ersten Alternativposition und wenigstens einer, einen zweiten Abschnitt des zurückgelegten Weges nach der Lücke kennzeichnenden, zweiten Standortposition der Standortpositionen oder wenigstens einer zumindest aus der zweiten Standortposition abgeleiteten zweiten Alternativposition räumlich mit wenigstens einem der Geo-Objekte und (ii) einer Abweichung des Abstandes zwischen der ersten Standort- oder Alternativposition und der zweiten Standort- oder Alternativposition von wenigstens einem Referenzabstand ein Fehlersignal zu erzeugen.

Vorzugsweise wählte die Datenverarbeitungseinrichtung als eine erste Standortposition beispielsweise diejenige Standortposition aus, die als letzte Standortposition von vorgegebener Mindestgüte der Lücke unmittelbar vorangeht. Vorzugsweise wählte die Datenverarbeitungseinrichtung als eine zweite Standortposition beispielsweise diejenige Standortposition aus, die als nächste Standortposition von vorgegebener Mindestgüte der Lücke unmittelbar nachfolgt. Vorzugsweise bestimmt die Datenverarbeitungseinrichtung eine erste Alternativposition in Abhängigkeit von der ausgewählten ersten Standortposition, beispielsweise durch Mittelwertbildung der ersten ausgewählten Standortposition mit einer ihr in der Reihe der Standortpositionen unmittelbar vorhergehenden Standortposition, insbesondere von vorgegebener Mindestgüte.

Vorzugsweise bestimmt die Datenverarbeitungseinrichtung eine zweite Alternativposition in Abhängigkeit von der ausgewählten zweiten Standortposition, beispielsweise durch Mittelwertbildung der zweiten ausgewählten Standortposition mit einer ihr in der Reihe der Standortpositionen unmittelbar nachfolgenden Standortposition, insbesondere von vorgegebener Mindestgüte.

Mit der Erfindung lassen sich topographiebedingte GNSS-Störungen von systembedingten GNSS-Störungen zuverlässigunterscheiden. Nur letztere bedürfen der Erzeugung eines Fehlersignals, das den Nutzer oder den Betreiber zum Handeln (beispielsweise zur Durchführung einer Reparatur oder zum Erwerb einer neuen Positionsbestimmungseinrichtung) auffordert. Im Falle der Verwendung einer Positionsbestimmungseinrichtung in einem Fahrzeuggerät zur Erhebung einer Maut und/ oder zur Übermittlung der durch mittels der Positionsbestimmungseinrichtung bestimmten Standortpositionen kann das Fehlersignal eine Nachricht umfassen oder deren Versendung auslösen, die den Nutzer darauf hinweist, dass eine Mauterhebung mit dem Fahrzeuggerät nicht mehr möglich ist und er stattdessen für seine bevorstehende mautpflichtige Route ein Vorausbezahlung im Internet oder an einem Mautterminal zu entrichten hat.

Die erfindungsgemäßen Geo-Objekte repräsentieren dabei Empfangsgebiete von Straßenverläufen am Eingang und am Ausgang von einem Störungsgebiet, beispielsweise einem Tunnel. Als Störungsgebiete werden Gebiete bezeichnet, in denen der GNSS-Empfang topographiebedingt gestört ist und nicht systembedingt. Systembedingte GNSS-Störungen entsprechen individuell und unvorhersehbar empfangsgestörten Fahrten und simulieren Empfangsstörungsgebiete nur. Insofern lassen sich ihnen keine vorhersehbaren Störungsgebiete zuordnen, die durch entsprechende Geo-Objekte beschrieben (fachsprachlich: "modelliert") werden könnten. Gebiete, durch die Fahrten unter systembedingten Störungen erfolgen, können als Fehlergebiete bezeichnet werden. Fahrten unter systembedingten GNSS-Störungen sollen laut Aufgabe der Erfindung ein Fehlersignal erzeugen, zumindest wenn sie lang genug sind. Fahrten unter topographiebedingten Störungen sollen kein Fehlersignal erzeugen.

Die Erfindung verknüpft die Frage, ob in Abhängigkeit von der Korrelation einer Fahrt, auf der es zu einer Lücke in der Reihe von Standortpositionen kommt, mit Geo-Objekten ein Fehlersignal auszulösen ist, mit der Frage, inwieweit die
- Länge der Lücke, die durch den Abstand der zwei Abstandspositionen ausgedrückt werden kann, von einer Referenzlänge abweicht, die maßgeblich für die Ausdehnung der durch die Geo-Objekte modellierten Störungsgebiete ist.

Damit bewirkt die Erfindung vorteilhaft die zuverlässige Unterscheidung zwischen systembedingten GNSS-Störung, die der Erzeugung eines Fehlersignals bedarf, und einer topographiebedingten GNSS, die keiner Erzeugung eines Fehlersignals bedarf.

Dabei kann man zwischen Solitär-Geo-Objekten und Partner-Geo-Objekten unterscheiden:
Solitär-Geo-Objekte erstrecken sich derart über ein Störungsgebiet (ohne es notwendigerweise vollständig zu umfassen), dass sie sowohl einen Zufahrtsbereich (in dem gerade noch Standortpositionen, ggf. von vorgegebener Mindestgüte, bestimmt werden können) vor dem Störungsgebiet als auch einen Abfahrtsbereich (in dem gerade wieder Standortpositionen bestimmt werden können) nach dem Störungsgebiet umfassen. Für derartige Solitär-Geo-Objekte liegt dann die räumliche Korrelation der ersten Korrelationsposition mit demselben einen Solitär-Geo-Objekt vor, mit dem auch die räumliche Korrelation der zweiten Korrelationsposition vorliegt, wenn die Korrelationspositionen Abschnitte zurückgelegter Wege repräsentieren, die Zufahrts- und Abfahrtsbereiche desselben Störungsgebietes sind.

Typischerweise beträgt der Durchmesser eines kreisförmigen Solitär-Geo-Objektes.für einen Tunnel als Störungsgebiete Tunnellänge plus 200 Metern, wobei das Solitär-Geo-Objekt so angeordnet ist, dass es zu jeder Seite 100 Meter über den Tunnel hinaus in das Empfangsgebiet hineinragt.

Partner-Geo-Objekte sind hinsichtlich ihrer Ausdehnung nur entweder auf den Zufahrtsbereich oder auf den Abfahrtsbereich eines Störungsgebietes beschränkt. Für derartige Partner-Geo-Objekte liegt dann die räumliche Korrelation der ersten Korrelationsposition mit einem ersten Partner-Geo-Objekt und eine räumliche Korrelation der zweiten Korrelationsposition mit einem, von dem erste Partner-Geo-Objekt verschiedenen, zweiten Partner-Geo-Objekt vor, wenn die Korrelationspositionen Abschnitte zurückgelegter Wege repräsentieren, die Zufahrts- und Abfahrtsbereiche desselben Störungsgebietes sind. Typischerweise beträgt der Durchmesser kreisförmiger Partner-Geo-Objekte 100 Meter, wobei Partner-Geo-Objekte typischerweise vollständig so im Empfangsgebiet liegen, dass ihr jeweiliger Rand mit der Tunneleinfahrt (erstes Partner-Geo-Objekt) und der Tunnelausfahrt (zweites Partner-Geo-Objekt) übereinstimmt.

Die Reihe von Standortpositionen kann alternativ sowohl den Verlauf von Abschnitten eines scheinbar zurückgelegten Weges, den Verlauf von Abschnitten eines abschnittsweise tatsächlich und abschnittsweise scheinbar zurückgelegten Weges als auch den Verlauf von Abschnitten eines tatsächlich zurückgelegten Weges repräsentieren.

Standortpositionen eines in mehreren Abschnitten tatsächlich zurückgelegten Weges sind das Ergebnis der Verarbeitung von "echten" Navigationssatellitensignalen, die von den Navigationssatelliten ausgestrahlt und ohne einen Umweg (z. B den eines technischen Systems) von der Positionsbestimmungseinrichtung empfangen werden, zu Standortpositionen. Standortpositionen eines in mehreren Abschnitten scheinbar zurückgelegten Weges sind das Ergebnis eines Spoofings, mit dem gegenüber der Positionsbestimmungseinrichtung "falsche" Navigationssatellitensignale ausgestrahlt werden, die anstelle der echten Navigationssatellitensignale von der Positionsbestimmungseinrichtung zu Standortpositionen verarbeitet werden, die nicht Positionen der Positionsbestimmungseinrichtung entsprechen. Beispielsweise können derartige falsche Navigationssatellitensignale durch das Aufzeichnen und Wiederabspielen von echten Navigationssatellitensignalen im Rahmen einer sogenannten "Record-and-Replay-Atfacke" erzeugt werden. Standortpositionen eines in einem ersten Abschnitt tatsächlich zurückgelegten Weges und eines in einem zweiten Abschnitt scheinbar zurückgelegten Weges sind für den ersten Abschnitt das Ergebnis der Verarbeitung von echten Navigationssignalen, die auf dem ersten Abschnitt empfangen wurden, und für den zweiten Abschnitt das Ergebnis der Verarbeitung von falschen Navigationssignalen, die auf einem anderen Abschnitt als dem zweiten Abschnitt empfangen wurden. Ein solches Szenario entsteht beispielsweise, wenn ein Nutzer in betrügerischer Absicht nach dem Durchfahren des ersten Abschnittes einen Spoofer aktiviert, mit dem anschließend das Durchfahren eines nicht unmittelbar an den ersten Abschnitt anschließenden zweiten Abschnitts simuliert wird. Dabei liegt in der Regel eine Lücke in der Reihe von Standortpositionen vor - zum einen, weil die Positionsbestimmungseinrichtung beim Umschalten auf einen gänzlichen anderen Satz von Navigationssatelliten, mehrere Positionsausgabezyklen benötigt, um Standortpositionen von vorgegebener Mindestgüte zu erzeugen, und zum anderen, weil die letzte Standortposition des ersten Abschnittes gegenüber der ersten Standortposition des zweiten Abschnittes einen Abstand aufweist, der unabhängig von der geringen Zeitdifferenz eine das Fehlersignal bedingende Abweichung von dem Referenzabstand aufweist.

Insbesondere ist die Datenverarbeitungseinrichtung ausgebildet, zu ermitteln, ob die erste Korrelationsposition und die zweite Korrelationsposition räumlich mit wenigstens einem gespeicherten Geo-Objekt korrelieren, und ein Ergebnis der Ermittlung über das Vorliegen oder Fehlen dieser Korrelation zu erzeugen.

Damit wird eine Eingangsgröße für die Anwendung des ersten Kriteriums bereitgestellt.

Im Falle eines positiven Ermittlungsergebnisses wird mit dem Vorliegen der räumlichen Korrelation sowohl der ersten als auch der zweiten Korrelationsposition eine erste Eingangsgröße für die Anwendung des ersten Kriteriums bereitgestellt. Im Falle eines negativen Ermittlungsergebnisses wird mit dem Fehlen der räumlichen Korrelation sowohl der ersten als auch der zweiten Korrelationsposition eine zweite Eingangsgröße für die Anwendung des ersten Kriteriums bereitgestellt, die das Gegenteil der ersten Eingangsgröße ist.

Über die Eingangsgröße der vorliegenden oder mangelnden räumlichen Korrelation können jeweils erste notwendige Bedingungen aus dem ersten Kriterium formuliert werden, die (zusammen mit einer zweiten notwendigen Bedingung des zweiten Kriteriums) erfüllt sein müssen, damit es zu einer Erzeugung des Fehlersignals kommt.

Insbesondere repräsentiert die wenigstens eine vorbestimmte Position die geographische Position des Geo-Objektes.

Insbesondere ist die Datenverarbeitungseinrichtung ausgebildet, zur Ermittlung einer räumlichen Korrelation der ersten und/ oder zweiten Korrelationsposition mit wenigstens einem gespeicherten Geo-Objekt einen Vergleich der ersten Korrelationsposition und/ oder der zweiten Korrelationsposition mit der wenigstens einen jeweiligen vorbestimmten Position des wenigstens einen gespeicherten Geo-Objekts durchzuführen.

Dabei ist die Datenverarbeitungseinrichtung vorzugsweise ausgebildet, eine räumliche Korrelation mit wenigstens einem gespeicherten Geo-Objekt nur dann festzustellen, wenn die erste und/ oder zweite Korrelationsposition bezüglich der wenigstens einen jeweiligen vorbestimmten Position wenigstens eine Bedingung erfüllt/ erfüllen.

Beispielsweise ist die Datenverarbeitungseinrichtung ausgebildet, die räumliche Korrelation der ersten Korrelationsposition und/ oder der zweiten Korrelationsposition mit einem Geo-Objekt daran festzustellen, dass die ersten Korrelationsposition und/ oder die zweiten Korrelationsposition einen vorbestimmten Abstand zu der vorbestimmten Position unterschreitet. Mit dieser Maßgabe wird eine Datenverarbeitungsvorschrift für die Datenverarbeitungseinrichtung geschaffen, mit der die Datenverarbeitungseinrichtung effizient die räumliche Korrelation der ersten und/ oder zweiten Korrelationsposition mit wenigstens einem der Geo-Objekte ermitteln kann.

Insbesondere sind die Geo-Objekt außer durch die wenigstens eine vorbestimme Position durch eine weitere Größe gekennzeichnet, die für sich alleine oder in Kombination mit der vorbestimmten Position die geographische Ausdehnung des Geo-Objektes repräsentiert. Beispielsweise kann die weiter Größe ein Radius sein, der die geographische Ausdehnung eines kreisförmigen Geo-Objektes repräsentiert, dessen Mittelpunkt durch die wenigstens eine vorbestimmte Position gegeben ist.

In einem alternativen Beispiel kann mit demselben Effekt die wenigstens eine vorbestimmte Position eine erste vorbestimmte Position sein, die den Mittelpunkt eines als Kreis ausgebildeten Geo-Objektes darstellt, und die weitere Größe eine zweite vorbestimmte Position sein, die einen Punkt auf dem Rand des als Kreis ausgebildeten Geo-Objektes darstellt. Die Differenz der ersten und zweiten vorbestimmten Position liefert in diesem Fall den Radius als eine Größe, die die geographische Ausdehnung des kreisförmigen Geo-Objektes bestimmt.

Insbesondere ist die Datenverarbeitungseinrichtung ausgebildet, zur Ermittlung einer räumlichen Korrelation der ersten und/ oder zweiten Korrelationsposition mit wenigstens einem der Geo-Objekte einen Vergleich der ersten Korrelationsposition und/ oder der zweiten Korrelationsposition mit der wenigstens einen jeweiligen vorbestimmten Position und mit wenigstens einer weiteren Größe des wenigstens einen der Geo-Objekte durchzuführen, die für sich alleine oder in Kombination mit der vorbestimmten Position die geographische Ausdehnung des Geo-Objektes repräsentiert,
Dabei ist die Datenverarbeitungseinrichtung vorzugsweise ausgebildet, die räumliche Korrelation der ersten Korrelationsposition und/ oder der zweiten Korrelationsposition mit einem Geo-Objekt daran festzustellen, dass die erste Korrelationsposition und/ oder die zweite Korrelationsposition in einem Geo-Objekt liegt, dessen geographische Position durch die vorbestimmte Position und dessen geographische Ausdehnung durch die weitere Größe bestimmt sind.

Insbesondere ist die Datenverarbeitungseinrichtung ausgebildet, einen Abstand zwischen der ersten Abstandsposition und der zweiten Abstandsposition zu bestimmen, den bestimmten Abstand mit dem Referenzabstand zu vergleichen und ein Ergebnis dieses Vergleiches über eine bestehende oder mangelnde Abweichung des Abstandes von dem Referenzabstand zu erzeugen.

Damit wird eine Eingangsgröße für die Anwendung des zweiten Kriteriums bereitgestellt.

Im Falle eines positiven Ermittlungsergebnisses einer bestehenden Abweichung wird eine erste Eingangsgröße für die Anwendung des zweiten Kriteriums bereitgestellt.

Im Falle eines negativen Ermittlungsergebnisses einer mangelnden Abweichung wird eine zweite Eingangsgröße für die Anwendung des zweiten Kriteriums bereitgestellt.

Über die Eingangsgröße der bestehenden oder mangelnden Abweichung können jeweils zweite notwendige Bedingungen aus dem zweiten Kriterium formuliert werden, die (zusammen mit einer ersten notwendigen Bedingung des ersten Kriteriums) erfüllt sein müssen, damit es zu einer Erzeugung des Fehlersignals kommt.

Die beiden Kriterien, von denen die Erzeugung des Fehlersignals abhängt, können - wie schon erwähnt - jeweils zu Bedingungen weitergebildet werden, deren gemeinsame Erfüllung die Erzeugung des Fehlersignals bedingt.

Dabei eröffnet sich prinzipiell die Möglichkeit, die Erzeugung des Fehlersignals einerseits von dem Fehlen der räumlichen Korrelation und andererseits von dem Vorliegen der räumlichen Korrelation abhängig zu machen. Diese Diversifizierung auf zwei Sätze von notwendigen Bedingungen (ein erster Satz, der als notwendige Bedingung das Fehlen der Korrelation bestimmt, und ein zweiter Satz, der als notwendige Bedingung das Vorliegen der Korrelation bestimmt) ist mangels einer bestimmten Ausgestaltung von Geo-Objekte-Datensätzen, die jeweils Daten eines Geo-Objekts umfassen und dazu gegebenenfalls weitere Daten, die mit diesem Geo-Objekt verknüpft sind, auch gerechtfertigt.

Denn ohne weitere Informationen, die zu den Geo-Objekten über ihre Lage (geographische Position) und gegebenenfalls Größe (geographische Ausdehnung) hinaus könnte eine räumliche Korrelation der ersten Korrelationsposition mit einem ersten Geo-Objekt der Geo-Objekte und eine räumliche Korrelation der zweiten Korrelationsposition mit einem zweiten Geo-Objekt der Geo-Objekte, welches von dem ersten Geo-Objekt verschieden ist, als Fahrt durch ein (einziges) Störungsgebiet gewertet werden, obwohl die Möglichkeit besteht, dass das erste Geo-Objekt und das zweite Geo-Objekt die Zufahrts- oder Abfahrtsgebiete verschiedener Störungsgebiete repräsentieren.

Eine systembedingte Störung, die zufällig in dem Bereich eines ersten Störungsgebietes beginnt und zufällig in dem Bereich eines zweiten Störungsgebietes endet, kann damit ohne weiteres nicht als solche erkannt werden, obwohl sie eigentlich ein Fehlersignal erzeugen sollte.

Wie weiter unten gezeigt werden wird, kann aber bei einer bestimmten Ausgestaltung der Geo-Objekt-Datensätze auch dann die Erzeugung eines Fehlersignals gerechtfertigt sein, wenn die erste und zweite Korrelationsposition mit den "falschen" Geo-Objekten korrelieren, beziehungsweise mit zwei verschiedenen Geo-Objekten korrelieren, die "nicht zueinander passen".

Erfindungsgemäß ist die erfindungsgemäße Datenverarbeitungseinrichtung ausgebildet, (a) ein Fehlersignal zu erzeugen, wenn (i) sie keine räumliche Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem gespeicherten Geo-Objekt ermitteln konnte und (ii) der Abstand zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition größer ist als ein vorgegebener unterer Höchstabstand und/ oder (b) ein Fehlersignal zu erzeugen, wenn (i) sie eine räumliche Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem korrelierenden gespeicherten Geo-Objekt ermitteln konnte und (ii) der Abstand zwischen wenigstens einer, einer ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition nicht hinreichend mit wenigstens einem Korrelationsabstand übereinstimmt, der mit dem wenigstens einen korrelierenden Geo-Objekt verknüpft ist.

Der erste Satz (a) an Bedingungen der ersten Prüfung (a) bestimmt, dass mangelnde räumliche Korrelation der Korrelationspositionen mit Geo-Objekten nur dann ein Fehlersignal bedingen, wenn der Abstand der Abstandspositionen voneinander größer ist als ein vorgegebener unterer Höchstabstand, das heißt die Abweichung des Abstands von dem unteren Höchstabstand positiv (Abstand ist größer als der zulässige untere Höchstabstand) ist.

Der zweite Satz (b) an Bedingungen der zweiten Prüfung (b) bestimmt, dass trotz einer vorliegenden räumlichen Korrelation beider Korrelationspositionen ein Fehlersignal zu erzeugen ist, wenn der Abstand der Abstandspositionen voneinander insofern nicht hinreichend mit einem dem korrelierenden Geo-Objekt zugeordneten Korrelationsabstand übereinstimmt, als dass erfindungsgemäß die Abweichung des Abstands von dem Korrelationsabstand eine bestimmte zulässige Abstandsdifferenz überschreitet.

Die und-oder-Kombination der beiden Sätze (a) und (b) stellt den Anwender vor die Wahl, die Datenverarbeitungseinrichtung so auszubilden, dass sie nur Fehlersignale erzeugt, die auf systembedingte Störungen abseits der Störungsgebiete (d. h. auf eine mangelnde Korrelation der Korrelationspositionen mit Geo-Objekten) zurückzuführen sind, oder nur Fehlersignale erzeugt, die auf systembedingte Störungen, die ein oder mehrere Störungsgebiete übergreifend auftreten, (d. h. eine Korrelation mit den "falschen" Geo-Objekten) zurückzuführen sind, oder für jede der beiden Arten von systembedingten Störungen Fehlersignale erzeugt.

Die mit den Geo-Objekten verknüpften Korrelationsabstände liefern die zusätzliche Information, mit der eine systembedingte Störung, die zufällig in dem Bereich eines ersten Störungsgebietes beginnt und zufällig in dem Bereich eines zweiten Störungsgebietes endet, ebenfalls als solche erkannt werden kann, was erfindungsgemäß zur Erzeugung eines Fehlersignals führt.

Für ein kreisförmiges Solitär-Geo-Objekt entspricht der Korrelationsabstand beispielsweise seinem Durchmesser; er kann im Falle eines Tunnels aber auch der Länge des Tunnels entsprechen oder größer als Länge des Tunnels und kleiner als der Durchmesser sein. Eine Abweichung des Abstands zwischen der ersten Abstandsposition und der zweiten Abstandsposition von mehr als 500 Metern von dem Korrelationsabstand kann maßgeblich für die Erfüllung der notwendigen Bedingung (b) (ii) sein.

Für ein Paar von zwei Partner-Geo-Objekten, die ein- und demselben Störungsgebiet zugeordnet sind, entspricht der Korrelationsabstand vorzugsweise dem gegenseitigen Abstand der Partner-Geo-Objekte, insbesondere dem Abstand ihrer, ihren Mittelpunkt repräsentierenden, vorbestimmten Positionen.

Vorzugsweise ist die erfindungsgemäße Datenverarbeitungseinrichtung ausgebildet, im Falle der Feststellung des Vorliegens einer Lücke zu prüfen, ob der Abstand zwischen der ersten Abstandsposition und der zweiten Abstandsposition größer ist als der vorgegebene untere Höchstabstand und nur dann, wenn der Abstand zwischen der ersten Abstandsposition und der zweiten Abstandsposition größer ist als ein vorgegebener unterer Höchstabstand, zu ermitteln, ob die erste Korrelationsposition und die zweite Korrelationsposition räumlich mit wenigstens einem gespeicherten Geo-Objekt korrelieren.

Damit werden vorteilhaft die von der erfindungsgemäßen Datenverarbeitungseinrichtung durchzuführenden Datenverarbeitungsschritte reduziert. So erfolgt solange keine aufwändige Korrelationsprüfung mit gegebenenfalls einer großen Anzahl an zum Vergleich heranzuziehenden Geo-Objekten, wie nicht die Länge der Lücke, die zu einem Fehlersignal führen könnte, berechtigten Anlass dazu gibt. Ebensowenig erfolgt solange keine aufwändige Korrelationsprüfung mit gegebenenfalls einer großen Anzahl an zum Vergleich heranzuziehenden Geo-Objekten wie nicht überhaupt das Vorliegen eine Lücke festgestellt wurde.

Vorzugsweise weist jedes Geo-Objekt eine eindeutige Kennung auf, mit der es von den anderen Geo-Objekten unterschieden werden kann. Damit lässt sich ermitteln, ob die erste und zweite Korrelationsposition mit gleichen oder verschiedenen Geo-Objekten korrelieren.

Insbesondere überlappen verschiedene Geo-Objekte räumlich nicht miteinander, damit die Eindeutigkeit der Korrelation der Korrelationspositionen mit jeweils nur maximal einem bestimmten Geo-Objekte gegeben ist.

Insbesondere ist die Datenverarbeitungseinrichtung ausgebildet ein Fehlersignal zu erzeugen, wenn (i) sie eine räumliche Korrelation der ersten Korrelationsposition mit einem ersten Geo-Objekt der Geo-Objekte ermitteln konnte und eine räumliche Korrelation der zweiten Korrelationsposition mit einem zweiten Geo-Objekt der Geo-Objekte ermitteln konnte und (ii) der Abstand zwischen der ersten Abstandsposition und der zweiten Abstandsposition nicht hinreichend mit einem ersten Korrelationsabstand übereinstimmt, der mit dem ersten Geo-Objekt verknüpft ist, und nicht hinreichend mit einem zweiten Korrelationsabstand übereinstimmt, der mit dem zweiten Geo-Objekt verknüpft ist.

Schließlich bedeutet die wiederholte Verwendung des unbestimmten Artikels bei der Definition der Korrelationspositionen und der Abstandspositionen in den beiden Prüfungen (a) und (b), dass die Korrelationspositionen und die Abstandspositionen in verschiedenen Prüfungen verschieden sein können, insbesondere weil die Datenverarbeitungseinrichtung auch ausgebildet sein kann, nur eine diese Prüfungen durchzuführen, wobei sie vorzugsweise jedoch ausgebildet ist, beide Prüfungen durchzuführen. Vorzugsweise sind sie in beiden Prüfungen die ersten Korrelationspositionen identisch, die zweiten Korrelationspositionen identisch, die ersten Abstandspositionen identisch und die zweiten Abstandspositionen identisch, weil damit im Falle der Durchführung beider Prüfungen (a) und (b) eine Überlappung unterschiedlicher Verhältnisse ausgeschlossen und eine Eindeutigkeit des Ergebnisses bezüglich jenen lückenbehafteten Reihen an Positionsdaten, für die keine Korrelation mit einem Geo-Objekt oder mehreren Geo-Objekten vorliegt, und jenen lückenbehafteten Reihen an Positionsdaten, für die eine Korrelation mit einem Geo-Objekt oder mehreren Geo-Objekten vorliegt.

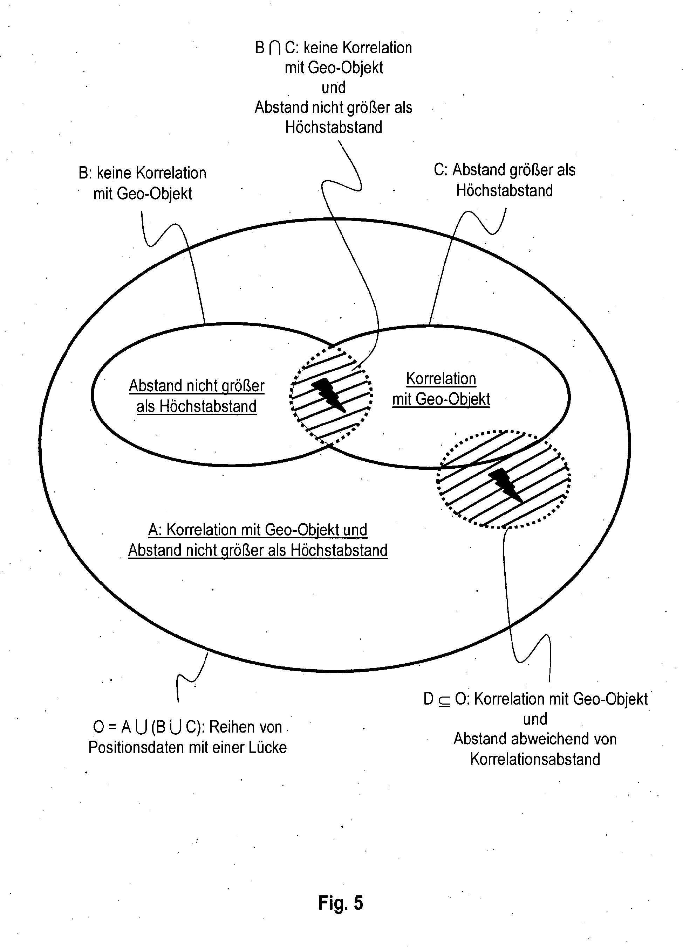

Dieser Umstand lässt sich anschaulich anhand einer Mengenbetrachtung unter Verweis auf die Fig. 5 verstehen, in der Untermengen gestrichelte Ränder aufweisen und zueinander disjunkte Mengen durchgezogene Ränder: Die Menge O an Reihen von Standortpositionen, die eine Positionsdatenlücke aufweisen, ist eine Vereinigungsmenge der Menge A derjenigen Reihen, für die eine räumliche Korrelation einem Geo-Objekt und ein Abstand vorliegt, der nicht größer als der untere Höchstabstand ist, der Menge B derjenigen Reihen, für die keine räumliche Korrelation mit einem Geo-Objekt vorliegt und der Menge C derjenigen Reihen, für die der Abstand größer ist als der untere Höchstabstand. Die Mengen B und C weisen eine Schnittmenge (B ∩ C, schraffiert) derjenigen Reihen auf, für die keine räumliche Korrelation mit einem Geo-Objekt vorliegt und für die der Abstand größer ist als der untere Höchstabstand. Für diese wird erfindungsgemäß ein Fehlersignal (Blitzsymbol in Fig. 5) erzeugt. Ferner weist die Menge O eine Untermenge D derjenigen Reihen auf, die eine räumliche Korrelation mit einem Geo-Objekt aufweisen, deren Abstand jedoch von einem Korrelationsabstand abweicht, der mit dem korrelierenden Geo-Objekt verknüpft ist, und für die ebenfalls erfindungsgemäß ein Fehlersignal (Blitzsignal in Fig. 5) erzeugt wird. Diese Untermenge D kann teilweise eine Untermenge von A als auch teilweise eine Untermenge von C sein. Nimmt man zur Vereinfachung den theoretischen Fall an, dass die zulässige Abstandsdifferenz für eine hinreichende Übereinstimmung des Abstandes mit dem Korrelationsabstand Null ist und in beiden Prüfungen (a) und (b) die Korrelationspositionen und die Abstandspositionen jeweils übereinstimmen, so ist D eine Untermenge von A, wenn der Korrelationsabstand nicht größer (insbesondere kleiner) ist als der untere Höchstabstand, und eine Untermenge von C, wenn der Korrelationsabstand größer als der untere Höchstabstand ist.

Besonders bevorzugt ist D nur eine Untermenge von C und keine Untermenge von A. Dieser Fall bedeutet nämlich, dass die Korrelationsabstände aller Geo-Objekte größer sind als der untere Höchstabstand. Daraus folgt, dass generell alle Lücken, die kleiner sind als der untere Höchstabstand bei der Frage ignoriert werden können, ob ihre Positionsdatenreihe mit einem der Geo-Objekte verknüpft ist. Damit können die Prüfungen (a) und (b) zusammengezogen und deutlich vereinfacht werden:
Auch ohne diese, obgleich vereinfachenden, so doch einschränkenden, Maßnahmen der Gleichsetzung der Korrelationspositionen der ersten Prüfung (a) und zweiten Prüfung (b), der Gleichsetzung der Abstandspositionen der ersten Prüfung (a) und zweiten Prüfung (b) bleibt es unter Beibehaltung der Maßgabe, dass der untere Höchstabstand kleiner als die Korrelationslänge jedes der Geo-Objekt sei, vorteilhaft die erfindungsgemäße Datenverarbeitungseinrichtung dahingehend weiterzubilden, dass die Datenverarbeitungseinrichtung ausgebildet ist, ein Fehlersignal zu erzeugen, wenn der Abstand zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition größer ist als ein vorgegebener unterer Höchstabstand und (a) sie keine räumliche Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem der Geo-Objekte ermitteln konnte oder (b) der Abstand der ersten Abstandsposition und der zweiten Abstandsposition nicht hinreichend mit einem Korrelationsabstand übereinstimmt, der mit wenigstens einem korrelierenden Geo-Objekt verknüpft ist, mit dem die erste und/ oder zweite Korrelationsposition räumlich korreliert, und der größer ist als der vorgegebene untere Höchstabstand.

Durch die Einführung des Überschreitens des unteren Höchstabstandes als Kriterium für die Auslösung eines Fehlersignals können vorteilhaft für eine begrenzte Anzahl an bekannten Störungsgebiete ohne GNSS-Empfang oder mit gestörtem GNSS-Empfang, deren Ausdehnung an einer durch das Straßennetz vorgegebenen Durchquerung den unteren Höchstabstand überschreiten, Geo-Objekte modelliert werden, deren Identifizierung anhand der besagten Standortpositionen ein Fehlersignal vermeidet, selbst wenn die Länge der Lücke (als solche wird vereinfacht der Abstand zwischen den besagten Standortpositionen vor und nach der Positionsdatenlücke bezeichnet) diesen unteren Höchstabstand überschreitet.

Umgekehrt ist keine Modellierung von Geo-Objekten für GNSS-empfangslose oder -empfangsgestörte Gebiet nötig, deren Ausdehnung kleiner ist als der untere Höchstabstand. Dies bedeutet eine Verringerung des Modellierungsaufwands, eine geringere Speicherauslastung mit Geo-Objekten und eine niedrigere Rechenzeit bei der Prüfung von Korrelationspositionen auf eine Korrelation.

Mit der Wahl des unteren Höchstabstandes gibt der Betreiber der Datenverarbeitungseinrichtung zum einen vor, ab einer welchen Länge der Positionsdatenlücke er letztere als Hinweis auf einen Mangel an Erfüllung der bestimmungsgemäßen Funktion der Positionsbestimmungseinrichtung mit der Konsequenz werden möchte, ein Fehlersignal zu erzeugen. Zum anderen gibt er damit auch die Anzahl der Gebiete vor, von denen er über das Wissen des GNSS-Empfangsausfalls oder der GNSS-Empfangsstörung verfügt. So sind in wikipedia derzeit für die Bundesrepublik Deutschland 28 Straßentunnel von Autobahnen und Bundesstraßen gelistet, deren Länge 1500 Meter überschreiten. Die Anzahl der Tunnel steigt tendenziell mit sinkender Tunnellänge.

So ist insbesondere der vorgegebene untere Höchstabstand nicht größer als 2000 Meter und nicht kleiner als 50 Meter. Vorzugsweise liegt der untere Höchstabstand im Bereich von 100 Metern bis 1000 Metern:

Mit der erfindungswesentlichen Kombination von Empfangsstörungsgebieten identifizierenden Geo-Objekten und Höchstabständen, deren Unterschreitung kein Fehlersignal erzeugt, kann die Erzeugung eines Fehlersignals aufgrund einer topographiebedingten GNSS-Empfangsstörung völlig ausgeschlossen werden, wenn in dem Datenspeicher für sämtliche Empfangsstörungsgebiete topographiebedingter Empfangsstörungen, deren Gebietsgröße die des unteren Höchstabstandes überschreiten, die entsprechenden Geo-Objekte enthalten sind.

Bevorzugt ist die erfindungsgemäße Datenverarbeitungseinrichtung ausgebildet, ein Fehlersignal zu erzeugen, wenn der Abstand zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition größer ist als ein oberer Höchstabstand.

Vorzugsweise ist der obere Höchstabstand größer als jeder der Korrelationsabstände der im Datenspeicher gespeicherten Geo-Objekte. Bevorzugt ist der obere Höchstabstand nicht kleiner als 5000 Meter und nicht größer als 50 Kilometer. Besonders bevorzugt beträgt der obere Höchstabstand 10 Kilometer.

Wie schon erwähnt, lässt sich auch ohne die Verwendung von mit Geo-Objekten verknüpften Korrelationsabständen ein Fehlersignal erzeugen, wenn eine mehrere Störungsgebiete tangierende oder übergreifende systembedingte Störung vorliegt. Dabei kann und muss auch dann ein Fehlersignal erzeugt werden, wenn die erste Korrelationsposition mit einem ersten Geo-Objekt korreliert und die zweite Korrelationsposition mit einem zweiten Geo-Objekt korreliert, welches zu einem anderen Störungsgebiet gehört als das erste Geo-Objekt. Die Zugehörigkeit mehrerer Geo-Objekte zu einem gemeinsamen Störungsgebiet kann durch ein Attribut wenigstens eines Geo-Objekts vermittelt werden, das eine Verknüpfung mit wenigstens einem anderen Geo-Objekt repräsentiert.

Dazu sind in dem Datenspeicher mehrere, durch wenigstens eine vorbestimmte Position gekennzeichnete, Geo-Objekte gespeichert und die erfindungsgemäße Datenverarbeitungseinrichtung ist vorzugsweise ausgebildet, ein Fehlersignal zu erzeugen, wenn eine räumliche Korrelation der ersten Korrelationsposition nur mit einem ersten Geo-Objekt der gespeicherten Geo-Objekte und eine räumliche Korrelation der zweiten Korrelationsposition nur mit einem, von dem ersten Geo-Objekt verschiedenen, zweiten Geo-Objekt der gespeicherten Geo-Objekte ermittelt werden konnte, von denen weder das erste Geo-Objekt noch das zweite Geo-Objekt ein Attribut aufweist, das eine Verknüpfung des ersten und des zweiten Geo-Objekts zu einer gemeinsamen Gruppe von gespeicherten Geo-Objekten repräsentiert.

Das soll nachfolgend beispielhaft anhand der zwei verschiedenen Klassen von Geo-Objekten (Solitär-Geo-Objekte und Partner-Geo-Objekte), die bereits weiter oben angesprochen wurden erläutert werden.

Solitär-Geo-Objekte erstrecken sich beispielsweise über das jeweilige ihnen zugeordnete Empfangsstörungsgebiet hinweg (ohne notwendigerweise das Empfangsstörungsgebiet vollständig zu umfassen - eine Schnittmenge mit diesem genügt) bis in Empfangsgebiete, die an zwei oder mehreren Seiten des Empfangsstörungsgebietes angrenzen. Bei einer Fahrt in das Empfangsstörungsgebiet werden vor Eintritt in das Empfangsstörungsgebiet noch im Empfangsgebiet initiale Standortpositionen erfasst, die einen ersten Abschnitt des zurückgelegten Weges vor der Lücke kennzeichnen; bei der Fahrt aus dem Empfangsstörungsgebiet werden nach Austritt aus dem Empfangsstörungsgebiet wieder im Empfangsgebiet finale Standortpositionen erfasst., die einen zweiten Abschnitt des zurückgelegten Weges nach der Lücke kennzeichnen.

Im Falle eines, dieses Empfangsstörungsgebiet repräsentierenden, Solitär-Geo-Objekts korrelieren sowohl die erste Korrelationsposition (beispielsweise eine der initialen Standortpositionen) als auch die zweite Korrelationsposition (beispielsweise eine der finalen Standortpositionen) mit demselben Solitär-Geo-Objekt, wenn es sich nur um eine topographische Störung handelt.

Im Falle einer mehrere Störungsgebiete tangierenden oder übergreifenden systembedingten Störung jedoch stellt die Datenverarbeitungseinrichtung dann eine räumliche Korrelation eines ersten Solitär-Geo-Objekts mit der ersten - Korrelationsposition und eine räumliche Korrelation eines zweiten Solitär-Geo-Objekts mit der zweiten Korrelationsposition fest, wenn das Auftreten der systembedingten Störung in den Bereich des ersten Solitär-Geo-Objektes fällt und das Verschwinden der systembedingten Störung in den Bereich des zweiten Solitär-Geo-Objekts fällt.

Um für diesen Fall dennoch eine Fehlermeldung zu erzeugen, obwohl eine räumliche Korrelation der ersten Korrelationsposition und der zweiten Korrelationsposition mit jeweils einem Geo-Objekt festgestellt wurde, wird vorgeschlagen, in dem Datenspeicher unter den Geo-Objekten wenigstens ein Solitär-Geo-Objekte vorzusehen, das mit einem Solitär-Attribut, das seine mangelnde Zugehörigkeit zu einer gemeinsamen Gruppe von mehreren Geo-Objekten repräsentiert, und/ oder mit keinem Partner-Attribut versehen ist, dessen Mangel die Zugehörigkeit zu einer gemeinsamen Gruppe von mehreren Geo-Objekten ausschließt, und die Datenverarbeitungseinrichtung auszubilden, ein Fehlersignal zu erzeugen, wenn sie keine räumliche der zweiten Korrelationsposition mit einem Solitär-Geo-Objekt ermitteln konnte, mit dem die erste Korrelationsposition räumlich korreliert.

Beispielsweise weist jedes Solitär-Geo-Objekt ein Solitär-Attribut in Form einer eindeutigen Kennung auf, mit der es von den anderen Solitär-Geo-Objekten unterschieden werden kann. Damit lässt sich ermitteln, ob die erste und zweite Korrelationsposition mit gleichen oder verschiedenen Geo-Objekten korrelieren.

Ein Beispiel für eine eindeutige Kennung ist der weiter oben bezeichnete Korrelationsabstand,wenn bei der Festlegung des Wertes des Korrelationsabstands darauf geachtet wird, dass er trotz ähnlicher Größen der Störungsgebiete stets unterschiedlich bleibt.

Eine andere Form des Solitär-Attributs ist ein Flag, welches bei Solitär-Geo-Objekten auf "1" gesetzt ist und bei anderen, insbesondere Partner-Geo-Objekten auf "0". Anhand der vorbestimmten Positionen, die die geographische Lage sich nicht überlappender Solitär-Geo-Objekte kennzeichnen, kann die Datenverarbeitungseinrichtung dann prüfen, ob verschiedenen Korrelationspositionen mit verschiedenen Solitär-Geo-Objekten korrelieren oder nicht.

Partner-Geo-Objekte sind von der räumlichen Ausdehnung, die sie repräsentieren, kleiner als Solitär-Geo-Objekte. Sie lassen sich dadurch kennzeichnen, dass zumindest eines führenden der Partner-Geo-Objekte mit einem Partner-Attribut versehen ist, das zur Identifizierung von wenigstens einem weiteren Partner-Geo-Objekt taugt, welches durch das Partner-Attribut mit dem führenden Partner-Geo-Objekt verknüpft ist. Beispielsweise sind mehrere Partner-Geo-Objekte jeweils mit einem identischen Partner-Attribut versehen, das ihre Zugehörigkeit zu einer gemeinsamen Gruppe, beispielsweise ein Paar, repräsentiert. Alternativ kann ein erstes Partner-Geo-Objekt mit der Kennung eines zweiten Partner-Geo-Objektes versehen sein, was beide Partner-Geo-Objekte miteinander verknüpft.

In einem Paar von zwei Partner-Geo-Objekten repräsentiert ein erstes Partner-Geo-Objekt einen Ausfahrtsbereich des Empfangsgebietes, der an einen Eingangsbereich des Empfangsstörungsgebiet grenzt, und ein zweites Partner-Geo-Objekt einen Einfahrtsbereich des Empfangsgebietes, der an einen Ausgangsbereich des Empfangsstörungsgebietes grenzt.

Bei einer Fahrt in das Empfangsstörungsgebiet werden vor Eintritt in das Empfangsstörungsgebiet - noch im Empfangsgebiet - initiale Standortpositionen erfasst, die einen ersten Abschnitt des zurückgelegten Weges vor der Lücke kennzeichnen; bei der Fahrt aus dem Empfangsstörungsgebiet werden nach Austritt aus dem Empfangsstörungsgebiet - wieder im Empfangsgebiet - finale Standortpositionen erfasst., die einen zweiten Abschnitt des zurückgelegten Weges nach der Lücke kennzeichnen.

Im Falle eines, dieses Empfangsstörungsgebiet repräsentierenden, Paares von ersten und zweiten Partner-Geo-Objekten korreliert die erste Korrelationsposition (beispielsweise eine der initialen Standortpositionen) nur mit dem ersten Partner-Geo-Objekt und die zweite Korrelationsposition (beispielsweise eine der finalen Standortpositionen) dem zweiten Partner-Geo-Objekt.

Im Falle einer mehrere Störungsgebiete tangierenden öder übergreifenden systembedingten Störung jedoch stellt die Datenverarbeitungseinrichtung dann eine räumliche Korrelation eines ersten Partner-Geo-Objekts mit der ersten Korrelationsposition und eine räumliche Korrelation eines zweiten Partner-Geo-Objekts, welches nicht zu derselben Gruppe gehört wie das erste Partner-Geo-Objekte (d.h. nicht demselben Störungsgebiet zugehörig ist), mit der zweiten Korrelationsposition fest, wenn das Auftreten der systembedingten Störung in den Bereich des ersten Partner-Geo-Objektes fällt und das Verschwinden der systembedingten Störung in den Bereich des zweiten Partner-Geo-Objekts fällt. Um für diesen Fall dennoch eine Fehlermeldung zu erzeugen, obwohl eine räumliche Korrelation der ersten Korrelationsposition und der zweiten Korrelationsposition mit jeweils einem Geo-Objekt festgestellt wurde, wird vorgeschlagen, in dem Datenspeicher unter den Geo-Objekten wenigstens ein erstes Partner-Geo-Objekt der Geo-Objekte und wenigstens ein zweites Partner-Geo-Objekt vorzusehen, von denen wenigstens eines mit einem Partner-Attribut versehen ist, das die Zugehörigkeit des ersten Partner-Geo-Objekts und des zweiten Partner-Geo-Objekts zu einer gemeinsamen Gruppe von Partner-Geo-Objekten der Geo-Objekte repräsentiert und die Datenverarbeitungseinrichtung auszubilden, ein Fehlersignal zu erzeugen, wenn sie keine räumliche Korrelation der zweiten Korrelationsposition mit einem zweiten Partner-Geo-Objekt ermitteln konnte, das mittels des Partner-Attributs mit dem ersten Partner-Geo-Objekt, mit dem die erste Korrelationsposition räumlich korreliert, verknüpft ist.

Beispielsweise weisen Partner-Geo-Objekte ein- und derselben Gruppe identische Attribute auf, die für verschiedene Gruppen unterschiedlich sind. Partner-Geo-Objekte verschiedener Gruppen weisen dann notwendigerweise verschiedene Partner-Attribute auf, wenn identische Partner-Attribute (beispielsweise eine Gruppen-Kennung) die Zugehörigkeit zu einer bestimmten Gruppe kennzeichnen.

Ein Beispiel für ein identisches Attribut ist der weiter oben bezeichnete Korrelationsabstand, wenn bei der Festlegung des Wertes des Korrelationsabstands darauf geachtet wird, dass er trotz ähnlicher Größen der Störungsgebiete in verschiedenen Gruppen stets unterschiedlich bleibt.

Für den Fall, dass jedes Partner-Geo-Objekt eine eindeutige Kennung aufweist, ist ein Beispiel für ein nicht-identisches Attribut eines ersten Partner-Geo-Objektes durch die Kennung eines zweiten Partner-Geo-Objektes gegeben und umgekehrt: Nur wenn zwei Partner-Geo-Objekte durch ein solches Kennungsattribut jeweils aufeinander verweisen, bilden sie eine gemeinsame Gruppe.

Ausführungsformen der erfindungsgemäßen Datenverarbeitungseinrichtung sind dadurch gekennzeichnet, dass die Datenverarbeitungseinrichtung ausgebildet ist, das Vorliegen der Lücke daran festzustellen, dass in der Reihe der Standortpositionen zwischen einer ersten Standortposition und einer zweiten Standortposition keine Anzahl weiterer Standortpositionen vorliegt, die einer vorgegebenen Mindestanzahl weiterer Standortpositionen oder weiterer Standortpositionen der vorgegebenen Mindestgüte entspricht oder diese übersteigt.

Alternativ können Ausführungsformen der erfindungsgemäßen Datenverarbeitungseinrichtung dadurch gekennzeichnet sein, dass die Datenverarbeitungseinrichtung ausgebildet ist, das Vorliegen der Lücke daran festzustellen, dass zum einen in der Reihe der Standortpositionen zwischen einer ersten Standortposition und einer zweiten Standortposition keine Anzahl weiterer Standortpositionen vorliegt, die einer vorgegebenen Mindestanzahl weiterer Standortpositionen oder weiterer Standortpositionen der vorgegebenen Mindestgüte entspricht oder diese übersteigt, und zum anderen zwischen der ersten Standortposition und der zweiten Standortposition ein Abstand besteht, der größer ist als ein vorgegebener Lückenabstand, welcher nicht größer ist als der vorgegebene untere Höchstabstand, und/ oder zwischen einem ersten Zeitstempel der ersten Standortposition und einem zweiten Zeitstempel der zweiten Standortposition eine Zeitdifferenz besteht, die größer ist als eine vorgegebene Zeitdifferenz.

Beispielsweise ist der vorgegebene Lückenabstand nicht größer als 300 m und nicht kleiner als 50 m. Beispielsweise ist die vorgegebene Zeitdifferenz nicht kleiner als 0,5 s und nicht größer als 10 sec. Insbesondere übersteigen die Güten der ersten Standortposition und der zweiten Standortposition die vorgegebene Mindestgüte.

Alternativ können Ausführungsformen der erfindungsgemäßen Datenverarbeitungseinrichtung dadurch gekennzeichnet sein, dass die Datenverarbeitungseinrichtung ausgebildet ist, das Vorliegen der Lücke festzustellen, indem sie einen Beginn einer Positionsbestimmungsunterbrechungsphase feststellt, wenn innerhalb eines Zeitabschnittes von vorgegebener Dauer nach der Bereitstellung oder Erzeugung einer ersten Standortposition mit vorgegebener Mindestgüte die Bereitstellung oder Erzeugung einer der ersten Standortposition zeitlich nachfolgenden Standortposition mit vorgegebener Mindestgüte oder gänzlich durch die Positionsbestimmungseinrichtung oder die Datenverarbeitungseinrichtung unterbleibt, und ein Ende der Positionsbestimmungsunterbrechungsphase feststellt, wenn nach dem Beginn der Positionsbestimmungsunterbrechungsphase eine zweite Standortposition durch die Positionsbestimmungseinrichtung mit vorgegebener Mindestgüte bereitgestellt oder durch die Datenverarbeitungseinrichtung erzeugt wurde.

Während die Feststellung des Beginns einer Positionsbestimmungsunterbrechungsphase die Existenz einer Lücke bedeutet, bedeutet die Feststellung des Endes der Positionsbestimmungsunterbrechungsphase ihre Begrenzung. Mit der Feststellung des Beginns einer Positionsbestimmungsunterbrechungsphase ist es möglich die erste Korrelationsposition zu bestimmen. Erst mit Feststellung des Endes der Positionsbestimmungsunterbrechungsphase wird es möglich die zweite Korrelationsposition zu bestimmen.

Die erfindungsgemäße Datenverarbeitungseinrichtung ist beispielsweise zusammen mit einer Positionsbestimmungseinrichtung, die ausgebildet ist, Navigationssignale von Navigationssatelliten wenigstens eines Globalen Navigationssatellitensystems zu empfangen, anhand der empfangenen Navigationssignale die Standortpositionen zu erzeugen oder die Positionsdaten zu erzeugen, aus denen die Datenverarbeitungseinrichtung die Standortpositionen erzeugt, von einer Fahrzeugeinrichtung umfasst. ,

Vorzugsweise weist die Fahrzeugeinrichtung Signalisierungsmittel (z. B. eine optische Anzeigeeinrichtung) auf, wobei die Fahrzeugeinrichtung ausgebildet ist, ein von der Datenverarbeitungseinrichtung erzeugtes Fehlersignal durch ein optisches Signal (z. B. leuchtende Diode oder Textanzeige) mittels der optischen Anzeigeeinrichtung wiederzugeben. Beispielsweise ist die Fahrzeugeinrichtung ausbildet, infolge der Erzeugung des Fehlersignals wenigstens ein Steuersignal an die optische Anzeigeeinrichtung abzugeben, das die optische Anzeige veranlasst eine Fehleranzeige durchzuführen.

Insbesondere kann die Fahrzeugeinrichtung in einem Zustand gegebener Betriebsbereitschaft ausgebildet sein, keine mangelnde Betriebsbereitschaft und/ oder eine gegebene Betriebsbereitschaft zu signalisieren, die Anzahl von erzeugten Fehlersignalen zu zählen, bei Erreichen oder Überschreiten einer vorgegebenen Maximalanzahl von erzeugten Fehlersignalen in einen Zustand der mangelnden Betriebsbereitschaft zu wechseln und eine mangelnde Betriebsbereitschaft und/ oder keine gegebene Betriebsbereitschaft zu signalisieren.

Alternativ oder optional ist die erfindungsgemäße Datenverarbeitungseinrichtung von einem System umfasst, welches wenigstens eine Positionsbestimmungseinrichtung aufweist, die kommunikationstechnisch zumindest zeitweise mit der Datenverarbeitungseinrichtung in Verbindung steht und ausgebildet ist, Navigationssignale von Navigationssatelliten wenigstens eines Globalen Navigationssatellitensystems zu empfangen, anhand der empfangenen Navigationssignale die Positionsdaten oder die Standortpositionen zu erzeugen und die erzeugten Positionsdaten oder Standortpositionen der Datenverarbeitungseinrichtung bereitzustellen, wobei die Datenverarbeitungseinrichtung ausgebildet ist, die durch die Positionsbestimmungseinrichtung bereitgestellten Standortpositionen zu erfassen oder die durch die Positionsbestimmungseinrichtung bereitgestellten Positionsdaten zu erfassen aus den durch die Positionsbestimmungseinrichtung bereitgestellten Positionsdaten die mehreren Standortpositionen zu erzeugen.

Beispielsweise wird die erfindungsgemäße Datenverarbeitungseinrichtung durch eine Fahrzeugeinrichtung gebildet, die kommunikationstechnisch an die Positionsbestimmungseinrichtung gekoppelt ist. Vorzugsweise weist die Fahrzeugeinrichtung Signalisierungsmittel (z. B. eine optische Anzeigeeinrichtung) auf, wobei die Fahrzeugeinrichtung ausgebildet ist, ein von der Datenverarbeitungseinrichtung erzeugtes Fehlersignal durch ein optisches Signal (z. B. leuchtende Diode oder Textanzeige) mittels der optischen Anzeigeeinrichtung wiederzugeben.

Alternativ ist die Positionsbestimmungseinrichtung von einer Fahrzeugeinrichtung umfasst, welche kommunikationstechnisch an die Datenverarbeitungseinrichtung gekoppelt ist, welche abseits und außerhalb eines Fahrzeugs angeordnet ist, welches die Fahrzeugeinrichtung mit sich führt. Die kommunikationstechnische Verbindung zwischen der Fahrzeugeinrichtung und der Datenverarbeitungseinrichtung kann mittels eines Mobilfunknetzes etabliert werden. Die Datenverarbeitungseinrichtung kann dabei ausgebildet sein, infolge des erzeugten Fehlersignals eine Fehlernachricht zu erzeugen, die es mittels des Mobilfunknetzes an die Fahrzeugeinrichtung sendet, von der es die Positionsdaten oder Standortpositionen empfangen hat.

Gemäß einem zweiten Aspekt der Erfindung wird mit Anspruch 10 ein System bereitgestellt, das wenigstens eine Positionsbestimmungseinrichtung, wenigstens eine Datenverarbeitungseinrichtung und wenigstens einen Datenspeicher umfasst, in dem wenigstens ein, durch wenigstens eine vorbestimmte Position gekennzeichnetes, Geo-Objekt gespeichert ist, wobei die Positionsbestimmungseinrichtung eine erste Kommunikationseinrichtung aufweist und ausgebildet ist, Navigationssignale von Navigationssatelliten wenigstens eines Globalen Navigationssatellitensystems zu empfangen, anhand der empfangenen Navigationssignale Positionsdaten oder Standortpositionen zu erzeugen und die erzeugten Positionsdaten oder Standortpositionen mittels der ersten Kommunikationseinrichtung an die Datenverarbeitungseinrichtung zu versenden, die Datenverarbeitungseinrichtung eine zweite Kommunikationseinrichtung aufweist oder an eine solche gekoppelt ist und ausgebildet ist, eine Reihe von Standortpositionen, die den Verlauf zumindest von Abschnitten eines zumindest scheinbar von der Positionsbestimmungseinrichtung zurückgelegten Weges repräsentieren, mittels der zweiten Kommunikationseinrichtung von dieser Positionsbestimmungseinrichtung zu empfangen oder aus von dieser Positionsbestimmungseinrichtung empfangenen Positionsdaten zu erzeugen, und ferner das System ausgebildet ist, in der Reihe von empfangenen oder erzeugten Standortpositionen eine Lücke festzustellen, die durch das gänzliche Fehlen wenigstens einer Standortposition oder durch das Fehlen wenigstens einer Standortposition von einer vorgegebener Mindestgüte gekennzeichnet ist, und in Abhängigkeit von einer räumlichen Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem gespeicherten Geo-Objekt ein Fehlersignal zu erzeugen.

Bevorzugt sind ein dem Datenspeicher mehrere, durch jeweils wenigstens eine vorbestimmte Position gekennzeichnete, Geo-Objekte gespeichert.

Erfindungsgemäß ist das System ausgebildet, das Fehlersignal auch in Abhängigkeit von einer Abweichung des Abstandes zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition von wenigstens einem Referenzabstand zu erzeugen.

Vorzugsweise ist die erste Kommunikationseinrichtung eine Mobilfunkkommunikationseinrichtung. Weniger bevorzugt ist die erste Kommunikationseinrichtung eine DSRC-Kommunikationseinrichtung (DSRC = dedicated short-range communication).

Insbesondere ist dabei der Datenspeicher von der Positionsbestimmungseinrichtung umfasst, die Positionsbestimmungseinrichtung ausgebildet, die Lücke festzustellen und zu ermitteln, ob die erste Korrelationsposition und die zweite Korrelationsposition räumlich mit wenigstens einem korrelierenden Geo-Objekt der Geo-Objekte korrelieren, und im Falle der des Vorliegens der räumlichen Korrelationen das korrelierende Geo-Objekt oder die korrelierenden Geo-Objekte mittels der ersten Kommunikationseinrichtung an die Datenverarbeitungseinrichtung zu senden und im Falle des Fehlens dieser Korrelation eine Nachricht über die fehlende Korrelation Objekte mittels der ersten Kommunikationseinrichtung an die Datenverarbeitungseinrichtung zu senden, welche ausgebildet ist, das Fehlersignal zu erzeugen.

Alternativ oder optional kann der Datenspeicher von der Datenverarbeitungseinrichtung umfasst sein und die Datenverarbeitungseinrichtung ausgebildet sein, die Lücke festzustellen und zu ermitteln, ob die erste Korrelationsposition und die zweite Korrelationsposition räumlich mit wenigstens einem korrelierenden Geo-Objekt der Geo-Objekte korrelieren, und das Fehlersignal zu erzeugen.

Auch andere Varianten der Aufgabenteilung zwischen Positionsbestimmungseinrichtung und Datenverarbeitungseinrichtung sind denkbar.

Überdies kann die Datenverarbeitungseinrichtung des erfindungsgemäßen Systems über die Merkmale der erfindungsgemäßen Datenverarbeitungseinrichtung gemäß dem ersten Aspekt der Erfindung verfügen.

Insbesondere wird die Positionsbestimmungseinrichtung von einem Fahrzeug mitgeführt.

Einerseits kann auch die Datenverarbeitungseinrichtung von dem Fahrzeug mitgeführt werden, welches die Positionsbestimmungseinrichtung mitführt.

Andererseits kann alternativ die Datenverarbeitungseinrichtung oder kumulativ eine weitere Datenverarbeitungseinrichtung von einer Zentrale umfasst sein, welche außerhalb und abseits eines des Fahrzeugs angeordnet ist und nicht von dem Fahrzeug mitgeführt wird, das die Positionsbestimmungseinrichtung mit sich führt.

Gemäß einem dritten Aspekt der Erfindung wird mit Anspruch 11 ein Verfahren zur Prüfung der Erfüllung der bestimmungsgemäßen Funktion einer Positionsbestimmungseinrichtung bereitgestellt mit dem Schritt des Empfangs einer Reihe von Standortpositionen von einer Positionsbestimmungseinrichtung oder der Erzeugung einer Reihe von Standortpositionen aus Positionsdaten einer Positionsbestimmungseinrichtung, welche Standortpositionen den Verlauf zumindest von Abschnitten eines zumindest scheinbar von der Positionsbestimmungseinrichtung zurückgelegten Weges repräsentieren, welches gekennzeichnet ist durch die Schritte der Feststellung einer Lücke in der Reihe von Standortpositionen, welche Lücke durch das gänzliche Fehlen wenigstens einer Standortposition oder durch das Fehlen einer Standortposition von einer vorgegebener Mindestgüte gekennzeichnet ist, der Ermittlung, ob wenigstens eine, einen ersten Abschnitt des zurückgelegten Weges vor der Lücke kennzeichnende, erste Korrelationsposition und wenigstens eine, einen zweiten Abschnitt des zurückgelegten Weges nach der Lücke kennzeichnende, zweite Korrelationsposition räumlich mit wenigstens einem, in wenigstens einem Datenspeicher gespeicherten und durch wenigstens eine vorbestimmte Position gekennzeichneten, Geo-Objekt korrelieren und der Erzeugung eines Fehlersignals in Abhängigkeit von einer fehlenden oder bestehenden räumlichen Korrelation wenigstens einer, einen ersten Abschnitt des zurückgelegten Weges vor der Lücke kennzeichnenden, ersten Korrelationsposition und wenigstens einer, einen zweiten Abschnitt des zurückgelegten Weges nach der Lücke kennzeichnenden, zweiten Korrelationsposition mit wenigstens einem gespeicherten Geo-Objekt.

Vorzugsweise sind in dem Datenspeicher mehrere, durch jeweils wenigstens eine vorbestimmte Position gekennzeichnete, Geo-Objekte gespeichert.

Erfindungsgemäß ist das erfindungsgemäße Verfahren gekennzeichnet durch den Schritt der Bestimmung eines Abstandes zwischen wenigstens einer, einen ersten Abschnitt des zurückgelegten Weges vor der Lücke kennzeichnenden, ersten Abstandsposition und wenigstens einer, einen zweiten Abschnitt des zurückgelegten Weges nach der Lücke kennzeichnenden, zweiten Abstandsposition, wobei die Erzeugung eines Fehlersignals dann erfolgt, wenn (i) keine räumliche Korrelation der ersten und zweiten Korrelationsposition mit wenigstens einem gespeicherten Geo-Objekt ermittelt werden konnte und (ii) der bestimmte Abstand größer ist als ein vorgegebener unterer Höchstabstand oder wenn (iii) eine räumliche Korrelation der ersten und zweiten Korrelationsposition mit wenigstens einem gespeicherten Geo-Objekte ermittelt werden konnte und (iv) der bestimmte Abstand nicht hinreichend mit einem Korrelationsabstand übereinstimmt, der mit wenigstens einem korrelierenden gespeicherten Geo-Objekte verknüpft ist, das mit der ersten und/ oder zweiten Korrelationsposition räumlich korreliert.

Weitere Ausprägungen des erfindungsgemäßen Verfahrens sind den Merkmalen der erfindungsgemäßen Datenverarbeitungseinrichtung gemäß vorgesehen.

Nachfolgend wird die Erfindung anhand zweier nicht als einschränkend anzusehender Ausführungsbeispiele näher beschrieben. Dazu zeigen schematisch
- Fig. 1: sowohl eine dezentrale erfindungsgemäße Datenverarbeitungseinrichtung gemäß einem ersten Ausführungsbeispiel als auch eine Positionsbestimmungseinrichtung gemäß einem zweiten Ausführungsbeispiel,
- Fig. 2: ein erfindungsgemäßes System mit einer zentralen erfindungsgemäßen Datenverarbeitungseinrichtung gemäß dem zweiten Ausführungsbeispiel,
- Fig. 3a: eine Reihe von Standortpositionen eines ersten zurückgelegten Weges, denen gemäß dem ersten Ausführungsbeispiel ein erstes Geo-Objekt und ein zweites Geo-Objekt zugeordnet sind, und

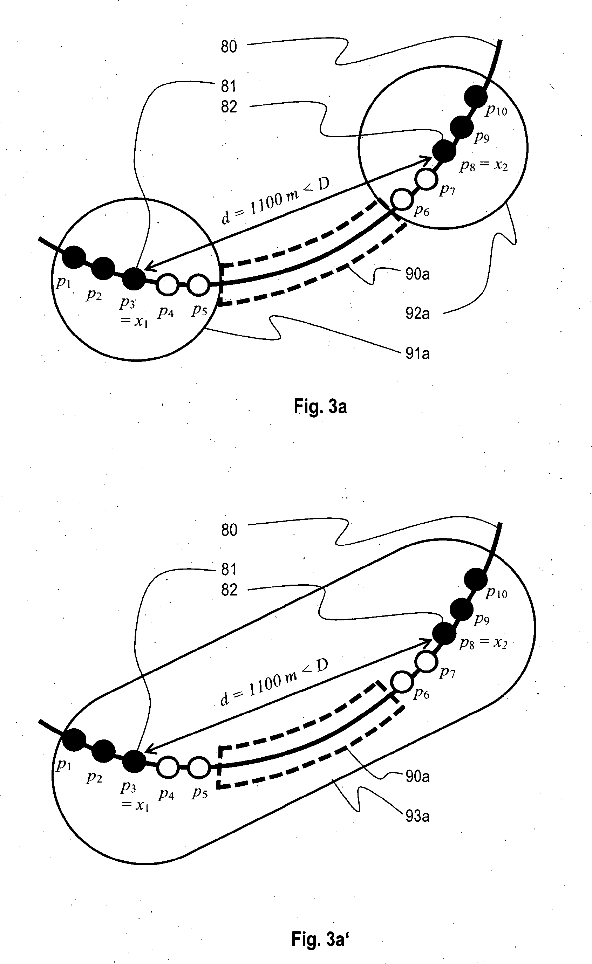

- Fig. 3a': eine Reihe von Standortpositionen des ersten zurückgelegten Weges, denen gemäß einer ersten Variante des ersten Ausführungsbeispiels ein gemeinsames Geo-Objekt zugeordnet ist,

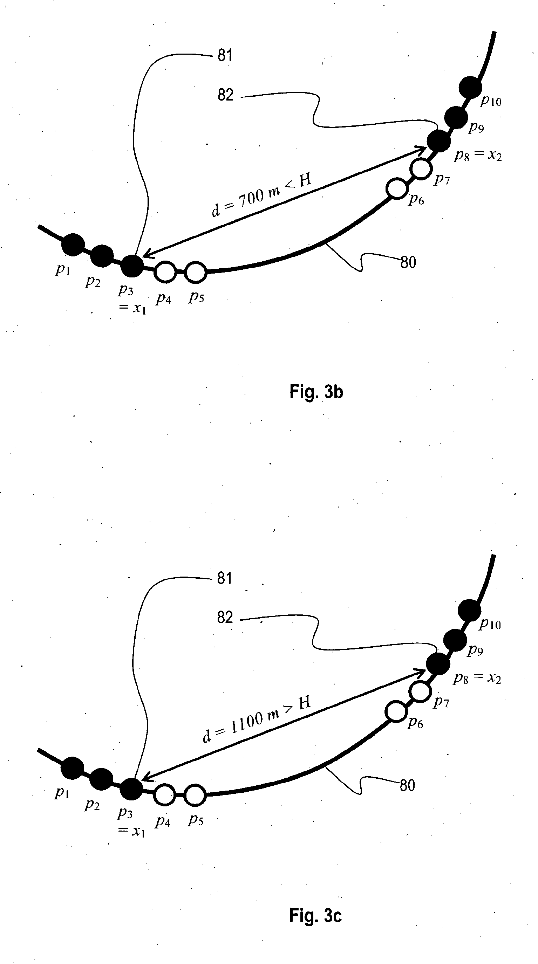

- Fig. 3b: eine Reihe von Standortpositionen eines zweiten zurückgelegten Weges, denen gemäß dem ersten Ausführungsbeispiel kein Geo-Objekt zugeordnet ist,
- Fig. 3c: eine Reihe von Standortpositionen eines dritten zurückgelegten Weges, denen gemäß dem ersten Ausführungsbeispiel kein Geo-Objekt zugeordnet ist,

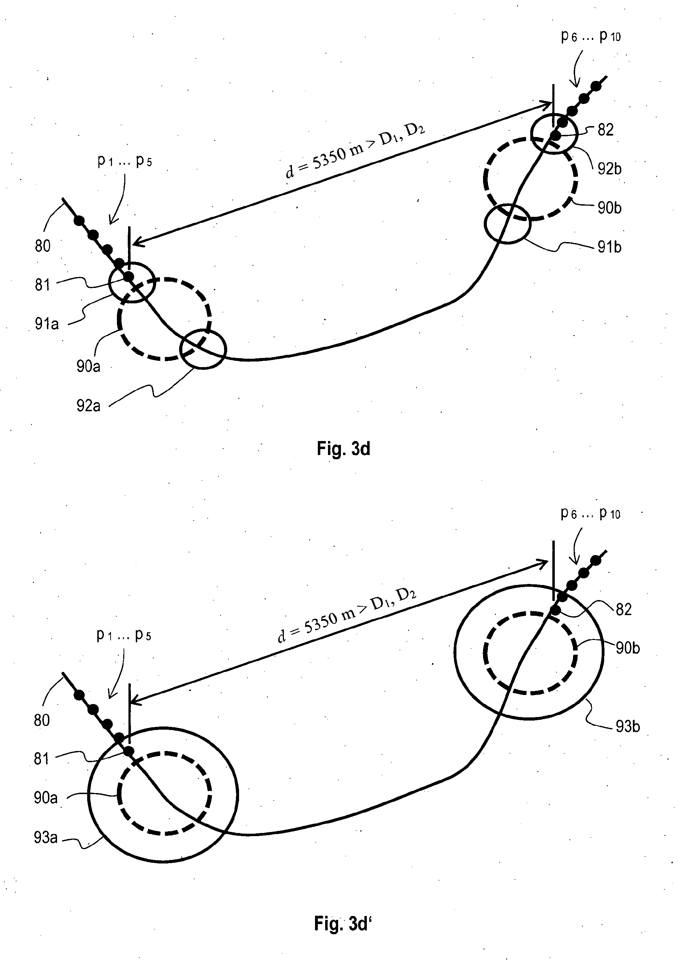

- Fig. 3d: eine Reihe von Standortpositionen eines vierten zurückgelegten Weges, denen gemäß dem ersten Ausführungsbeispiel ein erstes Partner-Geo-Objekt und ein zweites Partner-Geo-Objekt verschiedener Geo-Objekt-Gruppen zugeordnet sind,
- Fig. 3d': eine Reihe von Standortpositionen eines vierten zurückgelegten Weges, denen gemäß dem ersten Ausführungsbeispiel ein erstes Solitär-Geo-Objekt und ein zweites Solitär-Geo-Objekt zugeordnet sind,

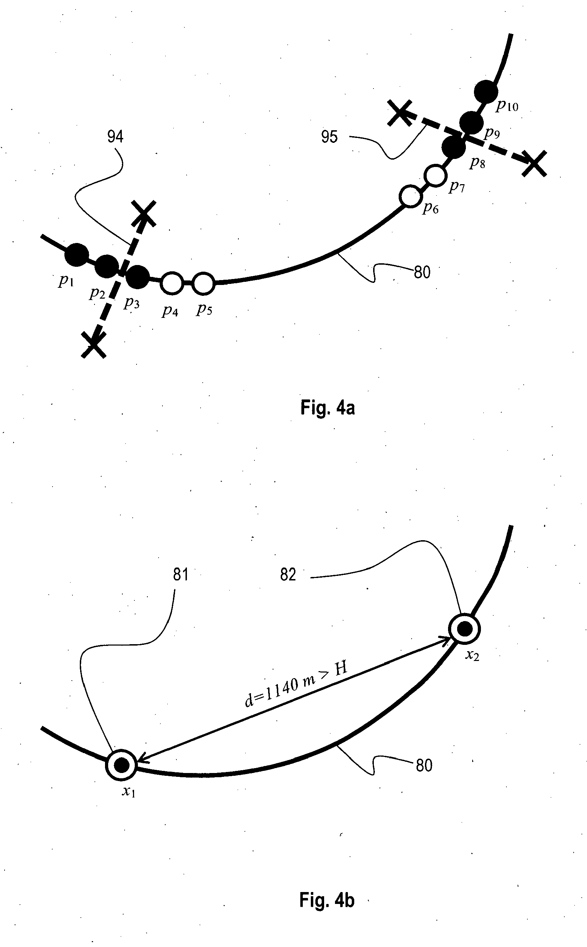

- Fig. 4a: eine Reihe von Standortpositionen eines zurückgelegten Weges, denen gemäß dem zweiten Ausführungsbeispiel ein erstes Geo-Objekt und ein zweites Geo-Objekt zugeordnet ist, und
- Fig. 4b: eine erste und eine zweite Alternativposition des gemäß dem zweiten Ausführungsbeispiel zurückgelegten Weges,

Gleiche oder gleich wirkende Komponenten verschiedener Figuren sind mit denselben Bezugszeichen versehen.

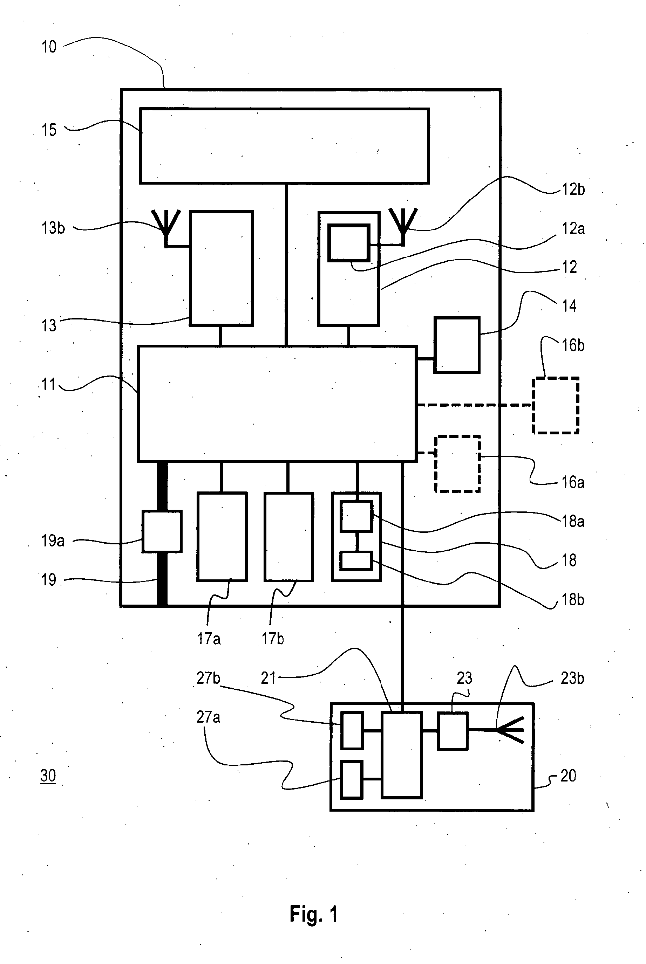

Fig. 1 zeigt schematisch eine vom Aufbau, jedoch nicht von der Ausbildung, her die im ersten und zweiten Ausführungsbeispiel identische Ausführungsform einer Fahrzeugeinrichtung 30 vom selbstverortenden Typ, die im ersten Ausführungsbeispiel eine dezentrale Variante der erfindungsgemäßen Datenverarbeitungseinrichtung bildet und im zweiten Ausführungsbeispiel die erfindungsgemäße Positionsbestimmungseinrichtung. Die Fahrzeugeinrichtung 30 umfasst ein Fahrzeuggerät 10 mit einem Fahrzeuggerät-Prozessor 11 sowie ein DSRC-Kommunikationsmodul 20 zur DSRC-Kommunikation (DSRC = dedicated short range communication), das mit dem Fahrzeuggerät 10 datentechnisch gekoppelt ist. Optional umfasst die Fahrzeugeinrichtung 30 außerdem einen Weggeber 16b (beispielsweise ein Kilometerzähler, ein Hodometer, ein Weglängenmesser oder ein Wegstreckenzähler), der ebenfalls datentechnisch mit dem Fahrzeuggerät 10 gekoppelt ist, und dessen strichlinierte Umrissdarstellung seinen optionalen, d. h. nicht zwingenden, Charakter verdeutlicht. Anstelle des Weggebers 16b kann auch ein Tachometer (nicht dargestellt) vorgesehen sein, das Impulssignale (sogenannte "wheel ticks") an den Fahrzeuggerät-Prozessor 11 abgibt, der die Frequenzen (inverse Zeitabstände) der Signale mit einem Kalibrierfaktor (sogenannte "wheel tick rate") multipliziert und damit zu Geschwindigkeitsmesswerten gelangt, aus denen zeitintervallweise die zurückgelegten Weglängen bestimmt werden können. Datentechnische Kopplungen zwischen datentechnisch miteinander gekoppelten Komponenten sind in Fig. 1 durch Verbindungsstriche zwischen den gekoppelten Komponenten verdeutlicht. Sie können durch Schnittstellen, Verbindungsleitungen oder Drahtlos-Kommunikationsmittel (z. B. bluetooth) realisiert sein. Der Fahrzeuggerät-Prozessor 11 ist durch die Ausführung eines Computerprogramms, das zur Ausführung aus dem Daten-Schreib-Lese-Speicher 17a in den Arbeitsspeicher 17b geladen wird, ausgebildet, Daten an den DSRC-Kommunikationsmodul-Prozessor 21 des DSRC-Kommunikationsmoduls 20 zu senden und von ihm Daten zu empfangen. Entsprechend ist der DSRC-Kommunikationsmodul-Prozessor 21 durch die Ausführung eines im DSRC-Kommunikationsmodul-Daten-Schreib-Lese-Speicher 27a gespeicherten Computerprogramms ausgebildet, Daten von dem Fahrzeuggerät-Prozessor 11 zu empfangen und an diesen zu senden.

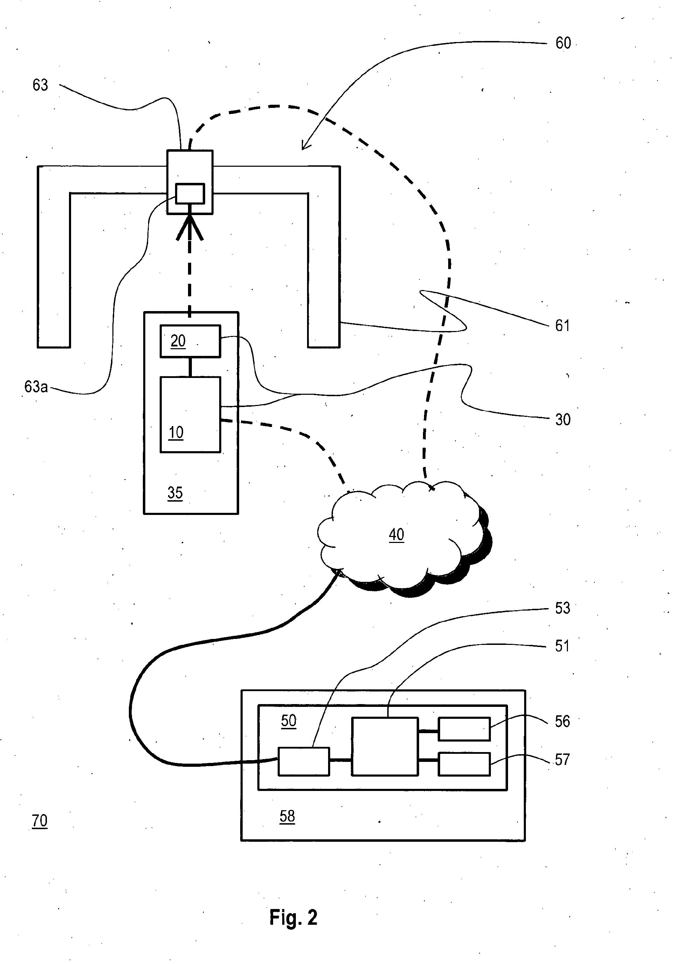

Ein GNSS-Positionsbestimmungsmodul 12 empfängt mittels seiner GNSS-Empfangsantenne 12b Signale von nicht dargestellten Satelliten eines Globalen Navigationssatellitensystems (GNSS), beispielsweise GPS, und ermittelt aus den empfangenen Satellitensignalen mittels ihres GNSS-Empfängers 12a seine GNSS-Position - und damit die GNSS-Position eines Fahrzeugs (nur dargestellt bezüglich des zweiten Ausführungsbeispiels mit Bezugszeichen 35 in Fig. 2), von dem die Fahrzeugeinrichtung 30 mitgeführt wird.

Die durch das GNSS-Positionsbestimmungsmodul 12 ermittelte GNSS-Position wird dem Fahrzeuggerät-Prozessor 11 bereitgestellt und bildet entweder bereits die erfindungsgemäße Standortposition oder eine vorläufige Position, die durch den Fahrzeuggerät-Prozessor 11 anhand von Fahrtrichtungsänderungswerten, die von einem - optionalen - Gyroskop 16a des Fahrzeuggerätes bereitgestellt werden, und anhand von relativen Weglängenwerten eines in einem bestimmten Zeitrahmen zurückgelegten Weges, die von dem optionalen Weggeber 16b bereitgestellt werden, im Zuge eines als Koppelortung an sich bekannten Verfahrens weiter zu einer gegenüber der GNSS-Position genaueren Koppelortungsposition verarbeitet werden, die schließlich als erfindungsgemäße Standortposition gilt.

Alternativ dazu können die Signale des Gyroskops 16a und des Weggebers 16b anstatt auf den Prozessor 11 auf das GNSS-Positionsbestimmungsmodul 12 geleitet werden, wobei das GNSS-Positionsbestimmungsmodul 12 die Koppelortung durchführt und die aus der Koppelortung resultierende Koppelortungsposition als erfindungsgemäße Standortposition dem Fahrzeuggerät-Prozessor 11 bereitstellt. Diese Alternative ist nicht in Fig. 1dargestellt.

Im Falle der Koppelortung gilt - unabhängig davon, ob die Koppelortung durch den Fahrzeuggerät-Prozessor 11 oder das GNSS-Positionsbestimmungsmodul 12 durchgeführt wird - die Koppelortungsposition als Standortposition.

Im weiteren Verlauf wird in Bezug auf beide Ausführungsbeispiele stellvertretend für beide Möglichkeiten der Standortpositionsbestimmung mit oder ohne Koppelortung nur noch davon gesprochen, dass das GNSS-Positionsbestimmungsmodul 12 die Standortposition in Form der GNSS-Position bereitstellt.

Die Bestimmung von Standortpositionen durch das GNSS-Positionsbestimmungsmodul 12 (und damit auch durch die das Fahrzeuggerät 10 und durch die Fahrzeugeinrichtung 30) erfolgt wiederholt - beispielsweise im Sekundentakt - insbesondere im Laufe der Fortbewegung des Fahrzeugs 35.

Der Fahrzeuggerät-Prozessor 11 ist an einen Mobilfunk-Sendeempfänger 13 gekoppelt, der eine Sendeempfangsantenne 13b zum Versenden und Empfangen von Nachrichten in Form von Funksignalen aufweist. Mittels dieses Mobilfunk-Sendeempfängers 13 ist es dem Fahrzeuggerät 10 gemäß dem ersten Ausführungsbeispiel (dezentrale Fehlfunktionsermittlung) möglich - ohne dass dies nötig wäre -, Fehlersignale, die die mangelnde Betriebsfähigkeit der Fahrzeugeinrichtung 30, insbesondere ihres Positionsbestimmungsmoduls 12, dokumentieren, an eine zentrale Datenverarbeitungsanlage (nicht dargestellt) zu versenden.

Im Falle des zweiten Ausführungsbeispiels (zentrale Fehlfunktionsermittlung) wird es dem Fahrzeuggerät 10 mit dem Mobilfunk-Sendeempfänger 13möglich, Daten der durch das Positionsbestimmungsmodul 12 ermittelten Standortpositionen an die zentrale Datenverarbeitungseinrichtung 50 einer Mautzentrale 58 (dargestellt in Fig. 2) zu versenden.

Mittels des DSRC-Kommunikationsmoduls 20 ist es dem Fahrzeuggerät 10 gemäß dem ersten Ausführungsbeispiel (dezentrale Fehlfunktionsermittlung) möglich - ohne dass dies nötig wäre -, Fehlersignale, die die mangelnde Betriebsfähigkeit der Fahrzeugeinrichtung 30, insbesondere ihres Positionsbestimmungsmoduls 12, dokumentieren, an eine straßenseitige DSRC-Kommunikationseinrichtung zu senden.

Im Falle des zweiten Ausführungsbeispiels (zentrale Fehlfunktionsermittlung) wird es dem Fahrzeuggerät 10 mit dem DSRC-Kommunikationsmodul 20 möglich, Daten der durch das Positionsbestimmungsmodul 12 ermittelten Standortpositionen an eine straßenseitige DSRC-Kommunikationseinrichtung 63a eines an einer Kontrollbrücke 61 befestigten Kontrollgeräts 63 zu senden, welches die ermittelten Standortpositionen beispielsweise über das Mobilfunknetz 40 an die zentrale Datenverarbeitungseinrichtung 50 (dargestellt in Fig. 2) weiterleitet.

Das DSRC-Kommunikationsmodul 20 ist beabstandet von dem Fahrzeuggerät 10 derart an der Innenseite der Frontscheibe des Fahrzeugs 35 so befestigt, dass der DSRC-Sendeempfänger 23 mittels seiner DSRC-Sende- und Empfangsmittel 23b mit einer außerhalb des Fahrzeugs 35 angeordneten straßenseitigen DSRC-Kommunikationseinrichtung 63a eines Kontrollgerätes 63 einer straßenseitigen Einrichtung 60 einer kommunizieren kann. Ein DSRC-Kommunikationsträger ist Mikrowelle im Frequenzbereich von 5,8 GHz. Alternativ oder kumulativ ist als DSRC-Kommunikationsträger Infrarotlicht (z. B. 850 nm) möglich. Insbesondere kann das DSRC-Sende- und Empfangsmittel 23b mehrteilig ausgebildet sein und ein Sendemittel (Sendeantenne im Falle von Mikrowellen-DSRC-Kommunikation, IR-Leuchtdiode (IR-LED) im Falle einer Infrarot-DSRC-Kommunikation) und ein Empfangsmittel (Empfangsantenne im Falle von Mikrowellen-DSRC-Kommunikation, IR-Photodiode (IR-PD) im Falle einer Infrarot-DSRC-Kommunikation) umfassen. Im ersten Ausführungsbeispiel der dezentralen Fehlfunktionsermittlung kann die Fahrzeugeinrichtung 30 auch darauf beschränkt sein, das Fehlersignal dezentral, z. B. auf dem Fahrzeuggerät 10 zu erzeugen und wiederzugeben. Weder ein Mobilfunk-Sendeempfänger 13 noch ein DSRC-Kommunikationsmodul müssen dazu in der Fahrzeugeinrichtung vorhanden sein.

Im zweiten Ausführungsbeispiel der zentralen Fehlfunktionsermittlung ist es nötig, dass die Fahrzeugeinrichtung wenigstens eine der beiden Kommunikationseinrichtungen - Mobilfunk-Sendeempfänger 13 und DSRC-Kommunikationsmodul 20 - umfasst, um Standortpositionen an die zentrale Datenverarbeitungseinrichtung 50 (siehe Fig. 2) zu senden.

Der Fahrzeuggerät-Prozessor 11 ist an ein optional von dem Fahrzeuggerät 10 umfasstes Sicherheitsmodul 18 gekoppelt, dessen strichlinierte Umrissdarstellung seinen optionalen, d. h. nicht zwingenden, Charakter verdeutlicht und das als eigenständige Datenverarbeitungseinheit (beispielsweise als eine sogenannte Chipkarte) ausgebildet ist, die wenigstens ein autonomes Steuermodul 18a und einen Speicherbereich 18b aufweist, wobei das autonome Steuermodul 18a dazu konfiguriert ist, Anfragen nach einer Herausgabe von Daten aus dem Speicherbereich 18b und/ oder der Änderung oder Aufnahme von Daten im Speicherbereich 18b nur gegen eine Authentifizierung auszuführen. Die Durchführung der Authentifizierungsprozedur kann durch die Analyse einer digitalen Signatur mittels eines vom Signierenden im Speicherbereich 18b des Sicherheitsmoduls 18 abgelegten öffentlichen Schlüssels erfolgen.

Anstelle des Sicherheitsmoduls 18 kann ein kryptographischer Datenspeicher (nicht dargestellt) vorgesehen sein, in den der Prozessor 11 Daten nur mit entsprechender Authentifizierung verschlüsselt ablegen kann und entschlüsselnd auslesen kann.

Beispielsweise kann eine Nutzerkennung (z. B. eine Kundennummer des Fahrers), eine Fahrzeugeinrichtungskennung (eine Seriennummer des Fahrzeuggeräts 10 oder eine Mobilfunknummer eines Mobilfunk-Sendeempfängers 13) der Fahrzeugeinrichtung 30, eine Fahrzeugkennung des Fahrzeugs 35, eine Gewichtsklasse (oder: zulässiges Gesamtgewicht), eine Achsklasse (oder: Achszahl) und/ oder eine Schadstoffklasse in dem Speicherbereich 18b des Sicherheitsmoduls 18 gespeichert sein..

Alternativ oder optional können diese Kennungen und Klassen in dem Daten-Schreib-Lese-Speicher 17a gespeichert sein.

Die Kennungen dienen zur Identifizierung des Absenders von Nachrichten, die in der zentralen Datenverarbeitungseinrichtung 50 von der Fahrzeugeinrichtung 30 empfangen werden. Die Fahrzeugdaten der Gewichtsklasse, Achsklasse und Schadstoffklasse sind Parameter, die in die Berechnung der Höhe einer Maut einfließen, die für einen befahrenen Streckenabschnitt erhoben wird, mit dem zumindest eine der Standortpositionen räumlich korreliert. Die entsprechende Prüfung auf räumliche Korrelation kann in an sich bekannter Weise im Falle der dezentralen Mauterhebung durch den Prozessor 11 des Fahrzeuggeräts 10 und/ oder im Falle der zentralen Mauterhebung nach Übertragung der Standortpositionen an die zentrale Datenverarbeitungseinrichtung 50 durch den zentralen Prozessor 51 der zentralen Datenverarbeitungseinrichtung anhand von Vergleichen der Standortpositionen mit in dem Daten-Schreib-Lese-Speicher 17a beziehungsweise in dem ersten zentralen Datenspeicher 56 gespeicherten, durch wenigstens eine vorbestimmte Position gekennzeichneten, Geo-Objekten erfolgen, die mit jeweils einem mautpflichtigen Streckenabschnitt (konkret: dessen Länge oder Grundgebühr) verknüpft sind.

Das Fahrzeuggerät 10 weist zur Stromversorgung eine Batterie 19a, insbesondere ein wiederaufladbare Batterie (z. B. ein Akkumulator) auf, sowie einen Stromanschluss 19, über den sowohl das Fahrzeuggerät 10 alternativ zur Batterie 19a mit Strom des Fahrzeug-Bordnetzes versorgt werden kann. Ist die Batterie 19a als Akkumulator ausgebildet, so kann dieser über den Stromanschluss 19 wieder aufgeladen werden. Über die Schnittstelle zwischen dem Fahrzeuggerät 10 und dem . DSRC-Kommunikationsmodul 20 wird auch das DSRC-Kommunikationsmodul 20 mit Strom versorgt.

Die Fahrzeugeinrichtung 30 ist im ersten Ausführungsbeispiel ausgebildet, die Schritte des erfindungsgemäßen Verfahrens gemäß dem ersten Ausführungsbeispiel durchzuführen, und im zweiten Ausführungsbeispiel ausgebildet, der zentralen Datenverarbeitungseinrichtung 50 die Daten der Standortpositionen zur Durchführung der Schritte des erfindungsgemäßen Verfahrens gemäß dem zweiten Ausführungsbeispiel zu übermitteln.

### ERSTES AUSFÜHRUNGSBEISPIEL

In diesem ersten Ausführungsbeispiel gilt das GNSS-Positionsbestimmungsmodul 12 als erfindungsgemäße Positionsbestimmungseinrichtung und das Fahrzeuggerät 10, welche jeweils das GNSS-Positionsbestimmungsmodul 12 umfassen, als erfindungsgemäße Datenverarbeitungseinrichtung, welche mittels der erfindungsgemäßen Positionsbestimmungseinrichtung die Standortpositionen erzeugt.

Gleichwohl können die Fahrzeugeinrichtung 30 und das Fahrzeuggerät 10 als erfindungsgemäßes System aufgefasst werden, in dem der Fahrzeuggerät-Prozessor 11 als erfindungsgemäße Datenverarbeitungseinrichtung gilt. Ein erfindungsgemäßes System schließt auch den nicht dargestellten Fall ein, dass das GNSS-Positionsbestimmungsmodul 12 nicht von dem Fahrzeuggerät 10 umfasst ist, sondern beabstandet von dem Fahrzeuggerät von dem Fahrzeug mitgeführt wird, das auch das Fahrzeuggerät mitführt, und beispielsweise im Funkwege Standortpositionen an das Fahrzeuggerät ohne GNSS-Positionsbestimmungsmodul sendet.

in dem Daten-Schreib-Lese-Speicher 17a des Fahrzeuggeräts 10 der in Fig. 1 schematisch dargestellten Fahrzeugeinrichtung 30 ist eine Datenbank mit Geo-Objekten gespeichert, die die geographische Lage der Tunneleingänge und Tunnelausgänge aller bekannten Tunnel von mehr als einem Kilometer Länge innerhalb eines geographischen Gebietes, für den der Betrieb der Fahrzeugeinrichtung vorgesehen ist, durch Geo-Kreise repräsentiert, die jeweils durch ein vorbestimmte Position als Mittelpunkt, eine Längenangabe als Radius (beispielsweise 50 Meter) sowie eine eindeutige Kennung gekennzeichnet sind. Tunnel, zu denen Geo-Objekte in der Fahrzeugeinrichtung gespeichert sind, werden als registrierte Tunnel bezeichnet.

Außerdem ist ein vorgegebener unterer Höchstabstand mit dem Wert von H = 1000 Metern in dem Daten-Schreib-Lese-Speicher 17a gespeichert.

Während des Betriebs der Fahrzeugeinrichtung 30 in einem Fahrzeug, das einen Weg 80 zurücklegt, ist das GNSS-Positionsbestimmungsmodul 12 ausgebildet, Navigationssignale von Navigationssatelliten eines Globalen Navigatibnssatellitensystems (GNSS) mittels der GNSS-Empfangsantenne 12b zu empfangen, diese mittels des GNSS-Empfängers 12a zu decodieren und aus den im Zuge der Decodierung gewonnenen Größen zeitlich aufeinander folgend im Sekundentakt Standortpositionen p ᵢ zu bestimmen, die den Verlauf zumindest von Abschnitten eines der Fahrzeugeinrichtung zurückgelegten Weges 80 repräsentieren, und die bestimmten Standortpositionen p ᵢ über eine. Schnittstelle den Fahrzeuggerät-Prozessor 10 bereitzustellen.

### a) Fahrt durch einen registrierten Tunnel

So empfängt im Hinblick auf Fig. 3a bei einer Fahrt durch ein Störungsgebiet 90 in Form eines registrierten Tunnels 90a von 1100 m Länge der Fahrzeuggerät-Prozessor 11 von dem GNSS-Positionsbestimmungsmodul 12 vor dem Tunneleingang zum Zeitpunkt t₁ = 1s die Standortposition p ₁, zum Zeitpunkt t₂ = 2s die Standortposition p ₂, zum Zeitpunkt t₃ = 3s die Standortposition p₃.

Zusätzlich zu den Koordinaten der bestimmten Standortpositionen pᵢ bestimmt das GNSS-Positionsbestimmungsmodul 12 für jede Standortposition wenigstens ein Gütemaß qᵢ der bestimmten Standortpositionen pᵢ und gibt dieses Gütemaß q ᵢ zusammen mit der bestimmten Standortposition p i an den Fahrzeuggerät-Prozessor 11 aus. Das Gütemaß qᵢ hängt beispielsweise von der Anzahl der Navigationssatelliten, von den Navigationssignale empfangen werden, ihrer absoluten und relativen Stellung zueinander und zum GNSS-Positionsbestimmungsmodul und der Empfangsqualität der Navigationssignale ab. Ein solches Gütemaß qᵢ ist beispielsweise die HDOP (horizontal dilution of precision), die angibt, wie hoch die Unsicherheit der bestimmten Standortposition ist. Als Mindestgüte q ₖᵣᵢₜ ist eine HDOP von 3,0 im Fahrzeuggerät 10 gespeichert. Die ersten drei Standortpositionen p ₁, p ₂, und p ₃ besitzen diese Mindestgüte, weil ihre HDOP-Werte jeweils kleiner als 3,0 sind.

Andere Gütemaße qᵢ sind dem Fachmann aus dem Stand der Technik bekannt und können alternativ oder kumulativ zur HDOP als alternatives oder kumuliertes Gütemaß qᵢ verwendet werden.

in der Nähe zum Tunneleingang wird diese Mindestgüte bei den nachfolgend bestimmten Positionen p₄ und p₅ nicht mehr erreicht, weil einige Satelliten durch den Berg, durch den der Tunnel 90a führt, abgeschattet werden. Eine Standortposition pᵢ mangelnder Mindestgüte wird in Fig. 3a und in den übrigen Figuren durch einen ungefüllten Kreis dargestellt, während eine Standortposition pᵢ vorgegebener Mindestgüte durch einen gefüllten Kreis dargestellt wird.

Im vorliegenden Ausführungsbeispiel bedeuten weniger als drei Standortpositionen ohne vorgegebene Mindestgüte in Folge allerdings noch keine Lücke in einer Reihe von Standortpositionen p i, wenn unmittelbar nach zwei Standortpositionen ohne vorgegebene Mindestgüte eine Standortposition mit vorgegebener Mindestgüte erfasst werden würde.

Wenn mangels Navigationssatellitensignalen innerhalb des Tunnels 90a keine Bestimmung einer Standortposition p ᵢ möglich ist, gibt das GNSS-Positionsbestimmungsmodul 12. keine Standortposition aus, und der Fahrzeuggerät-Prozessor 11 erhält keine Standortposition. Für jede Sekunde, in der der Fahrzeuggerät-Prozessor 11 keine Standortposition erhält, trägt der Fahrzeuggerät-Prozessor in die Reihe der Standortpositionen pᵢ, die zumindest vorübergehend im Sicherheitsmodul 18 gespeichert werden, einen Vermerk ein, der für eine fehlende Standortpositiön repräsentativ ist. Dies kann beispielsweise das Koordinatenpaar von (Longitude, Latitude) = (0,0) sein, an dem bekanntermaßen kein mautpflichtiger Streckenabschnitt vorliegt.

Über eine Dauer von einer Minute registriert der Fahrzeuggerät-Prozessor 11 sechzig fehlende Standortpositionen. Bei einer angenommenen Geschwindigkeit von 72 km/h des Fahrzeugs, von dem die Fahrzeugeinrichtung 30 mitgeführt wird, entspricht dies einer Tunnellänge von 1,2 Kilometern..

Am Tunnelausgang sind für das GNSS-Positionsbestimmungsmodul 12 wieder genug Navigationssatelliten sichtbar, um Standortpositionen p ₆ und p₇ zu bestimmen, jedoch nicht genug, um die erforderliche Mindestgüte einer HDOP von unter 3,0 zu erreichen.

Nach ausreichender Entfernung des Fahrzeugs vom Tunnelausgang, sind für das GNSS-Positionsbestimmungsmodul 12 wieder genug Navigationssatelliten sichtbar, um Standortpositionen p ₈, p₉ und p ₁₀ zu bestimmen, die eine ausreichende Mindestgüte einer HDOP von unter 3,0 aufweisen.

Alternativ werden von dem GNSS-Positionsbestimmungsmodul 12 nur vorläufige Standortpositionen - soweit bestimmbar - im Sekundentakt an den Fahrzeuggerät-Prozessor 11 übermittelt, aus denen der Fahrzeuggerät-Prozessor 11 nach Maßgabe einer Vorschrift unter Bildung von Mittelwerten und/ oder Interpolationswerten der vorläufigen Standortpositionen eine Reihe von Standortpositionen pᵢ bildet, die voneinander durch eine örtliche Differenz beabstandet sind, die größer als eine Mindestdifferenz und kleiner als eine Höchstdifferenz ist oder einer vorgegeben Differenz entspricht. Dies ist im Falle eines Staus oder einer verhältnismäßig geringen Geschwindigkeit von etwa Schrittgeschwindigkeit von Vorteil, weil auf diese Weise der Datenumfang der Positionsdaten beschränkt werden kann, ohne wesentliche Einbußen hinsichtlich der Genauigkeit der durch die Standortpositionen pᵢ gebildeten Repräsentation des zurückgelegten Weges 80 zu erleiden. Beispielsweise ist die Mindestdifferenz 10 Meter und die Höchstdifferenz 20 Meter. Übertragen auf eine Reihe von Standortpositionen pᵢ im Sekundentakt bedeutet dies eine Fahrgeschwindigkeit von 36 bis 72 km/ h. Der niedrigen Fahrgeschwindigkeit kann bei Bedarf durch Verknüpfung der Standortpositionen pᵢ mit gemittelten und/ oder interpolierten Zeitwerten der vorläufigen Standortpositionen Rechnung getragen werden.

Der Fahrzeuggerät-Prozessor 11 ist ausgebildet, bei dreißig in Folge ausbleibenden Standortpositionen, deren Bereitstellung durch das GNSS-Positionsbestimmungsmodul 12 im Sekundentakt erwartet wurde, eine Positionsbestimmungsunterbrechungsphase zu registrieren, die bei Wiedereinsetzen des Erhalts von Standortpositionen pᵢ maßgeblich für eine Lücke in der Reihe empfangener Standortpositionen ist. Bei einer Geschwindigkeit von 144 km/ h würde dies einer Tunnellänge von mindestens 600 Metern entsprechen.

Der Fahrzeuggerät-Prozessor 11 ist ferner ausgebildet, eine Positionsbestimmungsunterbrechungsphase zu registrieren, wenn über eine zurückgelegte Strecke von mehr als 600 Metern mehr als 50% der bereitgestellten Standortpositionen nicht die erforderliche Mindestgüte aufweisen und/ oder mehr als 50% der erwarteten Bereitstellungen an Standortpositionen ausbleiben.

Der Fahrzeuggerät-Prozessor 11 ist ferner ausgebildet, eine Positionsbestimmungsunterbrechungsphase zu registrieren, wenn über eine Strecke von (600 - x) Metern mehr als 50% der bereitgestellten Standortpositionen nicht die erforderliche Mindestgüte aufweisen und/ oder mehr als 50% der erwarteten Bereitstellungen an Standortpositionen ausbleiben, und über eine Zeitdauer von (x / 20 m/s) Sekunden keine Standortposition durch das GNSS-Positionsbestimmungsmodul 12 bereitgestellt wird.

Im vorliegenden Fall stellt der Fahrzeuggerät-Prozessor 11 eine Positionsbestimmungsunterbrechungsphase daran fest, dass seit der letzten Standortposition p ₃ von vorgegebener Mindestgüte über eine Strecke von 40 Metern vor dem Tunneleingang mehr als 50% der der bereitgestellten Standortpositionen (nämlich 2 von 2, d. h. 100%) nicht die erforderliche Mindestgüte aufweisen und unmittelbar anschließend über eine Zeitdauer von (580 m / 20 m/s = 29 Sekunden) keine Standortpositionen bereitgestellt werden. Das Fahrzeug hat in dieser Zeit 580 Meter im Tunnel 90a zurückgelegt.

Infolge dieser Feststellung lädt der Fahrzeuggerät-Prozessor die Standortposition p₃ als erste Abstandsposition 81 (x₁) in. den Arbeitsspeicher 17b.

Nach Feststellung der Positionsbestimmungsunterbrechungsphase wartet der Fahrzeuggerät-Prozessor 11 auf die nächste Standortposition von ausreichender Güte, die durch das GNSS-Positionsbestimmungsmodul 12 bereitgestellt wird. Bleibt eine solche nächste Standortposition von ausreichender Güte über einen Zeitraum von mehr als 24 Stunden seit der Feststellung der Positionsbestimmungsunterbrechungsphase aus, so erzeugt der Fahrzeuggerät-Prozessor ein Fehlersignal, welches mittels der Anzeigeeinrichtung 15 in Form einer Fehlermeldung dem Nutzer auf dem Fahrzeuggerät 10 sichtbar gemacht wird.

Im vorliegenden Fall erhält der Fahrzeuggerät-Prozessor 11 vierunddreißig Sekunden nach der Feststellung der Positionsbestimmungsunterbrechungsphase die Standortposition p ₈ von dem GNSS-Positionsbestimmungsmodul 12 übermittelt, welche seit Beginn der Positionsbestimmungsunterbrechungsphase die erste Standortposition von der vorgegebenen Mindestgüte ist.

Damit registriert der Fahrzeuggerät-Prozessor, dass die Positionsbestimmungsunterbrechungsphase beendet ist, wodurch der Fahrzeuggerät-Prozessor 11 die erfindungsgemäße Positionsdatenlücke zwischen der Standortposition p₃ und der Standortposition p₈ feststellt.

Der Fahrzeuggerät-Prozessor 11 speichert daraufhin diese Standortposition p ₈ als zweite Abstandsposition 82 (×₂) in dem Arbeitsspeicher 17b ab.

Anschließend prüft der Fahrzeuggerät-Prozessor 11, ob die erste Abstandsposition 81 räumlich mit einem der in dem Daten-Schreib-Lese-Speicher 17a gespeicherten Geo-Kreise in dem Sinne korreliert, dass die erste Abstandsposition 81 in einem der gespeicherten Geo-Kreise liegt.

Dazu bestimmte in einem ersten Schritt der Fahrzeuggerät-Prozessor 11 durch Vergleich der ersten Abstandsposition 81 mit den Mittelpunkten aller gespeicherten Geo-Kreise, welcher nächste Geo-Kreis der ersten Abstandsposition 81 am nächsten liegt. In einem zweiten Schritt prüft der Fahrzeuggerät-Prozessor, ob der Abstand der ersten Abstandsposition 81 zum Mittelpunkt des nächsten Geo-Kreises kleiner ist als der Radius des nächsten Geo-Kreises. Im Falle dieser Tunnelfahrt stellt der Fahrzeuggerät-Prozessor 11 so fest, dass die erste Abstandsposition 81 in dem ersten Geo-Kreis mit dem Bezugszeichen 91a liegt und insofern die gefragte räumliche Korrelation zu einem der gespeicherten Geo-Kreise aufweist.

Anschließend prüft der Fahrzeuggerät-Prozessor 11, ob die zweite Abstandsposition 82 räumlich mit einem der in dem Daten-Schreib-Lese-Speicher 17a gespeicherten Geo-Kreise in dem Sinne korreliert, dass die zweite Abstandsposition 82in einem der gespeicherten Geo-Kreise liegt. Dazu bestimmt in einem dritten Schritt der Fahrzeuggerät-Prozessor 11 durch Vergleich der zweiten Abstandsposition 82mit den Mittelpunkten aller gespeicherten Geo-Kreise, welcher nächste Geo-Kreis der zweiten Abstandsposition 82 am nächsten liegt. In einem vierten Schritt prüft der Fahrzeuggerät-Prozessor, ob der Abstand der zweiten Abstandsposition82 zum Mittelpunkt des nächsten Geo-Kreises kleiner ist als der Radius des nächsten Geo-Kreises. Im Falle dieser Tunnelfahrt stellt der Fahrzeuggerät-Prozessor 11 fest, dass die zweite Abstandsposition in dem zweiten Geo-Kreis mit dem Bezugszeichen 92a liegt und insofern die gefragte räumliche Korrelation zu einem der gespeicherten Geo-Kreise aufweist.

Bei diesen Vergleichen mit Geo-Kreisen erfüllen die erste und zweite Abstandsposition 81 und 82 die Funktion der erfindungsgemäßen Korrelationspositionen.

In einem fünften Schritt prüft der Fahrzeuggerät-Prozessor 11, ob eine mit dem ersten Geo-Kreis 91a verknüpfte Partner-Kennung mit der Kennung des zweiten Geo-Kreises 92a übereinstimmt und/ oder ob eine mit dem zweiten Geo-Kreis 92a verknüpfte Partner-Kennung mit der Kennung des ersten Geo-Kreises 91a übereinstimmt.

Das ist vorliegend der Fall.

Damit ist erfindungsgemäß die Erzeugung eines Fehlersignals ausgeschlossen, weil die erste Abstandsposition 81 und die zweite Abstandsposition 81 jeweils mit einem der Geo-Objekte korrelieren, die Partner-Geo-Objekte 91a und 92a eines ihnen gemeinsamen Tunnels 90a sind.

Insofern kann der Fahrzeuggerät-Prozessor die weitere Auswertung der ersten und zweiten Abstandspositionen hinsichtlich ihres Abstandes d übergehen und die Auswertung der Tunnelfahrt abschließen, in dem er die erste und zweite Abstandsposition 81 und 82 aus dem Arbeitsspeicher 17a löscht.

Anstelle eines Attributs zur Partner-Identifikation können die Geo-Objekte jeweils mit einem Korrelationsabstand D verknüpft sein. Für Geo-Objekte 91a und 92a, die Ein- und Ausgang desselben Tunnels 90a modellieren, sind deren Korrelationsabstände vorzugsweise identisch. In diesem Fall betragen die Korrelationsabstände jeweils 1150 m.

In einem alternativen fünften Schritt nach der Bestimmung der korrelierenden Geo-Objekte 91a und 92a prüft der Fahrzeuggerät-Prozessor 11 dementsprechend, ob der Positionsabstand d von 1100 m zwischen der ersten Abstandsposition 81 und der zweiten Abstandsposition 82 mit dem Korrelationsabstand D der beiden korrelierenden Geo-Objekte 91a und 92a hinreichend übereinstimmt. Dabei gilt eine hinreichende Übereinstimmung als gegeben, wenn der Positionsabstand nicht mehr als 100 Meter von den Korrelationsabständen abweicht. Mit einer Abweichung von 50 Metern kann der Fahrzeuggerät-Prozessor 11 eine hinreichende Übereinstimmung des Positionsabstandes mit dem

Korrelationsabstand feststellen, so dass kein Fehlersignal zu erzeugen ist.

In einem alternativen Prüfungsprozess kann der Fahrzeuggerät-Prozessor 11 in einem ersten Schritt den Abstand d zwischen der ersten Abstandsposition 81 und der zweiten Abstandsposition 82 bestimmen und in einem zweiten Schritt prüfen ob der Abstand d gleich oder größer ist als der gespeicherte vorgegebene untere Höchstabstand H von 1000 Meter. Im Falle dieser Tunnelfahrt trifft dies zu, weil der Abstand d 1100 Meter beträgt. Weil damit die erste der zwei erfindungsgemäß notwendigen Bedingungen für die Erzeugung des Fehlersignals erfüllt ist, schließt sich nun die zuvor beschriebene Prüfung auf räumliche Korrelation der ersten und zweiten Abstandsposition 81 und 82 mit wenigstens einem Geo-Kreis, die - wie beschrieben - positiv ausfällt, so dass nicht beide notwendigen Bedingungen für die Erzeugung eines Fehlersignals vorliegen.

Die erfindungsgemäßen Geo-Objekte müssen nicht als Geo-Kreise ausgebildet sein, und sie müssen auch nicht als verschiedene Geo-Objekte für verschiedene Abstandspositionen vorliegen. Anhand von Fig. 3a', welche dieselben erfassten Standortposition der zuvor beschriebenen Fahrt durch ein Störungsgebiet 90a in Form eines registrierten Tunnels 90a darstellt, wird ein für die erste und zweite Abstandsposition 81 und 82 gemeinsames Geo-Objekt 93a beschrieben, das sich über den Verlauf des gesamten Tunnels 90a erstreckt und eine Zigarrenform aufweist. Dieses Geo-Objekt ist durch zwei vorbestimmte Positionen (nicht dargestellt) und einen Radius gekennzeichnet, der den Randabstand zu jedem Punkt der Verbindungslinie zwischen den zwei vorbestimmten Positionen definiert.

Bei der konsekutiven Suche nach räumlich korrelierenden Geo-Objekten wird der Fahrzeuggerät-Prozessor 11 in diesem Fall für beide Abstandspositionen 81 und 82 auf dasselbe korrelierende Geo-Objekt 93a stoßen, was er anhand der Geo-Objekt-Kennung des korrelierenden Geo-Objekts bei jeder erfolgreichen Korrelationsprüfung feststellen kann. Auf eine Abstandsbestimmung zwischen den beiden Abstandspositionen 81 und 82 kann nachfolgende verzichtet werden, weil die Korrelation beiden Abstandspositionen 81 und 82 mit einem gemeinsamen Geo-Objekt den adäquaten Abstand der beiden Abstandspositionen 81 und 82 voneinander impliziert.

Insofern ergibt sich auch für ein das Störungsgebiet des Tunnels 90a übergreifendes Geo-Objekt 93a richtigerweise die Situation, dass kein Fehlersignal zu erzeugen ist.

### b) i) Fahrt durch einen nicht registrierten Tunnel und

### ii) Fahrt mit Positionsdatenlücke auf kurzer Strecke

Eine Fahrt durch einen nicht registrierten Tunnel entspricht vom Ergebnis her einer Fahrt außerhalb eines Störungsgebietes, bei der aufgrund eines technischen Defekts (Leiterbruch oder Kurzschluss an der GNSS-Empfangsantenne) oder einer Störung (beispielsweise durch Jamming) auf einer Strecke, die kürzer ist als der vorgegebene untere Höchstabstand, keine Standortpositionen vorgegebener Mindestgüte durch das GNSS-Positionsbestimmungsmodul 12 bereitgestellt werden. Die in Fig. 3b veranschaulichte Reihe bestimmter Standortpositionen pᵢ ist damit für die beiden genannten Fahrtvarianten gültig.

Hinsichtlich der mangelnden Bestimmung von Standortpositionen unterscheiden sich diese Fahrtvarianten von der zuvor unter a) beschriebenen Fahrtvariante dadurch, dass die Bereitstellung von Standortpositionen nicht länger als 37 Sekunden ausbleibt, während denen das Fahrzeug eine Strecke von 740 Metern zurücklegt.

Der Versuch des Fahrzeuggerät-Prozessors 11, eine räumliche Korrelation der ersten Abstandsposition 81 mit einem der gespeicherten Geo-Objekte zu ermitteln, scheitert bei diesen Fahrtvarianten genauso wie der Versuch, eine räumliche Korrelation der zweiten Abstandsposition 82 mit einem der gespeicherten Geo-Objekt ermitteln, weil für Tunnel, die kürzer sind als einen Kilometer, keine entsprechenden Geo-Objekte in der Datenbank des Daten-Schreib-Lese-Speichers 17a gespeichert sind.

Damit ist eine erste der zwei notwendigen Bedingungen für die erfindungsgemäße Erzeugung des Fehlersignals erfüllt. Nach Abstandsbildung zwischen der ersten Abstandsposition 81 und der zweiten Abstandsposition 82 und Vergleich ihres Abstandes d = 700 m mit dem vorgegebenen unteren Höchstabstand von 1000 m, stellt der Fahrzeuggerät-Prozessor 11 fest, dass die zweite der zwei notwendigen Bedingungen für die erfindungsgemäße Erzeugung des Fehlersignals nicht erfüllt ist, weil der Abstand zwischen den beiden Abstandspositionen 81 und 82 kleiner als der vorgegebene untere Höchstabstand ist.

Diesbezüglich ist es vorteilhaft, den Abstandsvergleich als erste Prüfung gegenüber der räumlichen Korrelationsprüfung vorzuziehen, weil nur dann, wenn der Abstand zwischen der ersten Abstandsposition und der zweiten Abstandsposition größer ist als der vorgegebene untere Höchstabstand, eine Prüfung der Abstandspositionen auf räumliche Korrelation mit gespeicherten Geo-Objekten fällig wird und andernfalls vermieden werden kann.

### c) Fahrt mit Positionsdatenlücke auf langer Strecke außerhalb eines Tunnels

Fig. 3c veranschaulicht die Reihe von Standortpositionen, die auf einer Fahrt außerhalb eines explizit vorbekannten Störungsgebietes, bei der aufgrund eines technischen Defekts (Leiterbruch oder Kurzschluss an der GNSS-Empfangsantenne) oder einer Störung (beispielsweise durch Jamming im Fahrzeug) auf einer Strecke, die länger ist als der vorgegebene untere Höchstabstand, durch das GNSS-Positionsbestimmungsmodul 12 bereitgestellt werden. Hinsichtlich der mangelnden Bestimmung von Standortpositionen entspricht diese Fahrtvariante der zuvor unter a) beschriebenen Fahrtvariante, bei der Bereitstellung von Standortpositionen 60 Sekunden ausbleibt, während denen das Fahrzeug eine Strecke von 1200 Metern zurücklegt.

Der Versuch des Fahrzeuggerät-Prozessors 11, eine räumliche Korrelation der ersten Abstandsposition 81 mit einem der gespeicherten Geo-Objekte zu ermitteln, scheitert bei dieser Fahrtvariante genauso wie der Versuch, eine räumliche Korrelation der zweiten Abstandsposition 82 mit einem der gespeicherten Geo-Objekt ermitteln, weil außerhalb von Tunneln nicht mit einem vorhersehbaren Verlust der Fähigkeit des GNSS-Positionsbestimmungsmodul 12, die eigene Standortposition zu bestimmen, gerechnet wird. Damit ist eine erste der zwei notwendigen Bedingungen für die erfindungsgemäße Erzeugung des Fehlersignals erfüllt.

Nach Abstandsbildung zwischen der ersten Abstandsposition 81 und der zweiten Abstandsposition 82 und Vergleich ihres Abstandes d = 1100 m mit dem vorgegebenen unteren Höchstabstand von 1000 m, stellt der Fahrzeuggerät-Prozessor 11 fest, dass die zweite der zwei notwendigen Bedingungen für die erfindungsgemäße Erzeugung des Fehlersignals ebenfalls erfüllt ist, weil der Abstand zwischen den beiden Abstandspositionen 81 und 82 größer als der vorgegebene untere Höchstabstand ist.

Diesbezüglich ist es vorteilhaft, den Abstandsvergleich als erste Prüfung gegenüber der räumlichen Korrelationsprüfung vorzuziehen, weil nur dann, wenn der Abstand zwischen der ersten Abstandsposition und der zweiten Abstandsposition größer ist als der vorgegebene untere Höchstabstand, eine Prüfung der Abstandspositionen auf räumliche Korrelation mit gespeicherten Geo-Objekten fällig wird und andernfalls vermieden werden kann.

Mithin erzeugt in diesem Fall der Fahrzeuggerät-Prozessor 11 ein Fehlersignal, welches zunächst eine Zustandsänderung des Betriebsstatus, der in dem Sicherheitsmodul 18 gespeichert ist, von "entsperrt" auf "gesperrt" bewirkt. Zusätzlich wird eine Fehlermeldung auf der Anzeigeeinrichtung 15 ausgegeben, mit der der Nutzer aufgefordert wird, seine Fahrzeugeinrichtung einer Inspektion zu unterwerfen. Ferner wird die Funktion des Fahrzeuggerät-Prozessors 11, Standortpositionen von dem GNSS-Positionsbestimmungsmodul 12 zu empfangen oder aus von dem GNSS-Positionsbestimmungsmodul 12 bereitgestellten GNSS-Positionen zu bestimmen und/ oder die Standortpositionen in einer bestimmten Weise, die dem bestimmungsgemäßen Betrieb des Fahrzeuggerätes 10 entspricht, zu verarbeiten, abgestellt. Diese Verarbeitung kann das Bestimmen eines befahrenen Streckenabschnitts aus den Standortpositionen und/ oder die Übermittlung einer Fahrspurdatei mit diesen Standortpositionen an die Mautzentrale 58 betreffen.

### d) Fahrt mit Positionsdatenlücke auf langer Strecke durch zwei Tunnel

Unabhängig von einer Korrelation der ersten und zweiten Abstandsposition 81 und 82 mit irgendeinem der gespeicherten Geo-Objekte erzeugt der Fahrzeuggerät-Prozessor 11 ein Fehlersignal, wenn der Abstand zwischen der ersten und zweiten Abstandsposition 81 und 82 größer ist als ein oberer Höchstabstand, der gleich oder größer ist als der größte Korrelationsabstand aller für die betroffene Region gespeicherten'Geo-Objekte, und insbesondere größer ist als der längste Tunnel der betroffenen Region, der durch ein oder mehrere Geo-Objekte modelliert wurde. Dies ist auf die Region der Bundesrepublik Deutschland bezogen der Rennsteigtunnel mit einer Länge von 7916 Metern. Der obere Höchstabstand beträgt in diesem Fall 10 Kilometer.

Es besteht die - wenn auch selten auftretende - Möglichkeit, dass GNSS-Ausfälle und GNSS-Wiedereintritte mit Geo-Objekten zusammenfallen, die zu verschiedenen Störungsgebieten gehören. Da sich die Positionsdatenlücke in diesem Fall auch über ein Fehlergebiet erstreckt, das außerhalb eines Störungsgebietes liegt (genauer: außerhalb aller bekannten, d. h. durch Geo-Objekte modellierten, Störungsgebiete), liegt eine meldungsbedürftige systemtechnische Störung vor, für die ein Fehlersignal zu erzeugen ist. Insbesondere bei Abständen (auch Lückenlängen genannt), die kleiner sind als der obere Höchstabstand (weswegen nicht unmittelbar aufgrund der Überschreitung dieses oberen Höchstabstandes ein Fehlersignal erzeugt wird), muss eine technische Vorschrift gefunden werden, die diesen Umstand berücksichtigt.

Dazu bietet es sich zum einen an, die Geo-Objekte mit jeweils einem Korrelationsabstand zu verknüpfen, die durch die Lückenlänge nicht überschritten werden darf. Alternativ oder optional bietet sich die Definition von Solitär-Geo-Objekten oder Partner-Geo-Objekten an.

Diese.Varianten werden nun anhand der Fig. 3d und Fig. 3d' näher erläutert:
Im Falle der Fig. 3d werden die Störungsgebiete 90a und 90b jeweils durch zwei kreisförmige Geo-Objekte (91a und 92a für das erste Störungsgebiet 90a sowie 91b und 92b für das zweite Störungsgebiet 90b) modelliert, die laut den Koordinaten ihrer vorbestimmten Positionen als Mittelpunkte und ihrer Radien dort in der Zufahrt zum Störungsgebiet 90a/ 90b und in der Abfahrt vom Störungsgebiet 90a/ 90b angeordnet sind, wo gerade noch beziehungsweise wieder ein Empfang von GNSS-Signalen möglich ist.

Auch ohne durch ein entsprechendes Attribut zu einer gemeinsamen Gruppe von Geo-Objekten verknüpft zu sein, kann man Geo-Objekte, die für ein und dasselbe Störungsgebiet modelliert wurden, als Partner-Geo-Objekte bezeichnen. Zwei Partner-Geo-Objekte sind in diesem Fall dadurch gekennzeichnet, dass sie mit demselben Korrelationsabstand D verknüpft sind, ohne miteinander zu einer gemeinsamen Gruppe von Geo-Objekten verknüpft zu sein.

Im Falle der Fig. 3d' werden die Störungsgebiete 90a und 90b jeweils durch ein kreisförmiges Geo-Objekt (93a für das erste Störungsgebiet 90a sowie 93b für das zweite Störungsgebiet 90b) modelliert, welche laut den Koordinaten ihrer vorbestimmten Positionen als Mittelpunkte und ihrer Radien so angeordnet sind, dass sie das Störungsgebiet vollständig überdecken und teilweise in der Zufahrt zum Störungsgebiet 90a/ 90b und teilweise in der Abfahrt vom Störungsgebiet 90a/ 90b angeordnet sind, wo gerade noch beziehungsweise wieder ein Empfang von GNSS-Signalen möglich ist.

Ein Geo-Objekt, das für ein Störungsgebiet modelliert wurde, für das kein weiteres (Partner-)Geo-Objekt modelliert wurde, kann auch als Solitär-Geo-Objekt bezeichnen.

Entlang des von dem Fahrzeug zurückgelegten Weges 80 werden vor der Einfahrt in einen ersten Tunnel, der dem ersten Störungsgebiet 90a entspricht, durch das GNSS-Positionsbestimmungsmodul 12 die Standortpositionen p₁ bis p ₅ von vorgegebener Mindestgüte an den Fahrzeuggerät-Prozessor 11 geliefert. Im ersten Störungsgebiet 90a kann das GNSS-Positionsbestimmungsmodul 12 keine Navigationssignale mehr von GNSS-Satelliten empfangen und demzufolge auch keine Standortpositionen bestimmten und an den Fahrzeuggerät-Prozessor 11 liefern.

Während der Fahrt durch das erste Störungsgebiet 90a wird durch einen Wackelkontakt die elektrische Verbindung zwischen der GNSS-Antenne 12b und dem GNSS-Empfänger 12a unterbrochen. Das führt dazu, dass das GNSS-Positionsbestimmungsmodul 12 auch nach Verlassen des ersten Tunnels (d. h. des ersten Störungsgebietes 90a) zunächst noch keine GNSS-Signale empfangen kann. In diesem Zustand fährt das Fahrzeug in einen zweiten Tunnel ein, der durch das zweite Störungsgebiet 90b repräsentiert wird.

Während der Fahrt durch das zweite Störungsgebiet 90b wird durch den Wackelkontakt die elektrische Verbindung, zwischen der GNSS-Antenne 12b und dem GNSS-Empfänger 12a wieder hergestellt. Das führt dazu, dass das GNSS-Positionsbestimmungsmodul 12 nach Verlassen des zweiten Tunnels (d. h. des zweiten Störungsgebietes 90b) wieder GNSS-Signale empfangen und aus diesen im Sekundentakt die Standortpositionen p s bis p ₁₀ berechnen kann, welche es - ebenfalls im Sekundentakt - an den Fahrzeuggerät-Prozessor 11 bereitstellt..

Der Fahrzeuggerät-Prozessor 11 stellt vermittels einer Analyse der Standortpositionen p ₁ bis p ₁₀ fest, dass zwischen einer ersten Standortposition 81 (p ₅) und einer zweiten Standortposition 82 (p ₆) ein Positionsabstand von 5350 Metern besteht, der größer als ein vorgegebener Lückenabstand von 100 Metern ist, der auf ein Problem bei der Positionsbestimmung hindeutet und insofern einer Positionsbes.timmungslücke entspricht.

Bezogen auf Fig. 3d ermittelt der Fahrzeuggerät-Prozessor 11 anschließend durch Vergleich der ersten Standortposition p 5 mit den bestimmenden Daten der Geo-Objekte, dass die erste Standortposition p s räumlich mit einem ersten Geo-Objekt 91a korreliert und die zweite Standortposition p₆ räumlich mit einem zweiten Geo-Objekt 92b korreliert.

Bezogen auf Fig. 3d' ermittelt der Fahrzeuggerät-Prozessor 11 anschließend durch Vergleich der ersten Standortposition p 5 mit den bestimmenden Daten der Geo-Objekte, dass die erste Standortposition p ₅ räumlich mit einem ersten Geo-Objekt 93a korreliert und die zweite Standortposition p s räumlich mit einem zweiten Geo-Objekt 93b korreliert.

In einer ersten Variante dieses Ausführungsbeispiels sind die Geo-Objekte jeweils mit einem Korrelationsabstand verknüpft, indem der Datensatz, der ein kreisförmiges Geo-Objekt kennzeichnet, zusätzlich zum Mittelpunkt und zum Radius diesen Korrelationsabstand umfasst:
Für das erste Störungsgebiet 90a sind die ersten Partner-Geo-Objekte 91a und 92a beziehungsweise das erste Solitär-Geo-Objekt 93a jeweils mit einem Korrelationsabstand von D₁ = 1100 m verknüpft; für das zweite Störungsgebiet 90b sind die zweiten Partner-Geo-Objekte 91b und 92b beziehungsweise das zweite Solitär-Geo-Objekt 93b jeweils mit einem Korrelationsabstand von D₂ = 1200 m verknüpft.

Bei einem Vergleich des Positionsabstands mit dem Korrelationsabstand des ersten Partner-Geo-Objekts 91a (alternativ: ersten Solitär-Geo-Objekts 93a), welches mit der ersten Standortposition 81 räumlich korreliert, stellt der Fahrzeuggerät-Prozessor 11 fest, dass der Positionsabstand von 5350 m nicht hinreichend mit dem Korrelationsabstand des ersten Partner-Geo-Objekts 91a (alternativ: ersten Solitär-Geo-Objekts 93a) von 1100 m korreliert, weil er um mehr als 30% von diesem abweicht.

Bei einem Vergleich des Positionsabstands mit dem Korrelationsabstand des zweiten Partner-Geo-Objekts 92b (alternativ: zweiten Solitär-Geo-Objekts 93b), welches mit der zweiten Standortposition 82 räumlich korreliert, stellt der Fahrzeuggerät-Prozessor 11 fest, dass der Positionsabstand von 5350 m nicht hinreichend mit dem Korrelationsabstand des zweiten Partner-Geo-Objekts 92b (alternativ: zweiten Solitär-Geo-Objekts 93b) von 1200 m korreliert, weil er um mehr als 30% von diesem abweicht.

Infolgedessen erzeugt der Fahrzeuggerät-Prozessor 11 trotz der Korrelation der ersten Standortposition 81 und zweiten Standortposition 82 mit jeweils einem Geo-Objekt (91a und 92b beziehungsweise 93a und 93b) völlig zu recht ein Fehlersignal.

In einer zweiten Variante dieses Ausführungsbeispiels sind die Geo-Objekte jeweils mit einer eindeutigen Kennung versehen.

Die Partner-Geo-Objekte sind zudem jeweils mit wenigstens einem Attribut versehen, das die Zuordnung eines Partner-Objektes zu einer Gruppe mehrerer Partner-Geo-Objekte repräsentiert oder vermittelt. Einerseits kann dieses Attribut die Kennung einer gemeinsamen Gruppe sein, welche alle Partner-Objekte, die zu der gemeinsamen Gruppe zählen, aufweisen. Andererseits kann dieses Attribut die Kennung eines oder mehrerer Partner-Objekte sein, die mit dem Partner-Objekt, welches deren Kennung als Attribut aufweist, verknüpft sind. In diesem Fall weisen das erste Partner-Geo-Objekt 91a des ersten Störungsgebietes 90a als Attribut die Kennung des zweiten Partner-Geo-Objektes 92a des ersten Störungsgebiets 90a auf, das zweite Partner-Geo-Objekt 92a des ersten Störungsgebietes 90a als Attribut die Kennung des ersten Partner-Geo-Objektes 91a des ersten Störungsgebiets 90a, das erste Partner-Geo-Objekt 91b des zweiten Störungsgebietes 90b als Attribut die Kennung des zweiten Partner-Geo-Objektes 92b des zweiten Störungsgebiets 90b und das zweite Partner-Geo-Objekt 92b des zweiten Störungsgebietes 90b als Attribut die Kennung des ersten Partner-Geo-Objektes 91b des zweiten Störungsgebiets 90b auf.

Die Solitär-Geo-Objekte weisen jeweils kein Partner-Attribut auf.

In der zweiten Variante dieses Ausführungsbeispiels vergleicht der Fahrzeuggerät-Prozessor 11 die korrelierenden Geo-Objekte miteinander:
Für das erste Partner-Geo-Objekt 91a und das zweite Partner-Geo-Objekt 92b stellt der Fahrzeuggerät-Prozessor 11 anhand ihrer Attribute und Kennungen fest, dass weder das erste auf das zweite noch das zweite auf das erste verweist, und sie mithin verschiedenen Gruppen von Partner-Geo-Objekten angehören und nicht derselben Gruppe.

Für das erste Solitär-Geo-Objekt 93a und das zweite Solitär-Geo-Objekt 93b stellt der Fahrzeuggerät-Prozessor 11 anhand ihrer Kennungen fest, dass sie verschieden sind und mithin die Korrelationspositionen 81 und 82 nicht-wie für eine ausschließlich topographiebedingte Störung gefordert - mit ein und demselben Solitär-Geo-Objekt 93a oder 93b korrelieren, sondern den verschiedenen Solitär-Geo-Objekten 93a und 93b.

Infolgedessen erzeugt der Fahrzeuggerät-Prozessor 11 trotz der Korrelation der ersten Standortposition 81 und zweiten Standortposition 82 mit jeweils einem Geo-Objekt (91a und 92b beziehungsweise 93a und 93b) völlig zu recht ein Fehlersignal.

### ZWEITES AUSFÜHRUNGSBEISPIEL

In diesem zweiten Ausführungsbeispiel gelten die Fahrzeugeinrichtung 30 und/ oder das Fahrzeuggerät 10 als erfindungsgemäße Positionsbestimmungseinrichtung, je nachdem ob die von dem Fahrzeuggerät 10 erzeugten Standortpositionen pᵢ durch das DSRC-Kommunikationsmodul 20 oder den Mobilfunk-Sendeempfänger 13 an die zentrale Datenverarbeitungseinrichtung 50 übermittelt werden, welche als erfindungsgemäße Datenverarbeitungseinrichtung gilt. Das in Fig. 2 dargestellte Mautsystem 70 kann insofern auch als erfindungsgemäßes System aufgefasst werden.

Gemäß dem zweiten Ausführungsbeispiel empfängt der Fahrzeuggerät-Prozessor 11 vorläufige Standortpositionen in Form von GNSS-Positionen im Sekundentakt von dem GNSS-Positionsbestimmungsmodul 12 und speichert diese zunächst jeweils zusammen mit einer Zeitinformation von der Funkuhr 14, die jeweils dem Zeitwert des Empfangs der GNSS-Position entspricht, im Arbeitsspeicher 17a ab. Jeweils im Umkreis von 100m benachbarte GNSS-Positionen werden anschließend von dem Fahrzeuggerät-Prozessor 11 gruppenweise zu einer polynomialen Regressionskurve (z. B. Spline) verarbeitet, aus der anschließend in 20-Meter-Schritten einzelne Standortpositionen pᵢ mit entsprechenden interpolierten Positionszeitwerten tᵢ entnommen werden, die repräsentativ für den zurückgelegten Weg 80 in Fig. 4a und Fig. 4b sind. Andere, dem Fachmann geläufige Verfahren zur Datenglättung und -reduktion können alternativ verwendet werden, um aus verschieden eng oder weit polydistanten GNSS-Positionen äquidistante Standortpositionen zu gewinnen. Die polynomiale Regressionskurve wird dort unterbrochen, wo im Abstand von mehr als 100 m keine GNSS-Positionen vorliegen.

Soweit in die Regression gruppenweise nicht weniger als 50% GNSS-Positionen von vorgegebener Mindestgüte eingehen, gelten die aus diesen ermittelten Standortpositionen von vorgegebener Mindestgüte. Das sind in Fig. 4a die Standortpositionen p₁ , p₂, p₃, p ₈, p₉ und p ₁₀.

Soweit in die Regression gruppenweise weniger als 50% GNSS-Positionen von vorgegebener Mindestgüte eingehen, gelten die aus diesen ermittelten Standortpositionen nicht von vorgegebener Mindestgüte. Das sind in Fig. 4a die Standortpositionen p₄, p₅ , p₆ und p₇.

Zwischen der Standortposition p ₅ und p s liegen aufgrund der Abschattung durch einen Tunnel oder aufgrund eines technischen Defekts oder einer Störung - und der daraus resultierenden Unterbrechung der polynomialen Regressionskurve - keine weiteren Standortpositionen vor.

Die 10 Standortpositionen p ₁ bis p ₁₀ werden jeweils zusammen ihren Positionszeitwerten t₁ bis t₁₀ und einem Gütebit b i (bᵢ = 1 für Standortpositionen vorgegebener Mindestgüte, bᵢ = 0 für Standortpositionen mangelnder Mindestgüte) als Fahrspurdatei einschließlich wenigstens einer der zuvor erwähnten Kennungen der Fahrzeugeinrichtung 30 von dem Fahrzeuggerät 10 mittels des Mobilfunk-Sendeempfängers 13 über das Mobilfunknetz 40 an die zentrale Datenverarbeitungseinrichtung 50 übertragen.

Alternativ oder kumulativ kann diese Fahrspurdatei auch mittels des DSRC-Kommunikationsmoduls 20 an eine straßenseitige Kontrolleinrichtung 60 übertragen werden, die ihrerseits die Fahrspurdatei über das Mobilfunknetz 40 an die Mautzentrale 58 weiterleitet. In der zentralen Datenverarbeitungsvorrichtung 50 wird diese Fahrspurdatei über die zentrale Kömmunikationseinrichtung 53, beispielsweise ein Gateway, empfangen und vom zentralen Prozessor 51 unter der Kennung 30 im zweiten zentralen Datenspeicher 57 der zentralen Datenverarbeitungseinrichtung 50 abgespeichert. In dem ersten zentralen Datenspeicher 56 der zentralen Datenverarbeitungseinrichtung 50 ist eine Datenbank mit GeoObjekten gespeichert, die die geographische Lage der Tunneleingänge und Tunnelausgänge aller bekannten Tunnel von mehr als einem Kilometer Länge innerhalb eines geographischen Gebietes, für den der Betrieb der Fahrzeugeinrichtung vorgesehen ist, durch Geo-Linien repräsentiert, die jeweils durch eine erste vorbestimmte Position und zweite vorbestimmte Position gekennzeichnet sind. Tunnel, zu denen Geo-Objekte in dem ersten zentralen Datenspeicher 56 gespeichert sind, werden als registrierte Tunnel bezeichnet.

Außerdem ist ein vorgegebener unterer Höchstabstand mit dem Wert von H = 1000 Metern in dem ersten zentralen Datenspeicher 56 gespeichert.

Zur Prüfung der Erfüllung der bestimmungsgemäßen Funktion des Fahrzeuggerätes hinsichtlich seines Vermögens Standortpositionen bereitzustellen, öffnet der zentrale Prozessor 51 die Fahrspurdatei und vergleicht schrittweise in Reihenfolge aufsteigender Positionszeitwerte tᵢ die Abstände zwischen unmittelbar aufeinanderfolgenden Standortpositionen pᵢ und pᵢ₊₁. Mit einer einzigen Ausnahme liegt zwischen allen Standortpositionen p ᵢ und pᵢ₊₁ ein Abstand von 20 m vor, der keine Lücke bedeutet. Zwischen der Standortposition p ₅ und p ₆ besteht ein Abstand von 1020 Metern, was größer ist als ein zur Definition einer Lücke im ersten zentralen Datenspeicher 56 gespeicherter vorgegebener Lückenabstand von 250 Metern.

Alternativ vergleicht der zentrale Prozessor 51 nicht die Abstände aller Standortpositionen pᵢ, sondern nur derjenigen von vorgegebener Mindestgüte, p₁, p ₂, p ₃, p ₈, p ₉ und p ₁₀. Dabei besteht nur zwischen den Positionen p ₃ und p ₈ ein Abstand, der mit 1100 Metern größer ist als der vorgegebene Lückenabstand von 250 Metern.

Der zentrale Prozessor identifiziert auf eine dieser Weisen eine Lücke in der Reihe der Standortpositionen pᵢ der übermittelten Fahrspurdatei.

In der Folge bildet der zentrale Prozessor 51 zunächst aus der vorletzten Standortposition p ₂ und der letzten Standortposition p ₃ vor der Positionsdatenlücke gemäß Fig. 4b eine erste mittlere Position x₁, die er als erste Abstandsposition in Form einer ersten Alternativposition 81, die aus zwei Standortpositionen, die einen ersten Abschnitt des zurückgelegten Weges 80 vor der Positionsdatenlücke kennzeichnen, abgeleitet wurde, unter der Kennung der Fahrzeugeinrichtung 30 in dem zweiten zentralen Datenspeicher 57 abspeichert.

Danach bildet der zentrale Prozessor 51 aus der ersten Standortposition p ₈ und der zweiten Standortposition p ₉ nach der Positionsdatenlücke gemäß Fig. 4b eine zweite mittlere Position x₂, die er als zweite Abstandsposition in Form einer zweiten Alternativposition 82, die aus zwei Standortpositionen, die einen zweiten Abschnitt des zurückgelegten Weges 80 nach der Positionsdatenlücke kennzeichnen, abgeleitet wurde, unter der Kennung der Fahrzeugeinrichtung 30 in dem zweiten zentralen Datenspeicher 57 abspeichert.

Anschließend berechnet der zentrale Prozessor 51 den Abstand zwischen der ersten Alternativposition 81 und der zweiten Alternativposition 82 zu d = 1140 m. Durch einen Vergleich mit dem in dem ersten zentralen Datenspeicher gespeicherten vorgegebenen unteren Höchstabstand von 1000 m stellt der zentrale Prozessor 51 fest, dass der berechnete Abstand größer der vorgegebene untere Höchstabstand ist.

Die Erzeugung eines Fehlersignals hängt nun im Weiteren davon ab, ob der zentrale Prozessor 51 eine räumliche Korrelation von Positionen, die einen ersten Abschnitt des zurücklegten Weges 80 vor der Lücke und einen zweiten Abschnitt des zurückgelegten Weges nach der Lücke kennzeichnen, mit jeweils einer in dem ersten zentralen Speicher 56 gespeicherten Geo-Linie ermitteln kann.

### a) Fahrt durch einen registrierten Tunnel

Dieser Fall ist in Fig. 4a dargestellt.

Der zentrale Prozessor 51 prüft nun zunächst, ob eine Verbindungslinie zwischen zwei unmittelbar benachbarten Standortpositionen p ᵢ und p ᵢ₊₁ auf einem ersten Abschnitt des zurückgelegten Weges 80 vor der Lücke eine der im ersten zentralen Datenspeicher 56 gespeicherten Geo-Linien schneidet. Dazu wählt der zentrale Prozessor zunächst die vorletzte Standortposition p ₂ von vorgegebener Mindestgüte vor der Positionsdatenlücke aus und bestimmt aus der Auswahl von Geo-Linien diejenige, deren erste vorbestimmte Position den geringsten Abstand zu der vorletzten Standortposition p ₂ aufweist. Dies ist die Geo-Linie mit dem Bezugszeichen 94. Anschließend bestimmt der zentrale Prozessor 51 nach einer dem Fachmann bekannten mathematischen Methode, ob ein Schnittpunkt zwischen der Geo-Linie 94 und einer Verbindungslinie zwischen den Standortpositionen p₂ und p₃ (auch als Vorläuferpositionen bezeichnet) vorliegt und, falls ja, welche geographischen Koordinaten dieser Schnittpunkt besitzt. In diesem Fall bestimmt der zentrale Prozessor 51 einen ersten Schnittpunkt, den er als solchen unter der Kennung der Fahrzeugeinrichtung 30 in dem zweiten zentralen Datenspeicher 57 abspeichert. Damit hat der zentrale Prozessor 51 eine räumliche Korrelation von zwei Standortpositionen, die einen ersten Abschnitt des zurückgelegten Weges 80 vor der Positionsdatenlücke kennzeichnen, mit einem gespeicherten Geo-Objekt festgestellt.

Anschließend prüft der zentrale Prozessor 51, ob eine Verbindungslinie zwischen zwei unmittelbar benachbarten Standortpositionen pᵢ und p ᵢ₊₁ auf einem zweiten Abschnitt des zurückgelegten Weges 80 nach der Lücke eine der im ersten zentralen Datenspeicher 56 gespeicherten Geo-Linien schneidet. Dazu wählt der zentrale Prozessor zunächst die erste Standortposition p₈ von vorgegebener Mindestgüte nach der Positionsdatenlücke aus und bestimmt aus der Auswahl von Geo-Linien diejenige, deren erste vorbestimmte Position den geringsten Abstand zu der vorletzten Standortposition p ₈ aufweist. Dies ist die Geo-Linie mit dem Bezugszeichen 95. Anschließend bestimmt der zentrale Prozessor 51 nach einer dem Fachmann bekannten mathematischen Methode, ob ein Schnittpunkt zwischen der Geo-Linie 95 und einer Verbindungslinie zwischen den Standortpositionen p ₈ und p s (auch als Nachfolgerpositionen bezeichnet) vorliegt und, falls ja, welche geographischen Koordinaten dieser Schnittpunkt besitzt. In diesem Fall bestimmt der zentrale Prozessor 51 einen zweiten Schnittpunkt, den er als solchen unter der Kennung der Fahrzeugeinrichtung 30 in dem zweiten zentralen Datenspeicher 57 abspeichert. Damit hat der zentrale Prozessor 51 eine räumliche Korrelation von zwei Standortpositionen, die einen zweiten Abschnitt des zurückgelegten Weges 80 nach der Positionsdatenlücke kennzeichnen, mit gespeicherten Geo-Objekten festgestellt, die anhand von Attributen mit ihren Kennungen aufeinander verweisen und damit als Partner-Geo-Objekte identifizierbar sind.

Damit ist das zweite notwendige Kriterium für das Erzeugen eines Fehlersignals nicht erfüllt. Die Positionsdatenlücke rührt von der Abschattung durch einen dem Mautsystem bekannten Tunnel her.

### b) i) Fahrt durch einen nicht registrierten Tunnel und

### ii) Fahrt mit Positionsdatenlücke auf kurzer Strecke

Für den Fall, dass der berechnete Abstand kleiner als der vorgegebene untere Höchstabstand gewesen wäre, würde der zentrale Prozessor 51 auf die weitere Prüfung auf eine räumliche Korrelation von einer Position, die einen ersten Abschnitt des zurückgelegten Weges 80 vor der Lücke kennzeichnet, und einer Position, die einen zweiten Abschnitt des zurückgelegten Weges 80 nach der Lücke kennzeichnet, mit Geo-Linien verzichten, denn bereits das erste von zwei notwendigen Kriterium zur Erzeugung eines Fehlersignals ist nicht erfüllt. Dabei ist es nicht von Bedeutung, ob die Positionsdatenlücke durch einen natürlichen Abschattungseffekt oder durch einen technischen Fehler oder eine Störung hervorgerufen wurde. Die Positionsdatenlücke ist in jedem Fall zu kurz, als dass es aus Erfindungssicht gerechtfertigt wäre ein Fehlersignal zu erzeugen.

### c) Fahrt mit Positionsdatenlücke auf langer Strecke außerhalb eines Tunnels

Dieser Fall entspräche der Fig. 4a ohne die dargestellten Geo-Linien 94 und 95 bei einem berechneten Abstand der Alternativpositionen 81 und 82 von 1140 Metern gemäß der Fig. 4b, wobei der Abstand größer ist als der untere Höchstabstand von 1000 Metern.

Die Prüfung auf räumliche Korrelation würde in diesem Fall weder für die Vorläuferpositionen p₂ und p₃ noch für die Nachfolgerpositionen p ₈ und p ₉ einen Schnittpunkt mit einer Geo-Linie der Geo-Objekt-Datenbank aus dem ersten Speicher 56 ergeben.

Weil in diesem Fall die beiden notwendigen Bedingungen für eine Erzeugung eines Fehlersignals erfüllt wären, würde der zentrale Prozessor das erfindungsgemäße Fehlersignal auslösen.

Dieses Fehlersignal kann darin bestehen, eine Speicherung eines Sperrzustandes unter der Kennung der Fahrzeugeinrichtung in dem zweiten zentralen Datenspeicher 57 zu veranlassen. Beispielsweise kann damit der Wert eines im zweiten zentralen Datenspeicher 57 gespeicherten Zustandsparameters "Betriebsstatus" der Fahrzeugeinrichtung 30, der zuvor auf "entsperrt" gesetzt war, dadurch auf "gesperrt" gesetzt werden.

Im Zuge eines Statusabgleichs zwischen der Mautzentrale 58 und der Fahrzeugeinrichtung 30 wird der Wert des geänderten Zustandsparameters von der zentralen Datenverarbeitungseinrichtung 50 auf die Fahrzeugeinrichtung übertragen. Dieser Statusabgleich kann von der Fahrzeugeinrichtung 30 regelmäßig, zufällig oder ereignisabhängig durch eine Nachricht über das Mobilfunknetz 40 an die Mautzentrale 58 angefordert werden und/ oder von der zentralen Datenverarbeitungseinrichtung 50 aufgrund des Fehlersignals mittels einer entsprechenden Nachricht, die den geänderten Wert des Zustandsparameters enthält, über das Mobilfunknetz 40 bewirkt werden.

Im Folgenden verhält sich die Fahrzeugeinrichtung 30 so wie zu dem ersten Ausführungsbeispiel beschrieben.

### Bezugszeichenliste

- 10: Fahrzeuggerät
- 11: Fahrzeuggerät-Prozessor
- 12: GNSS-Positionsbestimmungsmodul
- 12a: GNSS-Empfänger
- 12b: GNSS-Empfangsantenne
- 13: Mobilfunk-Sendeempfänger (fahrzeugseitig)
- 13b: Mobilfunk-Antenne (fahrzeugseitig)
- 14: Funkuhr
- 15: Anzeigeeinrichtung
- 16a: Gyroskop
- 16b: Weggeber
- 17a: Daten-Schreib-Lese-Speicher
- 17b: Arbeitsspeicher
- 18: Sicherheitsmodul
- 18a: autonomes Steuermodul des Sicherheitsmoduls 18
- 18b: Speicherbereich des Sicherheitsmoduls 18
- 19: Stromversorgungsanschluss
- 19a: Batterie
- 20: DSRC-Kommunikationsmodul (fahrzeugseitig)
- 21: DSRC-Kommunikationsmodul-Prozessor
- 23: DSRC-Sendeempfänger (fahrzeugseitig)
- 23b: DSRC-Sende- und Empfangsmittel
- 25: DSRC-Kommunikationsmodul-Signalisierungsmittel
- 27a: DSRC-Kommunikationsmodul-Daten-Schreib-Lese-Speicher
- 27b: DSRC-Kommunikationsmodul-Arbeitsspeicher
- 29a: DSRC-Kommunikationsmodul-Batterie
- 30: Fahrzeugeinrichtung
- 35: Fahrzeug
- 40: Mobilfunknetz
- 50: zentrale Datenverarbeitungseinrichtung
- 51: zentraler Prozessor
- 53: zentrale Kommunikationseinrichtung
- 56: erster zentraler Datenspeicher
- 57: zweiter zentraler Datenspeicher
- 58: Mautzentrale
- 60: Kontrolleinrichtung
- 61: Kontrollbrücke
- 63: Kontrollgerät
- 63a: DSRC-Kommunikationseinrichtung (straßenseitig)
- 70: Mautsystem
- 80: Verlauf eines zurückgelegten Weges
- 81: erste Abstandsposition, erste Korrelationsposition
- 82: zweite Abstandsposition, zweite Korrelationsposition
- 90a: erstes Störungsgebiet
- 90b: zweites Störungsgebiet
- 91a: erstes Partner-Geo-Objekt zu erstem Störungsgebiet 90a
- 91b: erstes Partner-Geo-Objekt zu zweitem Störungsgebiet 90b
- 92a: zweites Partner-Geo-Objekt zu erstem Störungsgebiet 90a
- 92a: zweites Partner-Geo-Objekt zu zweitem Störungsgebiet 90b
- 93a: Solitär-Geo-Objekt zu erstem Störungsgebiet 90a
- 93a: Solitär-Geo-Objekt zu zweitem Störungsgebiet 90b
- 94: erstes linienförmiges Geo-Objekt zu erstem Störungsgebiet 90a
- 95: zweites linienförmiges Geo-Objekt zu erstem Störungsgebiet 90a

- pᵢ: Standortposition
- d: Abstand zwischen erster und zweiter Abstandposition
- H: unterer Höchstabstand
- D, D₁, D₂: Korrelationsabstand

## Patentansprüche

1. Datenverarbeitungseinrichtung (11 / 50, 51), welche
- ausgebildet ist, eine Reihe von Standortpositionen (p i), die den Verlauf zumindest von Abschnitten eines zumindest scheinbar von einer Positionsbestimmungseinrichtung (12 I 10, 30) zurückgelegten Weges (80) repräsentieren, von dieser Positionsbestimmungseinrichtung (12 /10, 30) zu empfangen oder aus Positionsdaten (pᵢ) zu erzeugen, die sie von dieser Positionsbestimmungseinrichtung (12 / 10, 30) empfangen hat,
- wenigstens einen Datenspeicher (17a, 18b / 56) aufweist oder zumindest zeitweise kommunikationstechnisch an einen solchen gekoppelt ist, in dem wenigstens ein, durch wenigstens eine vorbestimmte Position gekennzeichnetes, Geo-Objekt (91a, 92a, 93a, 94, 91b, 92b, 93b, 95) gespeichert ist,
und
- ausgebildet ist, in der Reihe von Standortpositionen (p ᵢ) eine Lücke festzustellen, die durch das gänzliche Fehlen wenigstens einer Standortposition oder durch das Fehlen wenigstens einer Standortposition von einer vorgegebener Mindestgüte **gekennzeichnet ist,**
**dadurch** gekennzeichnet, dass die Datenverarbeitungseinrichtung (11 / 50, 51) ausgebildet ist,
- in Abhängigkeit von
einer fehlenden oder bestehenden räumlichen Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem gespeicherten Geo-Objekt (91a, 92a, 93a, 94, 91b, 92b, 93b, 95)
und
- in Abhängigkeit von
einer Abweichung des Abstandes zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
von wenigstens einem Referenzabstand (H, D)
ein Fehlersignal zu erzeugen,
wobei
die Datenverarbeitungseinrichtung (11 / 50, 51) ausgebildet ist,
a) ein Fehlersignal zu erzeugen, wenn
i) sie keine räumliche Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem gespeicherten Geo-Objekt (91a, 92a, 93a, 94, 91b, 92b, 93b, 95) ermitteln konnte
und
ii) der Abstand (d) zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
größer ist als ein vorgegebener unterer Höchstabstand (H).
und/oder
b) ein Fehlersignal zu erzeugen, wenn
i) sie eine räumliche Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem korrelierenden gespeicherten Geo-Objekt (91a, 92a, 93a, 94, 91b, 92b, 93b, 95) ermitteln konnte
ii) und der Abstand (d) zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
insofern nicht hinreichend mit wenigstens einem Korrelationsabstand (D) übereinstimmt, der mit dem wenigstens einen korrelierenden Geo-Objekt (91a, 92a, 93a, 94, 91b, 92b, 93b, 95) verknüpft ist,
als dass die Abweichung des Abstands (d) von dem Korrelationsabstand (D) eine bestimmte zulässige Abstandsdifferenz überschreitet.

2. Datenverarbeitungseinrichtung (11, 50, 51) nach Anspruch 1 **dadurch gekennzeichnet, dass** die Datenverarbeitungseinrichtung (11 / 50, 51) ausgebildet ist, zu ermitteln, ob die erste Korrelationsposition (81) und die zweite Korrelationsposition (82) räumlich mit wenigstens einem gespeicherten Geo-Objekt (91a, 92a, 93a, 94, 91b, 92b, 93b, 95) korrelieren, und ein Ergebnis über das Vorliegen oder Fehlen dieser Korrelation zu erzeugen.

3. Datenverarbeitungseinrichtung nach Anspruch 1 oder 2 **dadurch gekennzeichnet, dass** die Datenverarbeitungseinrichtung (11 /50,51) ausgebildet ist, zur Ermittlung einer räumlichen Korrelation der ersten und/ oder zweiten Korrelationsposition (81, 82) mit wenigstens einem gespeicherten Geo-Objekt (91a, 92a, 93a, 94, 91b, 92b, 93b, 95) einen Vergleich der ersten Korrelationsposition (81) und/ oder der zweiten Korrelationsposition (82) mit der wenigstens einen jeweiligen vorbestimmten Position des wenigstens einen gespeicherten Geo-Objekts (91a, 92a, 93a, 94, 91b, 92b, 93b, 95) durchzuführen.

4. Datenverarbeitungseinrichtung nach einem der vorhergehenden Ansprüche **dadurch gekennzeichnet, dass**
in dem Datenspeicher mehrere, durch wenigstens eine vorbestimmte Position gekennzeichnete, Geo-Objekte gespeichert sind und
die Datenverarbeitungseinrichtung ausgebildet ist,
ein Fehlersignal zu erzeugen, wenn eine räumliche Korrelation der ersten Korrelationsposition (81) nur mit einem ersten Geo-Objekt (91a, 92a, 93a) von mehreren gespeicherten Geo-Objekten (91a, 92a, 93a, 91b, 92b, 93b) und eine räumliche Korrelation der zweiten Korrelationsposition (82) nur mit einem, von dem ersten Geo-Objekt (91a, 92a, 93a) verschiedenen, zweiten Geo-Objekt (91b, 92b, 93b) der gespeicherten Geo-Objekte (91a, 92a, 93a, 91b, 92b, 93b) ermittelt werden konnte, von denen weder das erste Geo-Objekt (91a, 92a, 93a) noch das zweite Geo-Objekt (91b, 92b, 93b) ein Attribut aufweist, das eine Verknüpfung des ersten Geo-Objekts (91a, 92a, 93a) und des zweiten Geo-Objekts (91b, 92b, 93b) zu einer gemeinsamen Gruppe (91a-92a, 91b-92b) von gespeicherten Geo-Objekten (91b, 92b, 93b) repräsentiert.

5. Datenverarbeitungseinrichtung nach einem der vorhergehenden Ansprüche **dadurch gekennzeichnet, dass** die Datenverarbeitungseinrichtung ausgebildet ist, im Falle der Feststellung des Vorliegens einer Lücke
- zu prüfen, ob der Abstand zwischen wenigstens einer, einen ersten Abschnitt des zurückgelegten Weges (80) vor der Lücke kennzeichnenden, ersten Abstandsposition (81) und wenigstens einer, einen zweiten Abschnitt des zurückgelegten Weges (80) nach der Lücke kennzeichnenden, zweiten Abstandsposition (82) größer ist als ein vorgegebener unterer Höchstabstand (H)
und
- nur dann, wenn der Abstand zwischen der ersten Abstandsposition (81) und der zweiten Abstandsposition (82) größer ist als der vorgegebene untere Höchstabstand (H), zu ermitteln, ob die erste Korrelationsposition (81) und die zweite Korrelationsposition (82) räumlich mit wenigstens einem gespeicherten Geo-Objekt (91a, 92a, 93a, 94, 91b, 92b, 93b, 95) korrelieren.

6. Datenverarbeitungseinrichtung (11 / 50, 51) nach einem der vorhergehenden Ansprüche **dadurch gekennzeichnet, dass**
die Datenverarbeitungseinrichtung (11 / 50,51) ausgebildet ist,
das Vorliegen der Lücke daran festzustellen, dass
in der Reihe der Standortpositionen (pᵢ) zwischen einer ersten Standortposition (81) und einer zweiten Standortposition (82) keine Anzahl weiterer Standortpositionen vorliegt, die einer vorgegebenen Mindestanzahl weiterer Standortpositionen oder weiterer Standortpositionen der vorgegebenen Mindestgüte entspricht oder diese übersteigt.

7. Datenverarbeitungseinrichtung (11 / 50, 51) nach einem der Ansprüche 1 bis 6 **dadurch gekennzeichnet, dass**
die Datenverarbeitungseinrichtung ausgebildet ist,
das Vorliegen der Lücke daran festzustellen, dass
zum einen in der Reihe der Standortpositionen (p ᵢ) zwischen einer ersten Standortposition (81) und einer zweiten Standortposition (82) keine Anzahl weiterer Standortpositionen vorliegt, die einer vorgegebenen Mindestanzahl weiterer Standortpositionen oder weiterer Standortpositionen der vorgegebenen Mindestgüte entspricht oder diese übersteigt, und zum anderen
- zwischen der ersten Standortposition (81) und der zweiten Standortposition (82) ein Abstand (d) besteht, der größer ist als ein vorgegebener Lückenabstand, welcher nicht größer ist als der vorgegebene untere Höchstabstand (H)
und/ oder
- zwischen einem ersten Zeitstempel der ersten Standortposition (81) und einem zweiten Zeitstempel der zweiten Standortposition (82) eine Zeitdifferenz besteht, die größer ist als eine vorgegebene Zeitdifferenz.

8. Datenverarbeitungseinrichtung (11 / 50, 51) nach einem der vorhergehenden Ansprüche **dadurch gekennzeichnet, dass** die Datenverarbeitungseinrichtung (11 / 50, 51) ausgebildet ist,
das Vorliegen der Lücke festzustellen, indem sie
- einen Beginn einer Positionsbestimmungsunterbrechungsphase feststellt, wenn innerhalb eines Zeitabschnittes von vorgegebener Dauer nach der Bereitstellung oder Erzeugung einer ersten Standortposition (81) mit vorgegebener Mindestgüte die Bereitstellung oder Erzeugung einer der ersten Standortposition (81) zeitlich nachfolgenden Standortposition mit vorgegebener Mindestgüte oder gänzlich durch die Positionsbestimmungseinrichtung (12 I 10, 30) oder die Datenverarbeitungseinrichtung (11 / 50, 51) unterbleibt, und
- ein Ende der Positionsbestimmungsunterbrechungsphase feststellt, wenn nach dem Beginn der Positionsbestimmungsunterbrechungsphase eine zweite Standortposition (82) durch die Positionsbestimmungseinrichtung (12 I 10, 30) mit vorgegebener Mindestgüte bereitgestellt oder durch die Datenverarbeitungseinrichtung (11 / 50, 51) erzeugt wurde.

9. Fahrzeugeinrichtung (10, 30) mit einer Datenverarbeitungseinrichtung (11) nach einem der vorhergehenden Ansprüche **gekennzeichnet durch**
wenigstens eine Positionsbestimmungseinrichtung (12), die ausgebildet ist,
- Navigationssignale von Navigationssatelliten wenigstens eines Globalen Navigationssatellitensystems zu empfangen und
- anhand der empfangenen Navigationssignale die Standortpositionen (pᵢ) zu erzeugen oder die Positionsdaten zu erzeugen, aus denen die Datenverarbeitungseinrichtung (11) die Standortpositionen (pᵢ) erzeugt.

10. System (70), umfassend
- wenigstens eine Positionsbestimmungseinrichtung (10, 30),
- wenigstens eine Datenverarbeitungseinrichtung (50, 51) und
- wenigstens einen Datenspeicher (56), in dem wenigstens ein, durch wenigstens eine vorbestimmte Position gekennzeichnetes, Geo-Objekt (91a, 92a, 93a, 94, 91b, 92b, 93b, 95) gespeichert ist,
wobei
- die Positionsbestimmungseinrichtung (10, 30) eine erste Kommunikationseinrichtung (13, 23) aufweist und ausgebildet ist, Navigationssignale von Navigationssatelliten wenigstens eines Globalen Navigationssatellitensystems zu empfangen, anhand der empfangenen Navigationssignale Positionsdaten oder Standortpositionen (p ᵢ) zu erzeugen und die erzeugten Positionsdaten oder Standortpositionen (pᵢ) mittels der ersten Kommunikationseinrichtung an die Datenverarbeitungseinrichtung zu versenden,
- die Datenverarbeitungseinrichtung (50, 51) eine zweite Kommunikationseinrichtung (53) aufweist oder an eine solche gekoppelt ist und ausgebildet ist, eine Reihe von Standortpositionen (p i), die den Verlauf zumindest von Abschnitten eines zumindest scheinbar von der Positionsbestimmungseinrichtung (10, 30) zurückgelegten Weges (80) repräsentieren, mittels der zweiten Kommunikationseinrichtung (53) von dieser Positionsbestimmungseinrichtung (10, 30) zu empfangen oder aus von dieser Positionsbestimmungseinrichtung (10, 30) empfangenen Positionsdaten zu erzeugen,
wobei
das System ausgebildet ist,
- in der Reihe von empfangenen oder erzeugten Standortpositionen (p ᵢ) eine Lücke festzustellen, die durch das gänzliche Fehlen wenigstens einer Standortposition oder durch das Fehlen wenigstens einer Standortposition von einer vorgegebener Mindestgüte **gekennzeichnet ist,**
**dadurch** gekennzeichnet, dass
das System ausgebildet ist,
- in Abhängigkeit von einer räumlichen Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem gespeicherten Geo-Objekt (91a, 92a, 93a, 94, 91b, 92b, 93b, 95)
und
- in Abhängigkeit von einer Abweichung des Abstandes zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
von wenigstens einem Referenzabstand (H, D)
ein Fehlersignal zu erzeugen,
wobei
das System (70) ausgebildet ist,
a) ein Fehlersignal zu erzeugen, wenn
i) sie keine räumliche Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem gespeicherten Geo-Objekt (91a, 92a, 93a, 94, 91b, 92b, 93b, 95) ermitteln konnte
und
ii) der Abstand (d) zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
größer ist als ein vorgegebener unterer Höchstabstand (H).
und/ oder
b) ein Fehlersignal zu erzeugen, wenn
i) sie eine räumliche Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem korrelierenden gespeicherten Geo-Objekt (91a, 92a, 93a, 94, 91b, 92b, 93b, 95) ermitteln konnte
und
ii) der Abstand (d) zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
insofern nicht hinreichend mit wenigstens einem Korrelationsabstand (D) übereinstimmt, der mit dem wenigstens einen korrelierenden Geo-Objekt (91a, 92a, 93a, 94, 91b, 92b, 93b, 95) verknüpft ist,
als dass die Abweichung des Abstands (d) von dem Korrelationsabstand (D) eine bestimmte zulässige Abstandsdifferenz überschreitet..

11. Verfahren zur Prüfung der Erfüllung der bestimmungsgemäßen Funktion einer Positionsbestimmungseinrichtung (12/ 10,30) mit dem Schritt
- des Empfangs einer Reihe von Standortpositionen (pᵢ) von einer Positionsbestimmungseinrichtung (12 / 10, 30) oder der Erzeugung einer Reihe von Standortpositionen (p ᵢ) aus Positionsdaten einer Positionsbestimmungseinrichtung (12 / 10, 30), welche Standortpositionen den Verlauf zumindest von Abschnitten eines zumindest scheinbar von der Positionsbestimmungseinrichtung (12 / 10, 30) zurückgelegten Weges (80) repräsentieren,
mit den Schritten
- der Feststellung einer Lücke in der Reihe von Standortpositionen (p ᵢ), welche Lücke durch das gänzliche Fehlen wenigstens einer Standortposition oder durch das Fehlen einer Standortposition von einer vorgegebener Mindestgüte gekennzeichnet ist,
- der Ermittlung, ob
- wenigstens eine, einen ersten Abschnitt des zurückgelegten Weges (80) vor der Lücke kennzeichnende, erste Korrelationsposition (81)
und
- wenigstens eine, einen zweiten Abschnitt des zurückgelegten Weges (80) nach der Lücke kennzeichnende, zweite Korrelationsposition (82)
räumlich mit wenigstens einem, in wenigstens einem Datenspeicher (17a, 18b / 56) gespeicherten und durch wenigstens eine vorbestimmte Position gekennzeichneten, Geo-Objekt (91a, 92a, 93a, 94, 91b, 92b, 93b, 95) korrelieren
und **gekennzeichnet durch** den Schritt der Erzeugung eines Fehlersignals
- in Abhängigkeit von
einer fehlenden oder bestehenden räumlichen Korrelation
wenigstens einer, einen ersten Abschnitt des zurückgelegten Weges (80) vor der Lücke kennzeichnenden, ersten Korrelationsposition (81) und
wenigstens einer, einen zweiten Abschnitt des zurückgelegten Weges (80) nach der Lücke kennzeichnenden, zweiten Korrelationsposition (82)
mit wenigstens einem gespeicherten Geo-Objekt (91a, 92a, 93a, 94, 91b, 92b, 93b, 95).
und
- in Abhängigkeit von einer Abweichung des Abstandes zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
von wenigstens einem Referenzabstand (H, D)
sowie ferner
**durch** den Schritt
- der Bestimmung eines Abstandes (d) zwischen
wenigstens einer, einen ersten Abschnitt des zurückgelegten Weges (80) vor der Lücke kennzeichnenden, ersten Abstandsposition (81) und
wenigstens einer, einen zweiten Abschnitt des zurückgelegten Weges (80) nach der Lücke kennzeichnenden, zweiten Abstandsposition (82)
wobei die Erzeugung eines Fehlersignals dann erfolgt,
wenn
(i) keine räumliche Korrelation der ersten Korrelationsposition (81) und der zweiten Korrelationsposition (82) mit wenigstens einem gespeicherten Geo-Objekt (91a, 92a, 93a, 94, 91b, 92b, 93b, 95) ermittelt werden konnte und
(ii) der bestimmte Abstand größer ist als ein vorgegebener unterer Höchstabstand
oder wenn
(iii) eine räumliche Korrelation der ersten Korrelationsposition (81) und der zweiten Korrelationsposition (82) mit wenigstens einem gespeicherten Geo-Objekte (91a, 92a, 93a, 94, 91b, 92b, 93b, 95) ermittelt werden konnte und
(iv) der bestimmte Abstand (d) insofern nicht hinreichend mit einem Korrelationsabstand (D) übereinstimmt, der mit wenigstens einem korrelierenden gespeicherten Geo-Objekt (91a, 92a, 93a, 94, 91b, 92b, 93b, 95) verknüpft ist, das mit der ersten und/ oder zweiten Korrelationsposition (81, 82) räumlich korreliert, als dass die Abweichung des Abstands (d) von dem Korrelationsabstand (D) eine bestimmte zulässige Abstandsdifferenz überschreitet.

## Claims

1. Data processing device (11 / 50, 51)
- designed to receive a series of location positions (pᵢ) which represent the course of at least sections of a path (80) at least apparently travelled by a position determining device (12 / 10, 30) from this position determining device 12 / 10, 30) or to generate such a series of location positions (pᵢ) from position data (pᵢ) it has received from this position determining device 12/10, 30),
- comprising at least one data memory (17a, 18b / 56) or being at least temporarily coupled by means of communication technology to such a data memory storing at least one geo-object (91a, 92a, 93a, 94, 91b, 92b, 93b, 95) **characterized by** a least one predetermined position,
and
- designed to determine a gap in the series of location positions (pᵢ) which gap is **characterized by** the complete lack of at least one location position or the lack of location position of a prespecified minimum quality,
**characterized in that** the data processing device (11 / 50, 51) is designed
to generate an error signal
- depending on
a missing or existing spatial correlation of
at least a first correlation position (81) characterizing a first section of the path (80) travelled before the gap and
at least a second correlation position (82) characterizing a second section of the path (80) travelled after the gap
with at least one stored geo-object (91a, 92a, 93a, 94, 91b, 92b, 93b, 95)
and
- depending on
a deviation in distance between
at least first distance position (81) characterizing a first section of the path (80) travelled before the gap and
at least a second distance position (82) characterizing a second section of the path (80) travelled after the gap
of at least one reference distance (H, D)
wherein
the data processing device (11 / 50, 51) is designed
a) to generate an error signal if
i) it could not detect a spatial correlation of
at least a first correlation position (81) characterizing a first section of the path (80) travelled before the gap and
at least a second correlation position (82) characterizing a second section of the path (80) travelled after the gap
with at least one stored geo-object (91a, 92a, 93a, 94, 91b, 92b, 93b, 95)
and
ii) the distance (d) between
at least a first distance position (81) characterizing a first section of the path (80) travelled before the gap and
at least a second distance position (82) characterizing a second section of the path (80) travelled after the gap
is greater than a prespecified lower maximum distance (H).
and/ or
b) to generate an error signal if
i) it could detect a spatial correlation of
at least a first correlation position (81) characterizing a first section of the path (80) travelled before the gap and
at least a second correlation position (82) characterizing a second section of the path (80) travelled after the gap
with at least one correlating stored geo-object (91a, 92a, 93a, 94, 91b, 92b, 93b, 95)
and
ii) the distance (d) between
at least a first distance position (81) characterizing a first section of the path (80) travelled before the gap and
at least a second distance position (82) characterizing a second section of the path (80) travelled after the gap
does not sufficiently correspond to at least one correlation distance (D) linked to the at least one correlating geo-object (91a, 92a, 93a, 94, 91b, 92b, 93b, 95) such
that the deviation of the distance (d) of the correlation distance (D) exceeds a specified allowable distance difference.

2. Data processing device (11, 50, 51) according to claim 1 **characterized in that**
the data processing device (11, 50, 51) is designed to detect whether the first correlation position (81) and the second correlation position (82) correlate with at least one stored geo-object (91a, 92a, 93a, 94, 91b, 92b, 93b, 95) an to generate a result about the presence or absence of such a correlation.

3. Data processing device (11, 50, 51) according to claim 1 or 2 **characterized in that**
the data processing device (11, 50, 51) is designed to carry out a comparison of the first correlation position (81) and/ or the second correlation position (82) with at least one of a respective predetermined position of the at least one stored geo-object (91a, 92a, 93a, 94, 91b, 92b, 93b, 95) in order to determine a spatial correlation of the first correlation position (81) and/ or the second correlation position (82) correlate with at least one stored geo-object (91a, 92a, 93a, 94, 91b, 92b, 93b, 95).

4. Data processing device (11, 50, 51) according to one of the preceding claims **characterized in that**
a plurality of geo-objects, each of which is **characterized by** at least one predetermined position, is stored in the data memory and
the data processing device is designed
to generate an error signal if a spatial correlation of the first correlation position (81) could be detected only with a first geo-object (91a, 92a, 93a) of a plurality of stored geo-objects (91a, 92a, 93a, 91b, 92b, 93b) and a spatial correlation of the second correlation position (82) could be detected only with a second geo-object (91b, 92b, 93b) of a plurality of stored geo-objects (91a, 92a, 93a, 91b, 92b, 93b) being different from the first geo-object (91a, 92a, 93a), of which neither the first geo-object (91a, 92a, 93a) nor the second geo-object (91b, 92b, 93b) comprises an attribute that represents a link of the first geo-object (91a, 92a, 93a) and the second geo-object (91b, 92b, 93b) to a common group (91a-92a, 91b-92b) of stored geo-objects (91b, 92b, 93b).

5. Data processing device according to one of the preceding claims **characterized in that**
the data processing device is designed, in the event that the presence of a gap is determined,
- to check whether the distance between at least a first distance position (81) characterizing a first section of the path (80) travelled before the gap and a least a second distance position (82) characterizing a second section of the path (80) travelled after the gap is greater than a prespecified lower maximum distance (H)
and
- to detect whether the first correlation position (81) and the second correlation position (82) correlate with at least one stored geo-object (91a, 92a, 93a, 94, 91b, 92b, 93b, 95) only in the event that the distance between the first distance position (81) and the second distance position (82) is greater than the prespecified lower maximum distance (H).

6. Data processing device (11, 50, 51) according to one of the preceding claims **characterized in that**
the data processing device (11, 50, 51) is designed
to determine the presence of the gap from the fact that
between a first location position (81) and a second location position (82) no quantity of further location positions are available within the series of location positions (pᵢ) that corresponds to or exceeds a minimum quantity of further location positions or further location positions of the prespecified minimum quality.

7. Data processing device (11, 50, 51) according to one of the claims 1 to 6 **characterized in that**
the data processing device is designed
to determine the presence of the gap from the fact that
firstly between a first location position (81) and a second location position (82) no quantity of further location positions are available within the series of location positions (pᵢ) that corresponds to or exceeds a minimum quantity of further location positions or further location positions of the prespecified minimum quality,
and secondly
- between the first location position (81) and the second location position (82) persists a distance (d), that is greater than a prespecified gap distance that is not greater than the prespecified lower maximum distance (H) and/ or
- between a first timestamp of the first location position (81) an a second timestamp of the second location position persists a time difference, that is greater than a prespecified time difference.

8. Data processing device (11, 50, 51) according to one of the preceding claims **characterized in that**
the data processing device (11, 50, 51) is designed
to determine the presence of the gap by
- detecting a beginning of a phase of interruption of position determination, if within a time frame of prespecified duration after the provision or generation of a first location position (81) of prespecified minimum quality the provision or generation of a location position following temporally the first position location (81) is entirely or in terms of prespecified minimum quality omitted by the position determining device (12 / 10, 30) or the data processing device (11 / 50, 51) and
- detecting an end of the phase of interruption of position determination, if after the beginning of the phase of interruption of position determination a second location position (82) of prespecified minimum quality is provided by the position determining device (12 / 10, 30) or generated by the data processing device (11 / 50, 51).

9. Vehicle device (10, 30) comprising a data processing device (11) according to one of the preceding claims **characterized by**
at least one position determining device (12) designed
- to receive navigation signals of navigation satellites of at least one Global Navigation Satellite System and
- to generate based on the received navigation signals the location positions (pᵢ) or the position data from which the data processing device generates the location positions (pᵢ).

10. System (70) comprising,
- at least one position determining device (10, 30),
- at least one data processing device (50, 51) and
- at least one data memory (56), storing at least one geo-object (91a, 92a, 93a, 94, 91b, 92b, 93b, 95)
**characterized by** a least one predetermined position,
wherein
- the position determination device (10, 30) comprises first communication device (13, 23) and is designed to receive navigation signals of navigation satellites of at least one Global Navigation Satellite System and to generate based on the received navigation signals position data or location positions (pᵢ) or position data from which the data processing device generates the location positions (pᵢ) and to send the generated positions data or location positions (pᵢ) to the data processing device by means of the first communication device,
- the data processing device (50, 51) comprises a second communication device (53) or is coupled to such one and is designed to receive form the position determining device 10, 30) by means of the second communication device (53) a series of location positions (pᵢ) which represent the course of at least sections of a path (80) at least apparently travelled by the position determining device 10, 30) or to generate such a series of location positions (pᵢ) from position data (pᵢ) it has received from the position determining device (10, 30),
wherein
the system is designed
- designed to determine a gap in the received or generated series of location positions (pᵢ) which gap is **characterized by** the complete lack of at least one location position or the lack of location position of a prespecified minimum quality,
**characterized in that**
the system is designed
to generate an error signal
- depending on a spatial correlation of
at least a first correlation position (81) characterizing a first section of the path (80) travelled before the gap and
at least a second correlation position (82) characterizing a second section of the path (80) travelled after the gap
with at least one stored geo-object (91a, 92a, 93a, 94, 91b, 92b, 93b, 95)
and
- depending on a deviation in distance between
at least first distance position (81) characterizing a first section of the path (80) travelled before the gap and
at least a second distance position (82) characterizing a second section of the path (80) travelled after the gap
of at least one reference distance (H, D)
wherein
the system (70) is designed
a) to generate an error signal if
i) it could not detect a spatial correlation of
at least a first correlation position (81) characterizing a first section of the path (80) travelled before the gap and
ta least a second correlation position (82) characterizing a second section of the path (80) travelled after the gap
with at least one stored geo-object (91a, 92a, 93a, 94, 91b, 92b, 93b, 95)
and
ii) the distance (d) between
at least first distance position (81) characterizing a first section of the path (80) travelled before the gap and
at least a second distance position (82) characterizing a second section of the path (80) travelled after the gap
is greater than a prespecified maximum distance (H).
and/ or
b) to generate an error signal if
i) it could detect a spatial correlation of
at least a first correlation position (81) characterizing a first section of the path (80) travelled before the gap and
at least a second correlation position (82) characterizing a second section of the path (80) travelled after the gap
with at least one correlating stored geo-object (91a, 92a, 93a, 94, 91b, 92b, 93b, 95)
and
ii) the distance (d) between
at least a first distance position (81) characterizing a first section of the path (80) travelled before the gap and
at least a second distance position (82) characterizing a second section of the path (80) travelled after the gap
does not sufficiently correspond to at least one correlation distance (D) linked to the at least one correlating geo-object (91a, 92a, 93a, 94, 91b, 92b, 93b, 95) such
that the deviation of the distance (d) of the correlation distance (d) exceeds a specified allowable distance difference.

11. Method for testing the accomplishment of the intended function of a position determining device (12/ 10, 30) including the step
- of receipt a series of location positions (pᵢ) of a position determination device (12 / 10, 30) or of generation of a series of location positions (pᵢ) from position data of a position determination device (12 / 10, 30), which location positions represent the course of at least sections of a path (80) at least apparently travelled by the position determining device (12 / 10, 30),
including the steps
- of determination of a gap in the series of location positions (pᵢ) which gap is **characterized by** the complete lack of at least one location position or the lack of location position of a prespecified minimum quality,
- of detection, whether
- at least a first correlation position (81) characterizing a first section of the path (80) travelled before the gap and
- at least a second correlation position (82) characterizing a second section of the path (80) travelled after the gap
spatially correlate with at least one geo-object (91a, 92a, 93a, 94, 91b, 92b, 93b, 95) stored in at least one data memory (17a, 18b / 56) and **characterized by** at least one predetermined position and **characterized by** the step of generation of an error signal
- depending on
a missing or existing spatial correlation of
at least a first correlation position (81) characterizing a first section of the path (80) travelled before the gap and
at least a second correlation position (82) characterizing a second section of the path (80) travelled after the gap
with at least one stored geo-object (91a, 92a, 93a, 94, 91b, 92b, 93b, 95)
and
- depending on
a deviation in distance between
at least first distance position (81) characterizing a first section of the path (80) travelled before the gap and
at least a second distance position (82) characterizing a second section of the path (80) travelled after the gap
of at least one reference distance (H, D)
as well as further
by the step of
- determination of a distance (d) between
at least a first distance position (81) characterizing a first section of the path (80) travelled before the gap and
at least a second distance position (82) characterizing a second section of the path (80) travelled after the gap wherein the generation of an error signal takes place,
if
(i) no spatial correlation of the first correlation position (81) and the second correlation position (82) with at least one stored geo-object (91a, 92a, 93a, 94, 91b, 92b, 93b, 95) could be detected and
(ii) the determined distance is greater than a prespecified lower maximum distance
or if
(iii) a spatial correlation of the first correlation position (81) and the second correlation position (82) with at least one stored geo-object (91a, 92a, 93a, 94, 91b, 92b, 93b, 95) could be detected and
(iv) the determined distance (d) does not sufficiently correspond to at least one correlation distance (D) linked to the at least one correlating geo-object (91a, 92a, 93a, 94, 91b, 92b, 93b, 95) which spatially correlates with the first and / or second correlation position (81, 82) such that the deviation of the distance (d) of the correlation distance (D) exceeds a specified allowable distance.

## Revendications

1. Dispositif de traitement de données (11 / 50, 51),
- étant conçu pour recevoir une série de positions de localisation (pᵢ), quelles représentent le cours d'au moins de parties d'un trajet parcouru au moins apparemment par un dispositif de détermination de la position (12/10, 30) de ce dispositif de détermination de la position (12/10, 30) ou pour générer une telle série de positions de localisation (pᵢ) à partir de données de position, quelles a reçues de ce dispositif de détermination de position (12 / 10, 30),
- présentant au moins une mémoire de données (17a, 18b / 56) ou étant au moins temporairement, en termes de communication, couplé à une telle mémoire de données dans laquelle est enregistré au moins un objet géographique (91a, 92a, 93a, 94, 91b, 92b, 93b, 95) **caractérisé par** au moins une position prédéterminée,
et
- conçu de constater dans la série de positions de localisation (pᵢ) une lacune quelle est **caractérisée par** l'absence
totale d'au moins une position du localisation ou par l'absence d'au moins position de qualité minimale prédéfinie,
**caractérisé en ce que** le dispositif de traitement de données (11 / 50, 51) est conçu
de générer un signal d'erreur
- en fonction
de l'absence ou de l'existence d'une corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré (91a, 92a, 93a, 94, 91b, 92b, 93b, 95)
et
- en fonction
d'une déviation de la distance entre
au moins une première position de distance (81) caractérisant une première partie du trajet parcouru avant la lacune et
au moins une deuxième position de distance (82) caractérisant une deuxième partie du trajet parcouru après la lacune
d'au moins une distance de référence (H, D)
de dispositif de traitement de données (11 / 50, 51) étant conçu,
a) de générer un signal d'erreur,
i) s'il ne pouvait pas détecter de corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré (91a, 92a, 93a, 94, 91b, 92b, 93b, 95)
et
ii) si la distance (d) entre
au moins une première position de distance (81) caractérisant une première partie du trajet parcouru avant la lacune et
au moins une deuxième position de distance (82) caractérisant une deuxième partie du trajet parcouru après la lacune
est supérieure à une distance maximale inférieure prédéfinie (H).
et/ ou
b) de générer un signal d'erreur,
i) s'il pouvait détecter une corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré en corrélation (91a, 92a, 93a, 94, 91b, 92b, 93b, 95)
ii) et la distance (d) entre
au moins une première position de distance (81) caractérisant une première partie du trajet parcouru avant la lacune et
au moins une deuxième position de distance (82) caractérisant une deuxième partie du trajet parcouru après la lacune
ne correspond pas suffisamment à au moins une distance de corrélation (D) associée à un objet géographique en corrélation (91a, 92a, 93a, 94, 91b, 92b, 93b, 95) d'une manière que
la déviation de la distance (d) de la distance de corrélation (D) dépasse une certaine différence de distance admissible.

2. Dispositif de traitement de données (11, 50, 51) selon la revendication 1 **caractérise en ce que**
le dispositif de traitement de données (11 / 50, 51) est conçu de constater si la première position de corrélation (81) et la deuxième position de corrélation (82) sont en corrélation spatiale avec au moins un objet géographique enregistré (91a, 92a, 93a, 94, 91b, 92b, 93b, 95) et de générer un résultat sur la présence ou l'absence de celle corrélation.

3. Dispositif de traitement de données selon la revendication 1 ou 2 **caractérise en ce que**
le dispositif de traitement de données (11 / 50, 51) est conçu d'effectuer une comparaison de la première position de corrélation (81) et/ ou de la deuxième position de corrélation (82) avec au moins une position prédéterminée respective d'au moins un objet géographique enregistré (91a, 92a, 93a, 94, 91b, 92b, 93b, 95) pour la détection d'une corrélation spatiale de la première et/ ou deuxième position de corrélation (81, 82) avec au moins un objet géographique enregistré (91a, 92a, 93a, 94, 91b, 92b, 93b, 95)

4. Dispositif de traitement de données selon l'une des revendications précédentes, **caractérisé en ce que**
plusieurs objets géographiques **caractérisés par** au moins une position prédéterminée sont enregistrés dans la mémoire de données, et
le dispositif de traitement de données est conçu
de générer un signal d'erreur lorsqu'une corrélation spatiale de la première position de corrélation (81) n'est établie qu'avec un premier objet géographique (91a, 92a, 93a) parmi plusieurs objets géographiques enregistrés (91a, 92a, 93a, 91b, 92b, 93b) et qu'une corrélation spatiale de la deuxième position de corrélation (82) n'est établie qu'avec un deuxième objet géographique (91b, 92b, 93b) différent du premier objet géographique (91a, 92a, 93a), 93b) des objets géographiques enregistrés (91a, 92a, 93a, 91b, 92b, 93b), dont ni le premier objet géographique (91a, 92a, 93a) ni le deuxième objet géographique (91b, 92b, 93b) ne présente un attribut, a pu être déterminée, qui représente une liaison du premier objet géographique (91a, 92a, 93a) et du deuxième objet géographique (91b, 92b, 93b) à un groupe commun (91a-92a, 91b-92b) d'objets géographiques enregistrés (91b, 92b, 93b).

5. Dispositif de traitement de données selon l'une des revendications précédentes, **caractérisé en ce que** le dispositif de traitement de données est conçu pour, en cas de constatation de la présence d'une lacune
- vérifier si la distance entre au moins une première position de distance (81), caractérisant une première partie du trajet parcouru (80) avant la lacune, et au moins une deuxième position de distance (82), caractérisant une deuxième partie du trajet parcouru (80) après la lacune, est supérieure à une distance maximale inférieure prédéfinie (H)
et
- déterminer, uniquement lorsque la distance entre la première position de distance (81) et la deuxième position de distance (82) est supérieure à la distance maximale inférieure prédéterminée (H), si la première position de corrélation (81) et la deuxième position de corrélation (82) sont spatialement corrélées avec au moins un objet géographique enregistré (91a, 92a, 93a, 94, 91b, 92b, 93b, 95).

6. Dispositif de traitement de données (11 / 50, 51) selon l'une des revendications précédentes, **caractérisé en ce que**
le dispositif de traitement de données (11 / 50, 51) est conçu,
de déterminer la présence de la lacune par le fait que
dans la série des positions de localisation (pᵢ) entre une première position localisation (81) et une deuxième position localisation (82), il n'y a pas un nombre d'autres positions localisation qui correspond à un nombre minimal prédéterminé d'autres positions localisation ou d'autres positions localisation de la qualité minimale prédéterminée ou qui le dépasse.

7. Dispositif de traitement de données (11 / 50, 51) selon l'une des revendications 1 à 6, **caractérisé en ce que**
le dispositif de traitement de données est conçu
de déterminer la présence de la lacune par le fait que
d'une part, dans la série des positions de localisation (p i) entre une première position localisation (81) et une deuxième position localisation (82), il n'y a pas un nombre d'autres positions localisation qui correspond à un nombre minimal prédéterminé d'autres positions localisation ou d'autres positions localisation de la qualité minimale prédéterminée ou qui le dépasse,
et d'autre part
- il existe entre la première position localisation (81) et la deuxième position localisation (82) une distance (d) qui est supérieure à une distance d'espacement prédéfinie, laquelle n'est pas supérieure à la distance maximale inférieure prédéfinie (H)
et/ou
- entre une première estampe chronologique de la première position de localisation (81) et une deuxième estampe chronologique de la deuxième position de localisation (82), il existe une différence de temps qui est supérieure à une différence de temps prédéterminée.

8. Dispositif de traitement de données (11 / 50, 51) selon l'une des revendications précédentes, **caractérisé en ce que** le dispositif de traitement de données (11 / 50, 51) est configuré pour à constater la présence de la lacune
- en déterminant un début d'une phase d'interruption de détermination de position si, dans un intervalle de temps de durée prédéterminée après la mise à disposition ou la création d'une première position de localisation (81) avec une qualité minimale prédéterminée, la mise à disposition ou la création d'une position de localisation suivant dans le temps la première position de localisation (81) avec une qualité minimale prédéterminée ou entièrement par le dispositif de détermination de position (12/10, 30) ou le dispositif de traitement de données (11 / 50, 51) n'est pas effectuée, et
- en déterminant une fin de la phase d'interruption de la détermination de position si, après le début de la phase d'interruption de la détermination de position, une deuxième position localisation (82) a été mise à disposition par le dispositif de détermination de position (12/10, 30) avec une qualité minimale prédéfinie ou a été générée par le dispositif de traitement de données (11 / 50, 51).

9. Dispositif de véhicule (10, 30) avec un dispositif de traitement de données (11) selon l'une des revendications précédentes, **caractérisé par**
au moins un dispositif de détermination de position (12) qui est conçu
- de recevoir des signaux de navigation de satellites de navigation d'au moins un système global de satellites de navigation et
- de générer les positions de localisation (p i) à l'aide des signaux de navigation reçus ou de générer les données de position à partir desquelles le dispositif de traitement de données (11) génère les positions de localisation (p i).

10. Système (70) comprenant
- - au moins un dispositif de détermination de position (10, 30),
- - au moins un dispositif de traitement de données (50, 51) et
- - au moins une mémoire de données (56) dans laquelle est enregistré au moins un objet géographique (91a, 92a, 93a, 94, 91b, 92b, 93b, 95) **caractérisé par** au moins une position prédéterminée,
- où
- - le dispositif de détermination de position (10, 30) présente un premier dispositif de communication (13, 23) et est conçu pour recevoir des signaux de navigation de satellites de navigation d'au moins un système global de satellites de navigation, pour générer des données de position ou des positions de localisation (p i) à l'aide des signaux de navigation reçus et pour envoyer les données de position ou les positions de localisation générées (p i) au dispositif de traitement de données au moyen du premier dispositif de communication,
- - le dispositif de traitement de données (50, 51) présente un deuxième dispositif de communication (53) ou est couplé à un tel dispositif et est conçu pour recevoir, au moyen du deuxième dispositif de communication (53), de ce dispositif de détermination de position (10, 30) ou pour générer, à partir de données de position reçues de ce dispositif de détermination de position (10, 30), une série de positions de localisation (p i) qui représentent le cours d'au moins des parties d'un trajet (80) parcouru au moins en apparence par le dispositif de détermination de position (10, 30)
où
le système est conçu
- dans la série de positions de localisation (pᵢ) reçues ou générées une lacune quelle est **caractérisée par** l'absence totale d'au moins une position du localisation ou par l'absence d'au moins position de qualité minimale prédéfinie,
**caractérise en ce que**
le système est conçu
de générer un signal d'erreur
- en fonction
de l'absence ou de l'existence d'une corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré (91a, 92a, 93a, 94, 91b, 92b, 93b, 95)
et
- en fonction
d'une déviation de la distance entre
au moins une première position de distance (81) caractérisant une première partie du trajet parcouru avant la lacune et
au moins une deuxième position de distance (82) caractérisant une deuxième partie du trajet parcouru après la lacune d'au moins une distance de référence (H, D),
où
le système est conçu
a) de générer un signal d'erreur,
i) s'il ne pouvait pas détecter de corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré (91a, 92a, 93a, 94, 91b, 92b, 93b, 95)
et
ii) si la distance (d) entre
au moins une première position de distance (81) caractérisant une première partie du trajet parcouru avant la lacune et
au moins une deuxième position de distance (82) caractérisant une deuxième partie du trajet parcouru après la lacune
est supérieure à une distance maximale inférieure prédéfinie (H).
et/ ou
b) de générer un signal d'erreur,
i) s'il pouvait détecter une corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré en corrélation (91a, 92a, 93a, 94, 91b, 92b, 93b, 95)
ii) et la distance (d) entre
au moins une première position de distance (81) caractérisant une première partie du trajet parcouru avant la lacune et
au moins une deuxième position de distance (82) caractérisant une deuxième partie du trajet parcouru après la lacune
ne correspond pas suffisamment à au moins une distance de corrélation (D) associée à un objet géographique en corrélation (91a, 92a, 93a, 94, 91b, 92b, 93b, 95) d'une manière que
la déviation de la distance (d) de la distance de corrélation (D) dépasse une certaine différence de distance admissible.

11. Procédé de contrôle de l'accomplissement de la fonction conforme d'un dispositif de détermination de position (12 / 10, 30) comprenant l'étape consistant à
- la réception d'une série de positions d'emplacement (pᵢ) d'un dispositif de détermination de position (12 / 10, 30) ou de la génération d'une série de positions d'emplacement (p i) à partir de données de position d'un dispositif de détermination de position (12/10, 30), lesquelles positions d'emplacement représentent le tracé d'au moins des sections d'un trajet (80) parcouru au moins en apparence par le dispositif de détermination de position (12 / 10, 30),
comprenant les étapes consistant à
- la détermination d'une lacune dans la série de positions de localisation (pᵢ), laquelle lacune est **caractérisée par** l'absence totale d'au moins une position de localisation ou par l'absence d'une position de localisation d'une qualité minimale prédéterminée,
- la détermination si
- au moins une première position de corrélation (81) caractérisant une première partie du trajet parcouru (80) avant la lacune
et
- au moins une deuxième position de corrélation (82) caractérisant une deuxième partie du trajet parcouru (80) après la lacune
sont spatialement corrélées avec au moins un objet géographique (91a, 92a, 93a, 94, 91b, 92b, 93b, 95) enregistré dans au moins une mémoire de données (17a, 18b / 56) et **caractérisé par** au moins une position prédéterminée
et **caractérisé par** l'étape de la génération d'un signal d'erreur
- en fonction
de l'absence ou de l'existence d'une corrélation spatiale
d'au moins une première position de corrélation (81) caractérisant une première partie du trajet parcouru avant la lacune et
d'au moins une deuxième position de corrélation (82) caractérisant une deuxième partie du trajet parcouru après la lacune
avec au moins un objet géographique enregistré (91a, 92a, 93a, 94, 91b, 92b, 93b, 95)
et
- en fonction
d'une déviation de la distance entre
au moins une première position de distance (81) caractérisant une première partie du trajet parcouru avant la lacune et
au moins une deuxième position de distance (82) caractérisant une deuxième partie du trajet parcouru après la lacune
d'au moins une distance de référence (H, D)
et en outre
par l'étape
- de la détermination d'une distance (d) entre
au moins une première position de distance (81) caractérisant une première partie du trajet parcouru avant la lacune et
au moins une deuxième position de distance (82) caractérisant une deuxième partie du trajet parcouru après la lacune
où la génération d'un signal d'erreur a lieu,
si
(i) aucune corrélation spatiale de la première position de corrélation (81) et de la deuxième position de corrélation (82) n'a pu être déterminée avec au moins un objet géographique enregistré (91a, 92a, 93a, 94, 91b, 92b, 93b, 95) et
(ii) la distance déterminée est supérieure à une distance maximale inférieure prédéfinie
ou si
(iii) une corrélation spatiale de la première position de corrélation (81) et de la deuxième position de corrélation (82) a pu être déterminée avec au moins un objet géographique enregistré (91a, 92a, 93a, 94, 91b, 92b, 93b, 95) et
(iv) la distance déterminée (d) ne coïncide pas suffisamment avec une distance de corrélation (D) qui est associée à au moins un objet géographique mémorisé corrélé (91a, 92a, 93a, 94, 91b, 92b, 93b, 95) qui est en corrélation spatiale avec la première et/ou la deuxième position de corrélation (81, 82), dans la mesure où la lacune de la distance (d) par rapport à la distance de corrélation (D) dépasse une différence de distance admissible déterminée.
